# EUROPEAN PATENT APPLICATION

(11) **EP 4 664 253 A1**
(43) Date of publication of application: **17.12.2025**
(21) Application number: 24855229.1
(22) Date of filing: 28.02.2024
(51) Int. Cl.: G06F 3/048

(54) **CARD DISPLAY METHOD AND ELECTRONIC DEVICE**

(30) Priority: 24.08.2023 CN 202311087384
(71) Applicant: Honor Device Co., Ltd., Shenzhen, Guangdong 518040 (CN)
(72) Inventor: LI, Shijun, Shenzhen, Guangdong 518040 (CN); ZHOU, Yingcheng, Shenzhen, Guangdong 518040 (CN)
(74) Representative: Isarpatent
(86) International application number: PCT/CN2024/078956
(87) International publication number: WO 2025/039498

(57) **Abstract**

Embodiments of this application disclose a card display method and an electronic device, and relate to the field of electronic devices, to optimize a process in which the electronic device displays notification information of an application. A specific solution is: determining, by the electronic device in response to a service of a first application in the electronic device being changed, a first view of a first card of the first application; creating, by the electronic device according to the first view, a first embedded window layer corresponding to a second application; and displaying, by the electronic device, a first interface in response to a first operation of switching to the second application, where the first interface includes an embedded window of the second application, and the first embedded window layer is displayed in the embedded window of the second application, to display the first card including the first view in the first interface.

## Description

This application claims priority to Chinese Patent Application No. 202311087384.0, filed with the China National Intellectual Property Administration on August 24, 2023 and entitled "CARD DISPLAY METHOD AND ELECTRONIC DEVICE", which is incorporated herein by reference in its entirety.

### TECHNICAL FIELD

This application relates to the field of electronic devices, and in particular, to a card display method and an electronic device.

### BACKGROUND

Currently, an electronic device (such as a mobile phone) usually displays notification information of an application to a user in a form of a card. The notification information may be notification information of an application having a notification permission, for example, an SMS message, travel information, ride-hailing information, or takeaway delivery information.

### SUMMARY

Embodiments of this application provide a card display method and an electronic device, to optimize a process in which the electronic device displays notification information of an application.

To achieve the foregoing objectives, the following technical solutions are used in the embodiments of this application.

According to a first aspect, an embodiment of this application provides a card display method, applied to an electronic device. The card display method may include: determining, by the electronic device in response to a service of a first application in the electronic device being changed, a first view of a first card of the first application; creating, by the electronic device according to the first view, a first embedded window layer corresponding to a second application; and displaying, by the electronic device, a first interface in response to a first operation of switching to the second application, where the first interface includes an embedded window of the second application, and the first embedded window layer is displayed in the embedded window of the second application, to display the first card including the first view in the first interface.

Based on the method in the first aspect, when the service of the first application in the electronic device is changed, in response to the service of the first application being changed, the electronic device may determine the first view of the first card of the first application, and create, according to the first view, the first embedded window layer corresponding to the second application. In this way, the electronic device may embed the first embedded window layer into the embedded window of the second application. Then, after the electronic device receives the first operation of switching to the second application, in response to the first operation, the electronic device may display the first interface corresponding to the second application. Because the first interface of the second application that is displayed on the electronic device includes the embedded window of the second application, when displaying the first interface corresponding to the second application, the electronic device may display the first embedded window layer embedded into the embedded window of the second application, and may further display the first card including the first view in the first interface. In other words, when the second application of the electronic device displays the first card, the first card may be displayed in a manner of displaying the embedded window of the second application, and the first card is not directly displayed. In this way, the electronic device may determine the first view of the first card according to a service type of the first application, and further display the first card including the first view on the first interface, so that a service state of the first application can be more effectively and intuitively displayed, thereby achieving better user experience.

With reference to the first aspect, in another possible implementation, the card display method may further include: determining, by the electronic device in response to the service of the first application in the electronic device being changed, a second view of the first card of the first application, where the second view is different from the first view; and creating, by the electronic device according to the second view, a second embedded window layer corresponding to a third application; and after the displaying, by the electronic device, a first interface in response to a first operation of switching to the second application, the card display method may further include: displaying a second interface in response to a second operation of switching to the third application, where the second interface includes an embedded window of the third application, and the second embedded window layer is displayed in the embedded window of the third application, to display the first card including the second view in the second interface.

Based on this possible implementation, when the service of the first application in the electronic device is changed, in response to the service of the first application being changed, the electronic device may determine the second view of the first card of the first application, and create, according to the second view, the second embedded window layer corresponding to the third application. In this way, the electronic device may embed the second embedded window layer into the embedded window of the third application. In other words, when the service of the first application changes, the electronic device may determine, for characteristics of different applications, card views that can be displayed in the applications. Further, when the electronic device receives the second operation of switching to the third application, in response to the second operation, a display interface of the electronic device may be switched from the first interface corresponding to the second application to the second interface corresponding to the third application. In addition, because the second interface, on which the electronic device displays the third application includes the embedded window of the third application. Therefore, when the display interface of the electronic device is switched from the first interface corresponding to the second application to the second interface corresponding to the third application, the first card in the display interface of the electronic device is switched from the first card including the first view to the first card including the second view. In other words, the electronic device may display, for the characteristics of the different applications, first cards matching the applications, thereby ensuring that the first cards displayed in the different applications of the electronic device all have a good display effect.

With reference to the first aspect, in another possible implementation, the first view includes a progress bar, and the progress bar is used to indicate a progress status of the service of the first application; the progress bar includes a first icon, a second icon, and a third icon, where the first icon is used to indicate an execution starting point of the service of the first application, and the second icon is used to indicate an execution end point of the service of the first application; and the third icon is used to indicate that the progress status of the service of the first application changes, and when the progress status of the service of the first application changes, a location of the third icon between the first icon and the second icon correspondingly changes.

Based on this possible implementation, the first view may include the progress bar used to indicate the progress status of the service of the first application. In this way, when the electronic device displays the first card including the first view on the first interface, the progress status of the service of the first application may be more intuitively displayed through the progress bar in the first view, and user experience is better.

With reference to the first aspect, in another possible implementation, a service stage of the first application includes a first service stage and a second service stage; the first view includes a segmentation progress bar, where the segmentation progress bar is used to indicate progress statuses of the service of the first application at different service stages; and the segmentation progress bar includes a fourth icon, a fifth icon, and a sixth icon and a seventh icon that are located between the fourth icon and the fifth icon, where the fourth icon is used to indicate an execution starting point of the first service stage of the first application; the fifth icon is used to indicate an execution end point of the second service stage of the first application; the sixth icon is used to indicate an execution end point of the first service stage of the first application and an execution starting point of the second service stage of the first application; the seventh icon is used to indicate that a service progress of the second application changes, and when the service progress of the second application changes at the first service stage, a location of the seventh icon that is between the fourth icon and the sixth icon correspondingly changes; or when the service progress of the second application changes at the second service stage, a location of the seventh icon that is between the sixth icon and the fifth icon correspondingly changes.

Based on this possible implementation, the first view may include a segmentation progress bar used to indicate progress statuses of the service of the first application at different service stages. In this way, when the electronic device displays the first card including the first view on the first interface, the current service stage of the service of the first application and a progress status corresponding to the service stage may be more intuitively displayed through the segmentation progress bar in the first view, so that user experience is better.

With reference to the first aspect, in another possible implementation, the determining, by the electronic device, a first view of a first card of the first application may include: obtaining, by the electronic device, identification information of the second application; determining, by the electronic device, identification information of the first view according to the identification information of the second application; and determining, by the electronic device, the first view according to the identification information of the first view.

Based on this possible implementation, the electronic device may pre-create a card view of the first card corresponding to each application. In this way, when the electronic device determines the first view, the electronic device may determine the identification information of the first view according to the identification information of the second application, and determine the first view according to the identification information of the first view, so that the card view can be quickly obtained, thereby improving processing efficiency of the electronic device.

With reference to the first aspect, in another possible implementation, before the determining, by the electronic device, a first view of a first card of the first application, the card display method may further include: generating, by the electronic device, a place-holding view according to card size information of the second application; creating, by the electronic device according to the place-holding view, a place-holding embedded window layer corresponding to the place-holding view; and mounting, by the electronic device, the place-holding embedded window layer to the embedded window of the second application.

Based on this possible implementation, before the electronic device determines the first view of the first card of the first application, the electronic device may generate the place-holding view according to the card size information of the second application, and create, according to the place-holding view, the place-holding embedded window layer corresponding to the place-holding view, to mount the place-holding embedded window layer in the embedded window of the second application. In this way, a case in which the electronic device displays a card of another application other than the first application in a process in which the electronic device determines the card view of the first card of the first application can be avoided.

With reference to the first aspect, in another possible implementation, the creating, by the electronic device according to the place-holding view, a place-holding embedded window layer corresponding to the place-holding view may include: when a third embedded window layer is stored in the electronic device, obtaining status information of the third embedded window layer, where the third embedded window layer is an embedded window layer created according to a card view of a second card of the first application, and a progress status of the service of the first application that is indicated by the second card is different from a progress status of the service of the first application that is indicated by the first card; and updating the card view of the second card in the third embedded window layer to the place-holding view when the status information indicates that the third embedded window layer is valid, to obtain the place-holding embedded window layer.

Based on this possible implementation, when the third embedded window layer is stored in a cache of the electronic device, the electronic device may update the card view of the second card in the third embedded window layer to the place-holding view, to obtain the place-holding embedded window layer. In this way, the place-holding embedded window layer does not need to be recreated, so that the processing efficiency of the electronic device can be improved.

With reference to the first aspect, in another possible implementation, the creating, by the electronic device according to the first view, a first embedded window layer corresponding to a second application may include: updating the place-holding view in the place-holding embedded window layer to the first view, to obtain the first embedded window layer corresponding to the second application.

Based on this possible implementation, the electronic device may update the place-holding view in the place-holding embedded window layer to the first view, to obtain the first embedded window layer corresponding to the second application. In this way, the first embedded window layer does not need to be recreated, so that the processing efficiency of the electronic device can be improved.

With reference to the first aspect, in another possible implementation, display content corresponding to the second view is different from display content corresponding to the first view, and/or a display size corresponding to the second view is different from a display size corresponding to the first view.

Based on this possible implementation, when the service of the first application changes, the electronic device may generate, for the characteristics of the different applications, the card views corresponding to the applications, where display content and/or display sizes of the card views corresponding to the different applications are different. In this way, the electronic device may generate, for the characteristics of the different applications, first cards matching the applications, so that when the electronic device is switched to any application, an interface corresponding to the application may be displayed, and the first card including a card view corresponding to the application is displayed on the interface corresponding to the application. In this way, it can be ensured that first cards displayed in the different applications of the electronic device all have a good display effect.

With reference to the first aspect, in another possible implementation, the second application is a desktop, a notification center, a locked screen, an off screen, a leftmost screen, or a banner notification; and the third application is the desktop, the notification center, the locked screen, the off screen, the leftmost screen, or the banner notification.

Based on this possible implementation, when an application running in the foreground of the electronic device switches among the desktop, the notification center, the locked screen, the off screen, the leftmost screen, or the banner notification, the first card including different card views may be displayed, so that it can be ensured that the first card displayed on the desktop, the notification center, the locked screen, the off screen, the leftmost screen, or the banner notification has a good display effect.

With reference to the first aspect, in another possible implementation, a display size corresponding to the second view is different from a display size corresponding to the first view, and the display size includes a display height and a display width, where the second application is the desktop, the third application is the notification center, and the display height corresponding to the second view is less than the display height corresponding to the first view.

Based on this possible implementation, when an application running in the foreground of the electronic device is switched from the desktop to the notification center, the first card including the second view may be displayed in the notification center, and the display height corresponding to the second view is less than the display height corresponding to the first view. In this way, a space occupied by the first card can be reduced, so that the notification center of the electronic device can display more notification information cards. A user can view all the notification information cards without a viewing operation, so that man-machine interaction efficiency can be improved.

With reference to the first aspect, in another possible implementation, a display size corresponding to the second view is different from a display size corresponding to the first view, and the display size includes a display height and a display width, where the second application is the desktop, the third application is the locked screen, the display width corresponding to the second view is less than the display width corresponding to the first view, and the display height corresponding to the second view is less than the display height corresponding to the first view.

Based on this possible implementation, when an application running in the foreground of the electronic device is switched from the desktop to the locked screen, the first card including the second view may be displayed in the notification center, the display width corresponding to the second view is less than the display width corresponding to the first view, and the display height corresponding to the second view is less than the display height corresponding to the first view. In this way, a space occupied by the first card can be reduced, so that the locked screen of the electronic device can display more notification information cards. A user can view all the notification information cards without a viewing operation, so that man-machine interaction efficiency can be improved.

With reference to the first aspect, in another possible implementation, a display size corresponding to the second view is different from a display size corresponding to the first view, and the display size includes a display height and a display width, where the second application is the locked screen, the third application is the off screen, the display width corresponding to the second view is less than the display width corresponding to the first view, and the display height corresponding to the second view is less than the display height corresponding to the first view.

Based on this possible implementation, because a display space of an off screen interface of the electronic device is limited, when an application running in the foreground of the electronic device is switched from the locked screen to the off screen, the first card including the second view may be displayed on the off screen interface, the display width corresponding to the second view is less than the display width corresponding to the first view, and the display height corresponding to the second view is less than the display height corresponding to the first view. In this way, the display size of the first card may be reduced, to maximally reduce the space occupied by the first card, and avoid a case in which a card corresponding to the second application cannot be fully displayed. In addition, because the off screen interface of the electronic device is in an always-on state, the first card having a relatively small size is displayed on the off screen interface, so that power consumption of the electronic device can be reduced.

According to a second aspect, an embodiment of this application provides a card display apparatus, where the card display apparatus is applicable to an electronic device, to implement the method in the first aspect. A function of the card display apparatus may be implemented by hardware, or may be implemented by executing corresponding software by hardware. The hardware or software includes one or more modules corresponding to the functions, for example, a determining module, a creation module, and a display module.

The determining module may be configured to determine, in response to a service of a first application in the electronic device being changed, a first view of a first card of the first application.

The creation module may be configured to create, according to the first view, a first embedded window layer corresponding to a second application.

The display module may be configured to display a first interface in response to a first operation of switching to the second application, where the first interface includes an embedded window of the second application, and the first embedded window layer is displayed in the embedded window of the second application, to display the first card including the first view in the first interface.

According to a third aspect, an electronic device is provided, and the electronic device has a function of implementing the method according to the first aspect. The function may be implemented by using hardware, or may be implemented by hardware executing corresponding software. The hardware or software includes one or more modules corresponding to the foregoing function.

According to a fourth aspect, an electronic device is provided, including: a processor and a memory, where the memory is configured to store computer-executable instructions; and when the electronic device is run, the processor executes the computer-executable instructions stored in the memory, to enable the electronic device to perform the card display method according to any one of the first aspect.

According to a fifth aspect, an electronic device is provided, including a processor, where the processor is configured to perform, after being coupled to a memory and reading instructions in the memory, the card display method according to any one of the first aspect based on the instructions.

According to a sixth aspect, an embodiment of this application provides a computer-readable storage medium, storing computer program instructions. When the computer program instructions are executed by an electronic device, the electronic device is enabled to implement the card display method according to any one of the first aspect or the possible implementations of the first aspect.

According to a seventh aspect, an embodiment of this application provides a computer program product, including computer-readable code. When the computer-readable code is run in an electronic device, the electronic device is enabled to implement the card display method according to any one of the first aspect or the possible implementations of the first aspect.

According to an eighth aspect, an apparatus (for example, the apparatus may be a chip system) is provided. The apparatus includes a processor, configured to support an electronic device in implementing the functions in the first aspect. In a possible design, the apparatus further includes a memory. The memory is configured to store program instructions and data necessary to the electronic device. When the apparatus is the chip system, the apparatus may include a chip, or may include a chip and another discrete component.

It should be understood that, for beneficial effects of the second aspect to the eighth aspect, refer to the related descriptions in the first aspect, and details are not described herein again.

### BRIEF DESCRIPTION OF DRAWINGS

FIG. 1 is a schematic diagram of a software structure of an electronic device in the related art;
FIG. 2 is a schematic diagram of a scenario in which an electronic device displays a card in the related art;
FIG. 3 is a schematic diagram of a hardware structure of an electronic device according to an embodiment of this application;
FIG. 4 is a schematic diagram 1 of a software structure of an electronic device according to an embodiment of this application;
FIG. 5 is a schematic diagram 2 of a software structure of an electronic device according to an embodiment of this application;
FIG. 6 is a schematic diagram 3 of a software structure of an electronic device according to an embodiment of this application;
FIG. 7 is a schematic diagram 1 of a progress bar according to an embodiment of this application;
FIG. 8 is a schematic diagram 1 of a scenario of a card display method according to an embodiment of this application;
FIG. 9A to FIG. 9F are schematic diagrams 2 of a scenario of a card display method according to an embodiment of this application;
FIG. 10 is a schematic diagram 2 of a progress bar according to an embodiment of this application;
FIG. 11A to FIG. 11E are schematic diagrams 3 of a scenario of a card display method according to an embodiment of this application;
FIG. 12A to FIG. 12F are schematic diagrams 4 of a scenario of a card display method according to an embodiment of this application;
FIG. 13 is a schematic diagram 3 of a progress bar according to an embodiment of this application;
FIG. 14A to FIG. 14E are schematic diagrams 5 of a scenario of a card display method according to an embodiment of this application;
FIG. 15A to FIG. 15D are schematic diagrams 6 of a scenario of a card display method according to an embodiment of this application;
FIG. 16A to FIG. 16C are schematic flowcharts 1 of a card display method according to an embodiment of this application; and
FIG. 17 is a schematic flowchart 2 of a card display method according to an embodiment of this application.

### DESCRIPTION OF EMBODIMENTS

The technical solutions in embodiments of this application are clearly and completely described below with reference to the accompanying drawings in the embodiments of this application. Apparently, the described embodiments are merely some rather than all of the embodiments of this application. All other embodiments obtained by a person of ordinary skill in the art based on the embodiments of this application without creative efforts shall fall within the protection scope of this application.

The terms "first" and "second" are merely intended for a purpose of description, and shall not be understood as indicating or implying relative significance or implicitly indicating a quantity of indicated technical features. Therefore, a feature limited by "first" or "second" may explicitly or implicitly include one or more features. In the descriptions of this application, unless otherwise stated, "a plurality of" means two or more than two.

Currently, to more intuitively display notification information corresponding to an application to a user, an electronic device (such as a mobile phone) may display notification information corresponding to the application (application, APP) to the user in a form of a card (or referred to as a widget, a widget, a part, a component, or the like) on a display interface.

An application that displays the notification information to the user in the form of the card may be an application that needs to issue the notification information in the electronic device. The application may be an application built in the electronic device, or may be a third-party application.

When the electronic device displays a card corresponding to the application, the electronic device may create, according to a predefined native card element, the card corresponding to the notification information of the application, and display the card corresponding to the notification information of the application. The native card element is usually an interface element predefined according to a native android card framework. In other words, for any application, when the electronic device displays the card corresponding to the application, the card corresponding to the application may include only the native card element, and cannot bear a custom card element of the application.

However, native card elements supported by the native android card framework are limited. For example, the native card elements supported by the native android card framework include a text element and a picture element. Therefore, when the electronic device creates, according to the native card element, a card corresponding to notification information of an application, the electronic device may create, according to the notification information of the application, a card including different text elements and picture elements, and further present the notification information of the application to the user through the text elements and the picture elements that are displayed on the card. However, the electronic device cannot create, according to the notification information of the application, the card including the custom card element. That is, the application of the electronic device cannot create a card as required. Consequently, it is difficult to effectively and intuitively display the notification information of the application to the user.

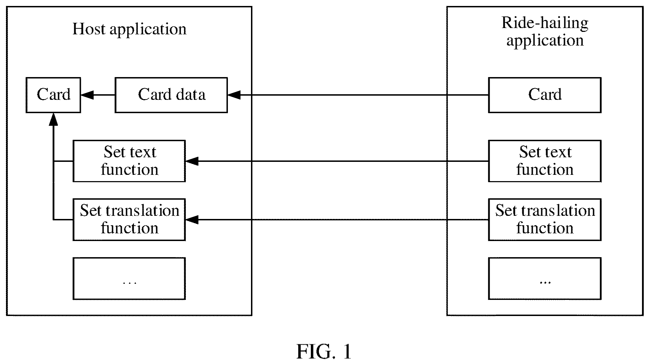

A process in which the electronic device displays, according to the native card element, the card corresponding to the notification information of the application is described below with reference to FIG. 1.

Descriptions are provided by using an example in which the electronic device is a mobile phone, and the notification information is notification information of a ride-hailing application. As shown in FIG. 1, when the electronic device displays a card corresponding to the notification information of the ride-hailing application, the ride-hailing application running in the electronic device creates, according to the native card element, a card (view) corresponding to the notification information of the ride-hailing application, and performs, according to a preset rule, serialization processing on the card corresponding to the notification information of the ride-hailing application, to obtain card data (view data) of the card (view) corresponding to the notification information of the ride-hailing application.

The ride-hailing application running in the electronic device may send the card data (view data) of the card (view) corresponding to the notification information of the ride-hailing application to a host application of the electronic device. The host application may be an application that can display a card and that is on the electronic device, such as a desktop, a notification center, a banner notification, a locked screen, an off screen, or a leftmost screen of the electronic device.

After receiving the card data (view data) of the card (view) corresponding to the notification information of the ride-hailing application, the host application of the electronic device creates and displays, according to the card data (view data), the card (view) corresponding to the notification information of the ride-hailing application. The card (view) corresponding to the notification information of the ride-hailing application may include only the native card element (such as the text element and the picture element) supported by the native android card framework.

In addition, as shown in FIG. 1, the ride-hailing application of the electronic device may invoke a predefined function, such as a set text (set text) function and a set translation (set translation) function. Correspondingly, the host application of the electronic device may also invoke a predefined function, such as a set text (set text) function and a set translation (set translation) function. The electronic device may pre-establish a correspondence between the set text (set text) function that can be invoked by the ride-hailing application and the set text (set text) function that can be invoked by the host application, and pre-establish a correspondence between the set translation (set translation) function that can be invoked by the ride-hailing application and the set translation (set translation) function that can be invoked by the host application.

In this way, the ride-hailing application of the electronic device may invoke the set text (set text) function of the ride-hailing application to update the text element in the card (view). When the ride-hailing application of the electronic device invokes the set text (set text) function of the ride-hailing application to update the text element in the card (view), the set text (set text) function that can be invoked by the host application and that corresponds to the set text (set text) function of the ride-hailing application may be first determined based on the pre-established correspondence. In this way, the host application of the electronic device may invoke the set text (set text) function corresponding to the host application, to update the text element in the card (view).

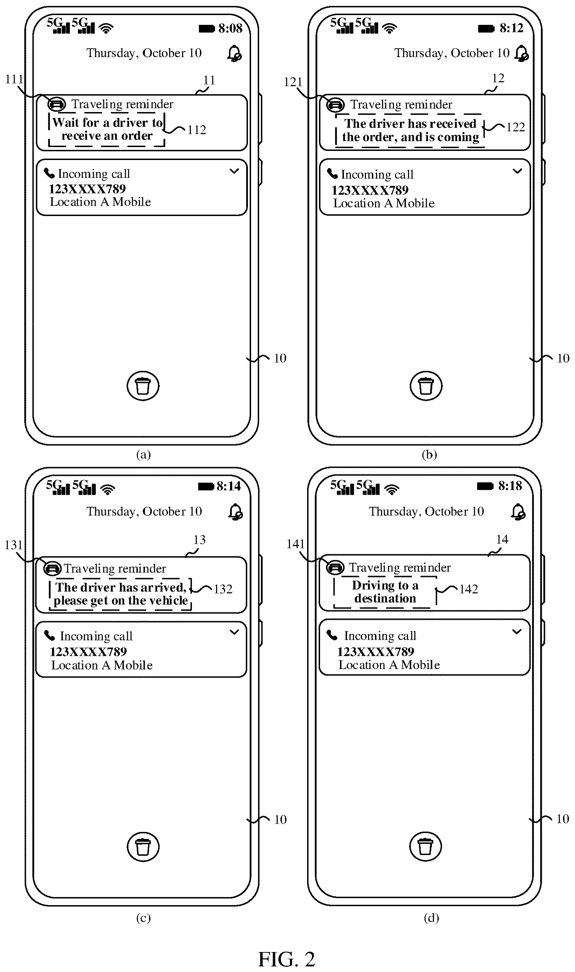

An example in which the card corresponding to the notification information of the ride-hailing application includes the text element and the picture element, and the host application is a notification center of the electronic device is used below, and updating of the text element included in the card corresponding to the notification information of the ride-hailing application that is displayed on the electronic device is described with reference to FIG. 2.

After the ride-hailing application of the electronic device generates a ride-hailing order, the ride-hailing application of the electronic device issues a ride-hailing task and waits for a driver to receive an order. When the electronic device returns from an opened application to the desktop, as shown in (a) in FIG. 2, the electronic device may display a card 11 corresponding to the ride-hailing application in the notification center 10. The card 11 may be used to prompt a user that the ride-hailing order of the ride-hailing application is generated, and a driver is waited for to receive the order. With reference to (a) in FIG. 2, the card 11 may include an icon 111 of the ride-hailing application and text 112 of "waiting for a driver to receive an order".

Then, when the ride-hailing application of the electronic device monitors that the driver has received the order and drives to an origin of the user according to the ride-hailing order, as shown in (b) in FIG. 2, the electronic device may display a card 12 corresponding to the ride-hailing application in the notification center 10, and the card 12 may be used to prompt the user that the driver has received the order and is driving to the origin. With reference to (b) in FIG. 2, the card 12 may include an icon 121 of the ride-hailing application and text 122 that "the driver has received the order, and is coming".

Then, when the ride-hailing application of the electronic device monitors that the driver arrives at the origin, as shown in (c) in FIG. 2, the electronic device may display a card 13 corresponding to the ride-hailing application in the notification center 10, and the card 13 may be used to prompt the user that the driver has arrived at the origin and waits for the user to get on the vehicle. With reference to (c) in FIG. 2, the card 13 may include an icon 131 of the ride-hailing application and text 132 that "the driver has arrived, please get on the vehicle".

Then, after the driver picks up the user, when the driver drives to a destination according to the ride-hailing order, as shown in (d) in FIG. 2, the electronic device may display a card 14 corresponding to the ride-hailing application in the notification center 10, and the card 14 may be used to prompt the user that the driver is to drive to the destination now. With reference to (d) in FIG. 2, the card 14 may include an icon 141 of the ride-hailing application and text 142 of "driving to the destination".

In other words, when the text element included in the card corresponding to the ride-hailing application is updated, the text element included in the card corresponding to the ride-hailing application that is displayed in the notification center of the electronic device is updated.

Certainly, the ride-hailing application of the electronic device may also invoke the set translation (set translation) function of the ride-hailing application to update a display location of the card (view). When the ride-hailing application of the electronic device invokes the set translation (set translation) function of the ride-hailing application to update the display location of the card (view), based on the pre-established correspondence, the set translation (set translation) function that can be invoked by the host application and that corresponds to the set translation (set translation) function of the ride-hailing application may be first determined. Therefore, the host application of the electronic device may invoke the set translation (set translation) function corresponding to the host application, to update the display location in the card (view).

However, when the electronic device displays the card corresponding to the notification information of the ride-hailing application, the electronic device can only display, according to the native card element supported by the native android card framework, the card corresponding to the notification information of the ride-hailing application. A form of the card displayed in this manner is relatively simple, and it is difficult to intuitively and effectively display the notification information of the ride-hailing application to the user.

In conclusion, in the related art, the electronic device can display, according to the native card element supported by the native android card framework, only the card corresponding to the application, but cannot display, according to the notification information of the application, the card including the custom card element. The displayed card has a relatively single style, and it is difficult to intuitively and effectively display the notification information of the application to the user, resulting in relatively poor user experience.

In view of the foregoing problem, an embodiment of this application provides a card display method, applied to the electronic device. When the electronic device displays the notification information of the application in the form of the card, the application running in the electronic device may create a card view, generate, according to the card view, an embedded window layer corresponding to the card, and send the embedded window layer corresponding to the card to the host application of the electronic device, so that the host application of the electronic device displays the embedded window layer corresponding to the card. In other words, when the host application of the electronic device displays the notification information of the application in the form of the card, the host application of the electronic device displays the embedded window layer mounted by the host application of the electronic device rather than directly displays the card view. Therefore, the application of the electronic device may create, as required, a card view including the custom card element, and generate, according to the card view, an embedded window layer including the custom card element, so that when the host application of the electronic device displays the notification information of the application, the host application of the electronic device may display card views including different custom card elements, to more effectively and intuitively display the notification information of the application to the user.

In addition, when the electronic device displays the card corresponding to the application, the card corresponding to the application is displayed based on the embedded window layer, so that a cross-process data transmission speed can be improved, and the card corresponding to the application can be refreshed in real time, to ensure timeliness of the notification information of the application, and achieve better user experience.

The card display method provided in the embodiments of this application is described below.

The card display method provided in the embodiments of this application may be applied to an electronic device. In some embodiments, the electronic device may be an electronic device having an application, such as a mobile phone, a tablet computer, a handheld computer, a personal computer (personal computer, PC), a cellular phone, a personal digital assistant (personal digital assistant, PDA), or a wearable device. A specific form of the electronic device is not limited in this embodiment of this application.

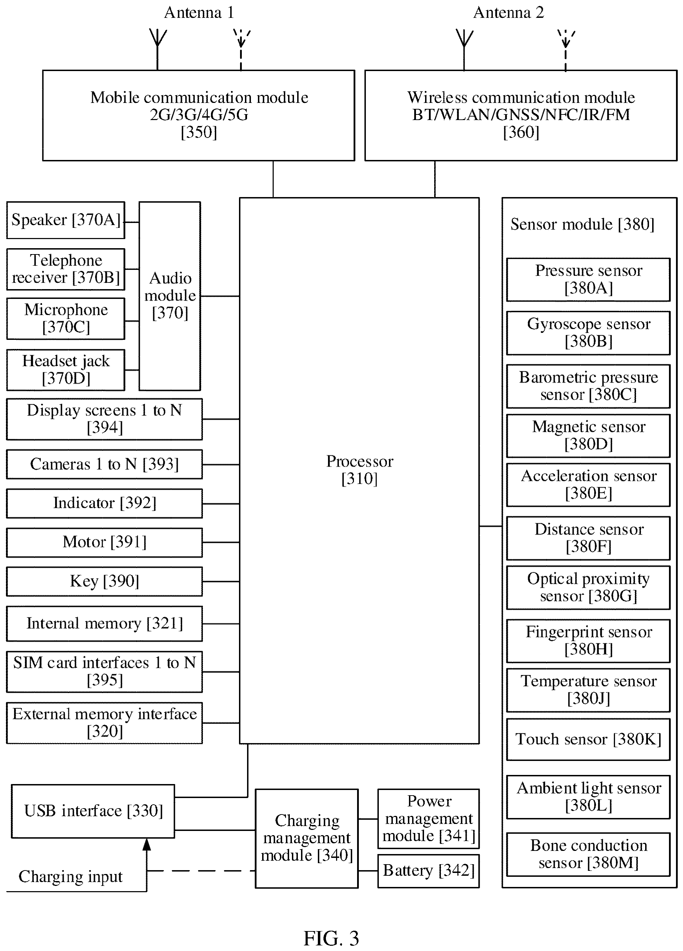

An example in which the electronic device is the mobile phone is used. FIG. 3 is a schematic diagram of a structure of an electronic device according to an embodiment of this application.

As shown in FIG. 3, the electronic device may include a processor 310, an external memory interface 320, an internal memory 321, a universal serial bus (universal serial bus, USB) interface 330, a charging management module 340, a power management module 341, a battery 342, an antenna 1, an antenna 2, a mobile communication module 350, a wireless communication module 360, an audio module 370, a speaker 370A, a telephone receiver 370B, a microphone 370C, a headset jack 370D, a sensor module 380, a key 390, a motor 391, an indicator 392, a camera 393, a display screen 394, a subscriber identity module (subscriber identity module, SIM) card interface 395, and the like. The sensor module 380 may include a pressure sensor 380A, a gyroscope sensor 380B, a barometric pressure sensor 380C, a magnetic sensor 380D, an acceleration sensor 380E, a distance sensor 380F, an optical proximity sensor 380G, a fingerprint sensor 380H, a temperature sensor 380J, a touch sensor 380K, an ambient light sensor 380L, a bone conduction sensor 380M, and the like.

It may be understood that, the schematic structure in this embodiment constitutes no specific limitation on the electronic device. In some other embodiments, the electronic device may include more or fewer components than those shown in the figure, or some components may be combined, or some components may be split, or components are arranged in different manners. The components shown in the figure may be implemented by hardware, software, or a combination of software and hardware.

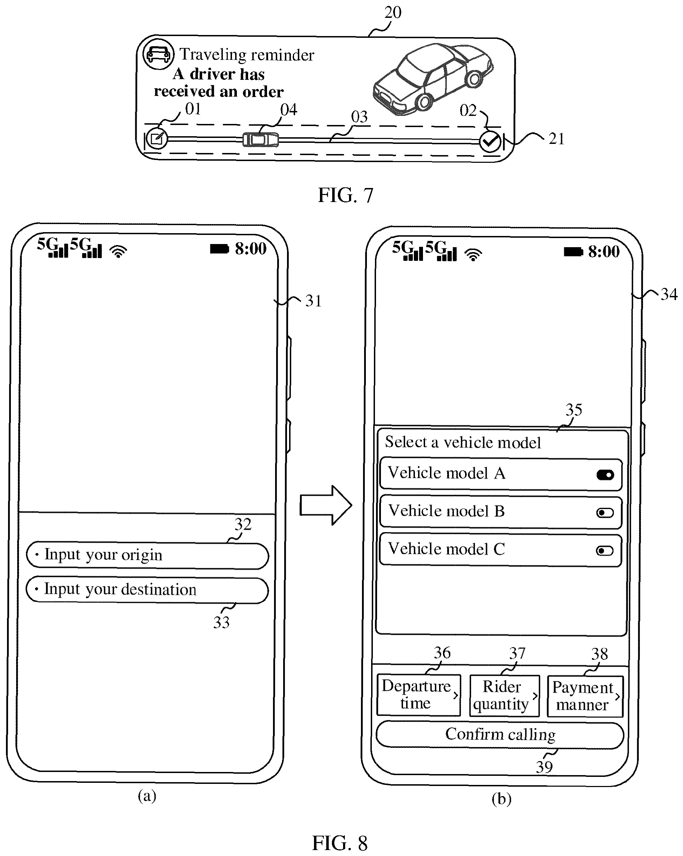

In the embodiments of this application, the display screen 394 may be configured to display a display interface of the electronic device in FIG. 8, FIG. 9A to FIG. 9F, FIG. 11A to FIG. 11E, FIG. 12A to FIG. 12F, FIG. 14A to FIG. 14E, and FIG. 15A to FIG. 15D.

Certainly, it may be understood that FIG. 3 only shows an exemplary description when the electronic device is in a form of a mobile phone. When the electronic device is in a form of another device such as a tablet computer, a handheld computer, a PC, a PDA, or a wearable device (for example, a smart watch or a smart bracelet), a structure of the electronic device may include fewer structures than those shown in FIG. 3, or more structures than those shown in FIG. 3, and is not limited herein.

It may be understood that, generally, implementations of functions of the electronic device require cooperation of software in addition to support of hardware.

A software system of the electronic device may use a layered architecture, an event-driven architecture, a micro kernel architecture, a micro service architecture, or a cloud architecture. In this embodiment of this application, the software structure of the electronic device is described by using an android system with a layered architecture as an example.

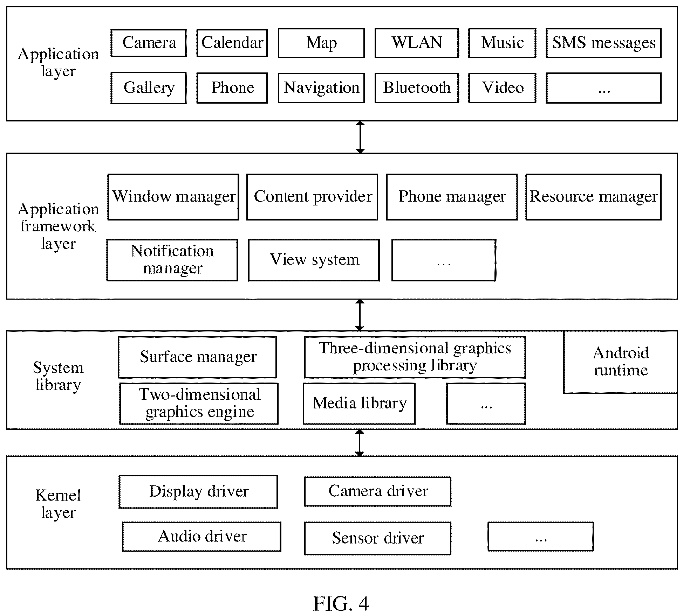

FIG. 4 is a block diagram of a software structure of an electronic device according to an embodiment of this application.

In a layered architecture, software is divided into several layers, and each layer has a clear role and task. Layers communicate with each other through a software interface. In some embodiments, the android system is divided into four layers that are respectively an application layer, an application framework (framework, FWK) layer, an android runtime (android runtime) and system library (which may also be referred to as a native layer), and a kernel layer from top to bottom.

In some examples, to implement the card display method provided in the embodiments of this application, the application layer may further include a host application (such as a desktop, a leftmost screen, a notification center, a banner notification, an off screen, or a locked screen of the electronic device) and an application providing a card. The application providing the card is an application in the electronic device that can provide the card, and may be a third-party application, for example, a travel application (such as a ride-hailing application and a map application) or a delivery application (such as a takeaway application and an express application) in the electronic device. The application providing the card may also be an application of a system of the electronic device.

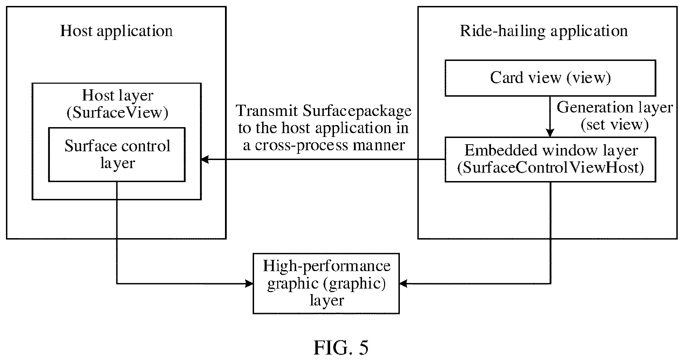

The card display method provided in the embodiments of this application is described below with reference to FIG. 5. It should be noted that, a specific application mentioned in the embodiments of this application is used only for ease of description of the technical solutions, and does not represent a limitation to the scope of the solutions of this application.

For example, an example in which the application providing the card is a ride-hailing application is used. As shown in FIG. 5, the card display method provided in the embodiments of this application includes the following process. When the electronic device displays a card corresponding to notification information of the ride-hailing application, the ride-hailing application of the electronic device may generate, according to a card view (namely, a view) corresponding to the notification information of the ride-hailing application, an embedded window (namely, SurfaceControlViewHost) layer corresponding to the card view. The embedded window layer includes the SurfaceControl layer.

Then, the ride-hailing application of the electronic device may encapsulate the embedded window layer corresponding to the card view, to obtain a data package (namely, SurfacePackage) of the embedded window layer corresponding to the card view, and transmit, in a cross-process manner, the data package of the embedded window layer corresponding to the card view to a host application of the electronic device.

After the host application of the electronic device receives the data package of the embedded window layer corresponding to the card view, the host application of the electronic device may obtain, according to the data package of the embedded window layer corresponding to the card view, the embedded window layer corresponding to the card view. The host application of the electronic device may mount (or embed) the embedded window layer corresponding to the card view on a host layer (namely, Surface View) of the host application of the electronic device. That is, the host application of the electronic device may embed the SurfaceControl layer on the host layer of the host application of the electronic device. In other words, the SurfaceControl layer actually embedded into the host layer of the host application of the electronic device and the SurfaceControl layer included in the embedded window layer generated by the ride-hailing application of the electronic device are a same layer. In other words, both the host layer of the host application of the electronic device and the embedded window layer of the ride-hailing application of the electronic device point to a high-performance graphic (graphic) layer (namely, the SurfaceControl layer). Therefore, the host application of the electronic device and the ride-hailing application of the electronic device display a same object. That is, the host application of the electronic device may display a card corresponding to the notification information of the ride-hailing application.

In addition, as shown in FIG. 5, when the electronic device displays the card corresponding to the notification information of the ride-hailing application, the host application of the electronic device displays the SurfaceControl layer (namely, the embedded window layer generated by the ride-hailing application) embedded into the host layer of the host application of the electronic device. Therefore, when the ride-hailing application of the electronic device generates the embedded window layer, the ride-hailing application of the electronic device may generate a card view including a custom card element, and generate, according to the card view, an embedded window layer corresponding to the card view including the custom card element. In this way, the host application of the electronic device can display the embedded window layer corresponding to the card view including the custom card element. That is, the host application of the electronic device can display a ride-hailing application card including the custom card element.

In addition, because the card view corresponding to the notification information of the ride-hailing application running in the electronic device is created in a process of the ride-hailing application, when the notification information of the ride-hailing application running in the electronic device changes (that is, a service of the ride-hailing application changes), the ride-hailing application may invoke a related function to adjust a card view corresponding to the notification information of the ride-hailing application, and a SurfaceControl layer corresponding to the card view may be synchronously updated according to the adjusted card view. That is, the embedded window layer corresponding to the card view may be synchronously updated according to the adjusted card view. In addition, because the SurfaceControl layer actually embedded into the host layer of the host application of the electronic device and the SurfaceControl layer included in the embedded window layer generated by the ride-hailing application of the electronic device are a same layer, the SurfaceControl layer displayed on the host application of the electronic device is also updated accordingly. That is, the card corresponding to the ride-hailing application displayed on the host application of the electronic device is also updated accordingly.

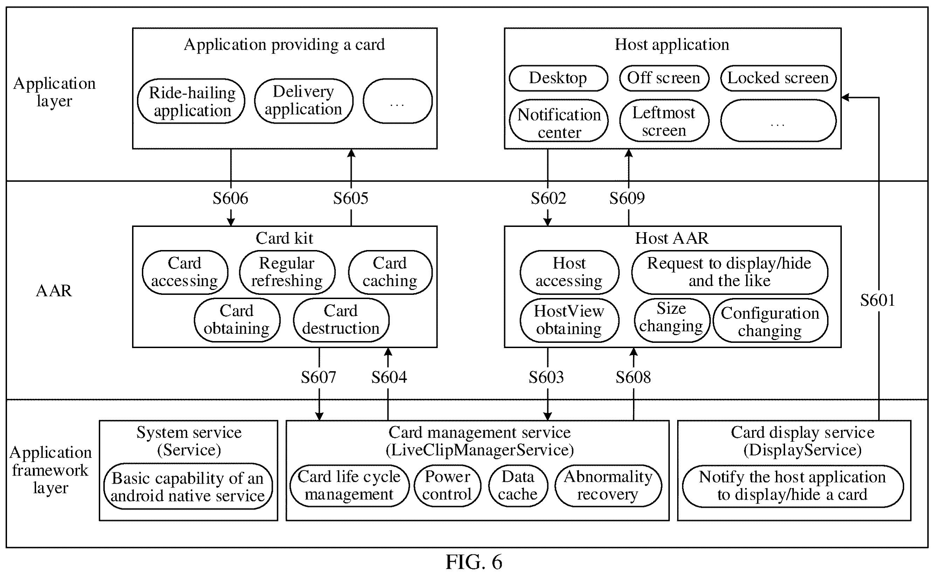

In some examples, to implement the card display method provided in the embodiments of this application, as shown in FIG. 6, the application layer may further include a management plug-in corresponding to the application, and may specifically include a management plug-in corresponding to the application providing the card and a management plug-in corresponding to the host application.

The management plug-in corresponding to the application may be an AAR (android adaptive) or a JAR (Java adaptive). A specific type of the management plug-in corresponding to the application is not limited in the embodiments of this application. An example in which the management plug-in corresponding to the application is the AAR is used for description in the embodiments of this application.

The AAR may include the AAR corresponding to the application providing the card and the AAR corresponding to the host application.

The AAR (also referred to as a card kit) corresponding to the application providing the card may be used as a bridge for interaction between the application that is of the electronic device and that provides the card and a card management service of the electronic device. That is, the card kit may integrate a related interface of card display, so that the application providing the card may establish a communication connection with the card management service through the related interface of the card display that is integrated by the card kit, and further interact with the card management service through the card kit. In other words, the application providing the card does not need to understand the card management service of the electronic device, and can implement functions such as card access, regular refreshing, card caching, card obtaining, and card destruction only by invoking the related interface provided by the card kit.

It should be noted that, the card kit may be integrated into the application that provides the card and that is of the electronic device, that is, the card kit may be integrated into all applications that provide cards and that are of the electronic device. For example, the card kit may be integrated into the ride-hailing application of the electronic device; For another example, the card kit may also be integrated into the takeaway application of the electronic device.

The AAR (also referred to as a host AAR) corresponding to the host application may be used as a bridge for interaction between the host application of the electronic device and the card management service. That is, the host AAR may integrate the related interface of the card display, so that the host application may establish a communication connection with the card management service through the related interface of the card display that is integrated by the host AAR. In this way, the host application may quickly access the card management service through the host AAR, to help the host application implement functions such as host accessing, requesting displaying/hiding, obtaining a host view (host view), size change, and configuration (config) change.

It should be noted that, the host AAR may be integrated into the host application of the electronic device. That is, the host AAR may be integrated into each host application of the electronic device. For example, the host AAR may be integrated on the desktop of the electronic device. For another example, the host AAR may be integrated in the notification center of the electronic device. For another example, the host AAR may be integrated on the leftmost screen of the electronic device.

As shown in FIG. 6, the application framework layer may further include a card display service (DisplayService), a card management service (LiveClipManagerService), a system service (Service), and the like.

The card display service may be used as an initiator of related instructions displayed on the card. The card display service is configured to: receive a related notification that is sent by a decision-making middle platform (namely, an application built in the electronic device) and that indicates to control the host application to display a card, and notify, in response to a related notification that indicates to control the host application to display the card, the host application to display the card, hide the card, or destroy the card.

The card management service may be a bridge connecting a card process and a host process. That is, the card management service may implement functions such as card life cycle management, power consumption control, data caching, and abnormality recovery. The card management service may be configured to obtain the related notification displayed on the card of the host application, and send the related notification displayed on the card to the card kit by using a system service, to notify the card kit to obtain the embedded window layer corresponding to the card view from the application providing the card. The card management service may be further configured to establish a communication connection with the host AAR by using the system service and send, through the host AAR, the embedded window layer corresponding to the obtained card view to the host application, so that the host application displays the card.

The system service has a basic capability of an android native service, that is, the system service may provide a cross-process data transmission channel.

With reference to FIG. 6, an example in which the application providing the card is the ride-hailing application is used to continue providing descriptions about the card display method provided in the embodiments of this application below.

As shown in FIG. 6, the card display method provided in an embodiment of this application may include S601 to S609.

S601: When a service notification sent by a ride-hailing application of an electronic device is received, a card display service of the electronic device sends a card display notification to a host application of the electronic device.

The service notification is used to indicate that a service of the ride-hailing application of the electronic device is changed (for example, a driver receives an order), and the card display notification is used to indicate the host application to display a ride-hailing application card. The host application may include a desktop, a leftmost screen, a notification center, a banner notification, an off screen, a locked screen, and the like of the electronic device.

After the electronic device is powered on, the host application (the desktop, the leftmost screen, the notification center, the banner notification, the off screen, the locked screen, and the like) registers a service change of the ride-hailing application (not shown in the figure). When the service change of the ride-hailing application occurs, the card display service sends the card display notification to these host applications, to notify each host application of the electronic device that the ride-hailing application card currently needs to be displayed.

For example, after a user places a ride-hailing order by using the ride-hailing application of the electronic device, when the service of the ride-hailing application changes (for example, the driver receives the order), the ride-hailing application may send the service notification to the card display service of the electronic device. That is, the ride-hailing application notifies the card display service that the ride-hailing application card currently needs to be displayed. After receiving the service notification sent by the ride-hailing application, the card display service of the electronic device may send a card display notification to the host application (such as the desktop, the leftmost screen, the notification center, the banner notification, the off screen, or the locked screen) of the electronic device, to notify the host application of the electronic device that the ride-hailing application card needs to be displayed. Therefore, when the electronic device is switched to the desktop, the desktop of the electronic device may display the ride-hailing application card. When the electronic device is switched to the notification center, the notification center of the electronic device may display the ride-hailing application card.

S602: The host application of the electronic device receives the card display notification, and sends a first request to a host AAR corresponding to the host application, where the first request is used to request to display the ride-hailing application card.

It should be noted that, because the card display service of the electronic device may send the card display notification to all the host applications that register the service change of the ride-hailing application of the electronic device, after each of all the host applications that register the service change of the ride-hailing application receives the card display notification sent by the card display service, each host application may send the first request to the host AAR corresponding to the host application.

S603: The host AAR corresponding to the host application receives the first request, and sends a second request to a card management service of the electronic device, where the second request is used to request to display the ride-hailing application card.

After the host AAR corresponding to the host application receives the first request, the host AAR corresponding to the host application establishes cross-process communication with the card management service of the electronic device by using a system service of the electronic device, and sends the second request to the card management service of the electronic device, to request display of the ride-hailing application card from the card management service of the electronic device.

It should be noted that, after each of all the host applications that register the service change of the ride-hailing application receives the card display notification sent by the card display service, each host application may send the first request to the host AAR corresponding to the host application. Therefore, after the host AAR corresponding to each host application receives the first request, the host AAR corresponding to each host application may send the second request to the card management service of the electronic device.

S604: The card management service receives the second request, and sends a third request to a card kit corresponding to the ride-hailing application, where the third request is used to request to obtain an embedded window layer corresponding to the ride-hailing application card.

After the card management service of the electronic device receives the second request, the card management service may establish, by using the system service of the electronic device, cross-process communication with the card kit corresponding to the ride-hailing application, and send the third request to the card kit corresponding to the ride-hailing application, to obtain, from the card kit corresponding to the ride-hailing application, the embedded window layer corresponding to the ride-hailing application card.

It should be noted that, the host AAR corresponding to each host application may send the second request to the card management service of the electronic device. Therefore, after the card management service receives the second request sent by the host AAR corresponding to each host application, the card management service may send the third request to the card kit corresponding to the ride-hailing application.

S605: The card kit corresponding to the ride-hailing application receives the third request, and sends a fourth request to the ride-hailing application, where the fourth request is used to request to obtain a card view corresponding to the ride-hailing application card.

The fourth request includes a card view identifier (namely, a view id). The card view identifier may uniquely identify a card view of a card that can be displayed on the host application.

When the host application of the electronic device displays the card, the host application running in the foreground of the electronic device may change. Therefore, a suitable card view may be displayed according to display content of the host application. In other words, for a same service of the ride-hailing application, when different host applications display the ride-hailing application card, card views of the ride-hailing application cards that are displayed on the different host applications are different, and card view identifiers of the different card views are different.

For example, an example in which the host application of the electronic device may include the desktop, the notification center, the locked screen, the off screen, the leftmost screen, and the banner notification is still used. For a same service (for example, the driver receives the order) of the ride-hailing application, a view id of a card view of a ride-hailing application card corresponding to the desktop is 1, a view id of a card view of a ride-hailing application card corresponding to the notification center is 2, a view id of a card view of a ride-hailing application card corresponding to the locked screen is 3, a view id of a card view of a ride-hailing application card corresponding to the off screen is 4, a view id of a card view of a ride-hailing application card corresponding to the leftmost screen is 5, and a view id of a card view of a ride-hailing application card corresponding to the banner notification is 6.

It should be noted that, after receiving the second request sent by the host AAR corresponding to each host application, the card management service may send the third request to the card kit corresponding to the ride-hailing application. Therefore, after the card kit corresponding to the ride-hailing application receives the third request sent by the card management service when the card management service receives the second request sent by the host AAR corresponding to one host application, the card kit corresponding to the ride-hailing application may send the fourth request to the ride-hailing application. The fourth request includes a card view identifier corresponding to the host application.

S606: The ride-hailing application receives the fourth request, obtains, according to the card view identifier, the card view corresponding to the ride-hailing application card, and sends the card view corresponding to the ride-hailing application card to the card kit corresponding to the ride-hailing application.

S607: The card kit corresponding to the ride-hailing application receives the card view corresponding to the ride-hailing application card, generates, according to the card view corresponding to the ride-hailing application card, the embedded window layer corresponding to the ride-hailing application card, and sends the embedded window layer corresponding to the ride-hailing application card to the card management service.

After the card view corresponding to the ride-hailing application card is received, the card kit corresponding to the ride-hailing application may generate, according to the card view corresponding to the ride-hailing application card, the embedded window layer corresponding to the ride-hailing application card. In addition, the card kit corresponding to the ride-hailing application may encapsulate the embedded window layer corresponding to the ride-hailing application card, to obtain a data package of the embedded window layer corresponding to the ride-hailing application card, and send, by using a cross-process channel provided by the system service of the electronic device, the data package of the embedded window layer corresponding to the ride-hailing application card to the card management service.

S608: The card management service receives the embedded window layer corresponding to the ride-hailing application card, and sends the embedded window layer corresponding to the ride-hailing application card to the host AAR corresponding to the host application.

After the card management service of the electronic device receives the data package of the embedded window layer corresponding to the ride-hailing application card, the card management service sends, by using the cross-process channel provided by the system service of the electronic device, the data package of the embedded window layer corresponding to the ride-hailing application card to the host AAR corresponding to the host application.

S609: The host AAR corresponding to the host application receives the embedded window layer corresponding to the ride-hailing application card, and sends the embedded window layer corresponding to the ride-hailing application card to the host application.

The host AAR corresponding to the host application may send the data package of the embedded window layer corresponding to the ride-hailing application card to the host application of the electronic device. After receiving the data package of the embedded window layer corresponding to the ride-hailing application card, the host application of the electronic device may mount the embedded window layer corresponding to the ride-hailing application card on a host layer (namely, Surface View) of the host application of the electronic device. Then, when the electronic device runs the host application, the host application of the electronic device may display the embedded window layer corresponding to the ride-hailing application card, that is, the host application of the electronic device displays the ride-hailing application card.

When the electronic device displays a card corresponding to the application providing the card, the application that provides the card and that is run on the electronic device may create a card view, generate, according to the card view, an embedded window layer corresponding to the card, and send the embedded window layer corresponding to the card to the host application of the electronic device, so that the host application of the electronic device displays the embedded window layer corresponding to the card. In other words, when the host application of the electronic device displays the card corresponding to the application providing the card, the host application of the electronic device displays the embedded window layer mounted by the host application of the electronic device rather than directly displays the card corresponding to the application providing the card. Therefore, the application of the electronic device may create, as required, a card view including the custom card element, and generate, according to the card view, an embedded window layer including the custom card element, so that when the host application of the electronic device displays the notification information of the application, the host application of the electronic device may display card views including different custom card elements.

In some examples, when the application providing the card is a travel application (such as a ride-hailing application or a map application) or a delivery application (such as a takeaway application or an express application), the custom card element may include a progress bar, and the progress bar may be used to prompt a processing progress of an order of the travel application or the delivery application.

With reference to FIG. 7, the foregoing progress bar is described by using an example of the ride-hailing application card displayed on the locked screen of the electronic device.

After the ride-hailing application of the electronic device generates a ride-hailing order, a locked screen interface of the electronic device may display the ride-hailing application card. As shown in FIG. 7, the ride-hailing application card 20 may include a progress bar 21. The progress bar 21 may be used to prompt a user of the processing progress of the ride-hailing order. The progress bar 21 may include a first identifier 01 and a second identifier 02. The first identifier 01 may be used to represent a starting point (namely, a location at which an order receiving vehicle is located when a driver receives the order). That is, the first identifier 01 may be used to indicate that execution of the ride-hailing order starts. The second identifier 02 may be used to represent a destination of the ride-hailing order. That is, the second identifier 02 may be used to indicate that execution of the ride-hailing order is completed. The progress bar 21 may further include a connecting line 03 between the first identifier 01 and the second identifier 02, and a vehicle identifier 04 displayed on the connecting line 03 may indicate that a driver has received the order. In addition, after the driver receives the order, a distance between the vehicle identifier 04 and the second identifier 02 may indicate a distance between the order receiving vehicle and the destination of the ride-hailing order, that is, indicate the processing progress of the ride-hailing order.

It should be noted that, the first identifier 01 and the second identifier 02 may be respectively located at a left end and a right end of the progress bar 21. For example, as shown in FIG. 7, the first identifier 01 may be located at the left end of the progress bar 21, and the second identifier 02 may be located at the right end of the progress bar 21. Certainly, the first identifier 01 may alternatively be located at the right end of the progress bar 21, and the second identifier 02 may alternatively be located at the left end of the progress bar 21.

In addition, because congestion statuses of a driving route corresponding to the ride-hailing order are different, colors of the connecting line 03 between the first identifier 01 and the second identifier 02 may be different, so that different colors may prompt the user of different congestion statuses. For example, a color of a segment of the connecting line 03 between the first identifier 01 and the second identifier 02 may be red, and the red line segment may represent that a driving road segment corresponding to the line segment is seriously congested. For another example, a color of a segment of the connecting line 03 between the first identifier 01 and the second identifier 02 may be yellow, and the yellow line segment may represent that a driving road segment corresponding to the line segment is relatively congested. For another example, a color of a segment of the connecting line between the first identifier 01 and the second identifier 02 may be green, and the green line segment may represent that a driving road segment corresponding to the line segment is relatively smooth.

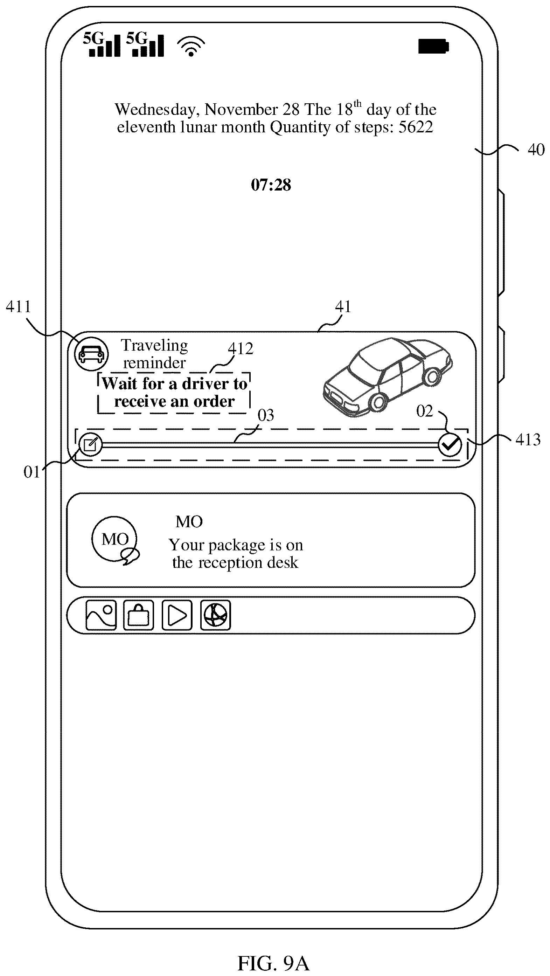

With reference to FIG. 8 and FIG. 9A to FIG. 9F, the following describes a card display process in the embodiments of this application by using an example in which the application providing the card is the ride-hailing application, the host application is the locked screen, and the ride-hailing application card includes the progress bar.

For example, after the user opens the ride-hailing application of the electronic device, as shown in (a) in FIG. 8, the electronic device displays an interface 31 corresponding to the ride-hailing application. The interface 31 corresponding to the ride-hailing application may include an origin input box 32 and a destination input box 33. The user may respectively input an origin and a destination in the origin input box 32 and the destination input box 33. After the electronic device receives the origin and the destination that are input by the user, as shown in (b) in FIG. 8, the electronic device displays a vehicle call interface 34. The vehicle call interface 34 may include a vehicle model selection control 35, a departure time selection control 36, a rider quantity selection control 37, a payment manner selection control 38, and a call control 39. The user may set a type of the order receiving vehicle through the vehicle model selection control 35. For example, the user may select a vehicle model A. The user may set departure time through the departure time selection control 36. For example, the user may set the departure time as current time. The user may set a rider quantity through the rider quantity selection control 37. For example, the user may select two riders. The user may select a payment manner through the payment manner selection control 38. For example, the user selects online payment. After the user selects a vehicle, the departure time, the rider quantity, and the payment manner, the user may tap the call control 39. When the electronic device receives a trigger operation performed by the user on the call control 39, in response, the ride-hailing application of the electronic device generates a ride-hailing order, and issues the ride-hailing order, to wait for a driver to receive the order.

When the ride-hailing application of the electronic device monitors that the driver has not received the order, as shown in FIG. 9A, the electronic device may display a ride-hailing application card 41 on a locked screen interface 40. The ride-hailing application card 41 may include an icon 411 of the ride-hailing application and text 412 of "waiting for a driver to receive the order". With reference to FIG. 9A, the ride-hailing application card 41 may further include a progress bar 413. The progress bar 413 may include a first identifier 01, a second identifier 02, and a connecting line 03 between the first identifier 01 and the second identifier 02. The first identifier 01 may be used to represent a starting point (namely, a location at which an order receiving vehicle is located when the driver receives the order). That is, the first identifier 01 may be used to indicate that execution of the ride-hailing order starts. The second identifier 02 may be used to represent a destination of the ride-hailing order. That is, the second identifier 02 may be used to indicate that execution of the ride-hailing order is completed. In this case, a vehicle identifier is not displayed on the connecting line 03 between the first identifier 01 and the second identifier 02, to prompt the user that the driver has not received the order.

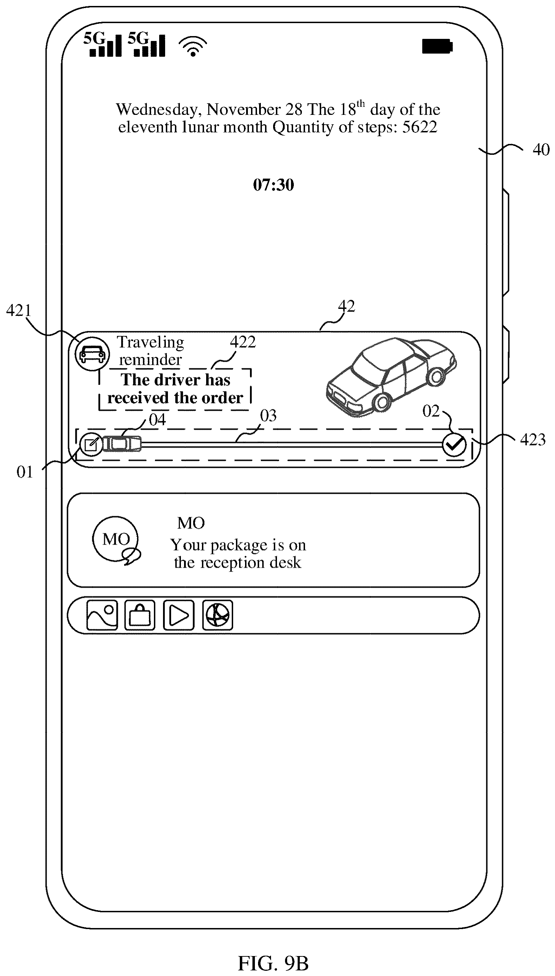

When the ride-hailing application of the electronic device monitors that the driver has received the order, as shown in FIG. 9B, the electronic device may display a ride-hailing application card 42 on the locked screen interface 40. The ride-hailing application card 42 may include an icon 421 of the ride-hailing application and text 422 that "the driver has received the order". With reference to FIG. 9B, the ride-hailing application card 42 may further include a progress bar 423. The progress bar 423 may include a first identifier 01, a second identifier 02, and a connecting line 03 between the first identifier 01 and the second identifier 02. Compared with the progress bar 413 shown in FIG. 9A, the progress bar 423 in the ride-hailing application card 42 may further include a vehicle identifier 04. The vehicle identifier 04 is located on the connecting line 03 between the first identifier 01 and the second identifier 02, and the vehicle identifier 04 is close to the first identifier 01. In other words, displaying the vehicle identifier 04 close to a location of the first identifier 01 on the connecting line 03 between the first identifier 01 and the second identifier 02 serves as a prompt that driver has received the order.

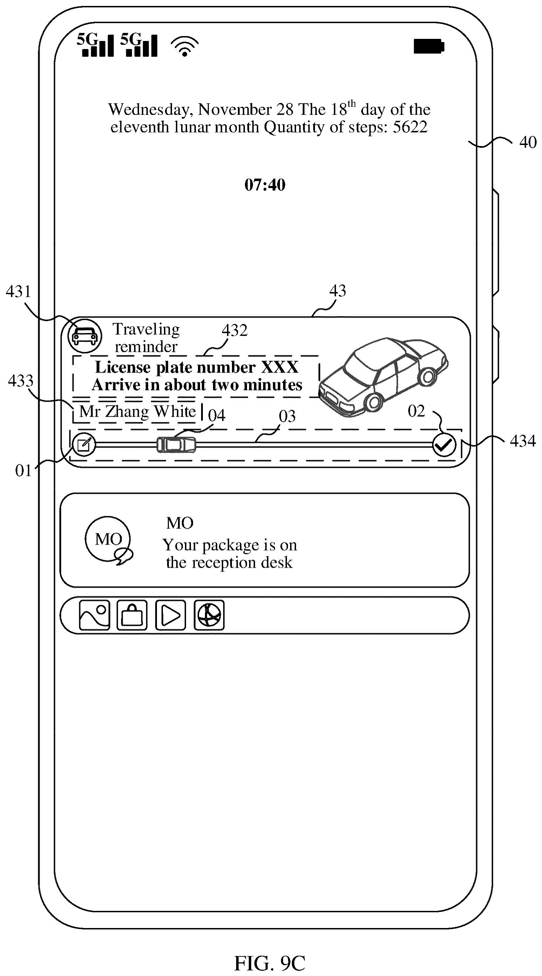

Then, the driver drives to the origin to pick up the user. In this case, as shown in FIG. 9C, the electronic device may display the ride-hailing application card 43 on the locked screen interface 40. The ride-hailing application card 43 may include an icon 431 of the ride-hailing application, text 432 of "license plate number XXX and arriving in about two minutes", and text 433 of "Mr Zhang and white". With reference to FIG. 9C, the ride-hailing application card 43 may further include a progress bar 434. The progress bar 434 may include a first identifier 01, a second identifier 02, a connecting line 03 between the first identifier 01 and the second identifier 02, and a vehicle identifier 04 located on the connecting line 03. Compared with the progress bar 423 shown in FIG. 9B, the vehicle identifier 04 on the progress bar 434 moves toward the second identifier 02 by a distance, which indicates that the order receiving vehicle has traveled by a distance. That is, a change of the distance between the vehicle identifier 04 and the second identifier 02 on the progress bar 434 may serve as a prompt that the order receiving vehicle is driving to the origin of the user. For example, a shorter distance between the vehicle identifier 04 and the second identifier 02 indicates that the order receiving vehicle is closer to the origin of the user.

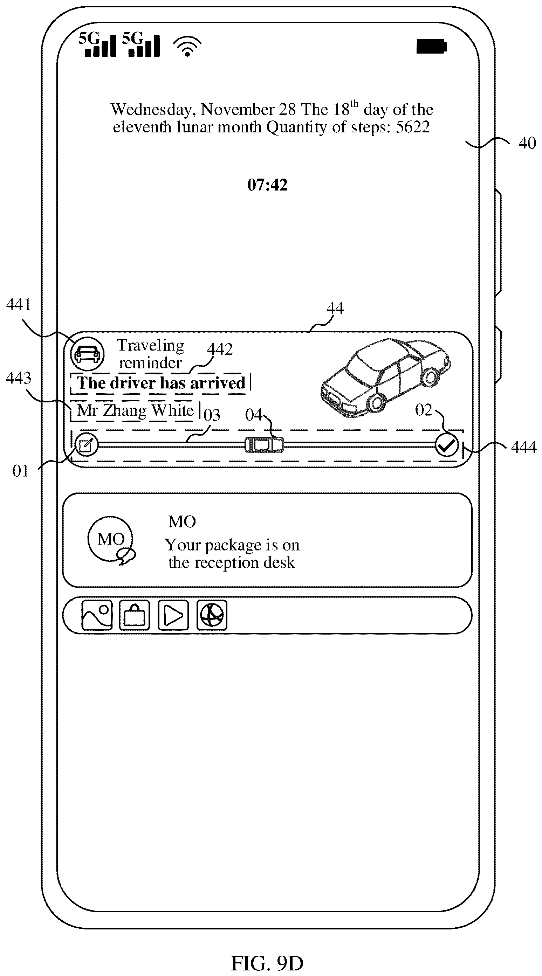

Then, when the ride-hailing application of the electronic device monitors that the driver arrives at the origin, as shown in FIG. 9D, the electronic device may display a ride-hailing application card 44 on the locked screen interface 40. The ride-hailing application card 44 may include an icon 441 of the ride-hailing application, the text 442 that "the driver has arrived", and the text 443 of "Mr Zhang and white". With reference to FIG. 9D, the ride-hailing application card 44 may further include a progress bar 444. The progress bar 444 may include a first identifier 01, a second identifier 02, a connecting line 03 between the first identifier 01 and the second identifier 02, and a vehicle identifier 04 located on the connecting line 03. Compared with the progress bar 434 shown in FIG. 9C, the vehicle identifier 04 on the progress bar 444 continues to move toward the second identifier 02 by a distance, and a location of the vehicle identifier 04 keeps unchanged. That is, a distance between the vehicle identifier 04 and the second identifier 02 on the progress bar 444 and a moving state of the vehicle identifier 04 may serve as a prompt that the driver has arrived, and the user needs to get on the vehicle as soon as possible.

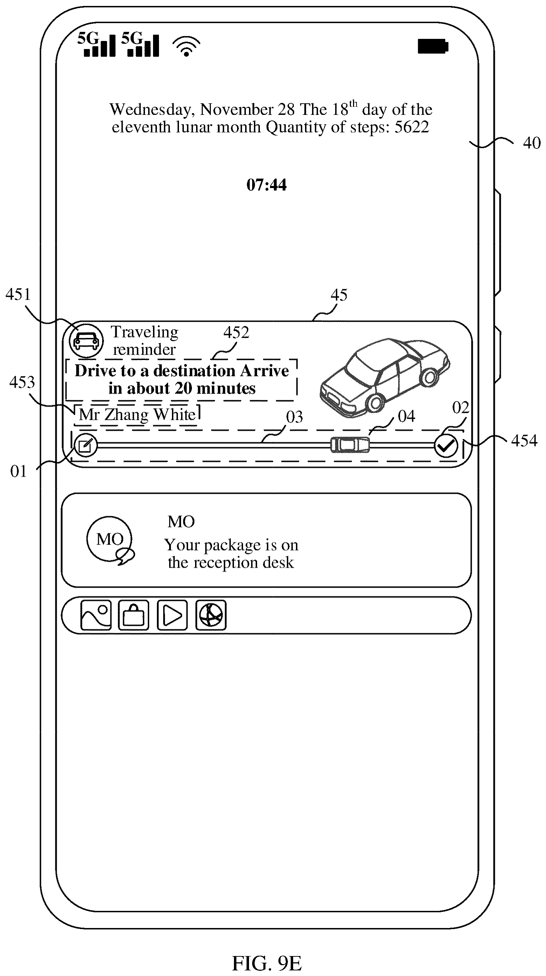

Then, after the driver picks up the user, when the driver drives to the destination according to the ride-hailing order, as shown in FIG. 9E, the electronic device may display a ride-hailing application card 45 on the locked screen interface 40. The ride-hailing application card 45 may include an icon 451 of the ride-hailing application, text 452 of "driving to the destination and arriving in about 20 minutes", and text 453 of "Mr Zhang and white". With reference to FIG. 9E, the ride-hailing application card 45 may further include a progress bar 454. The progress bar 454 may include a first identifier 01, a second identifier 02, a connecting line 03 between the first identifier 01 and the second identifier 02, and a vehicle identifier 04 located on the connecting line 03. Compared with the progress bar 444 shown in FIG. 9D, the vehicle identifier 04 on the progress bar 454 continues to move toward the second identifier 02 by a distance, and a distance between the vehicle identifier 04 and the second identifier 02 gradually shortens. That is, a gradually shortening distance between the vehicle identifier 04 and the second identifier 02 on the progress bar 454 may serve as a prompt that the order receiving vehicle is driving to the destination.

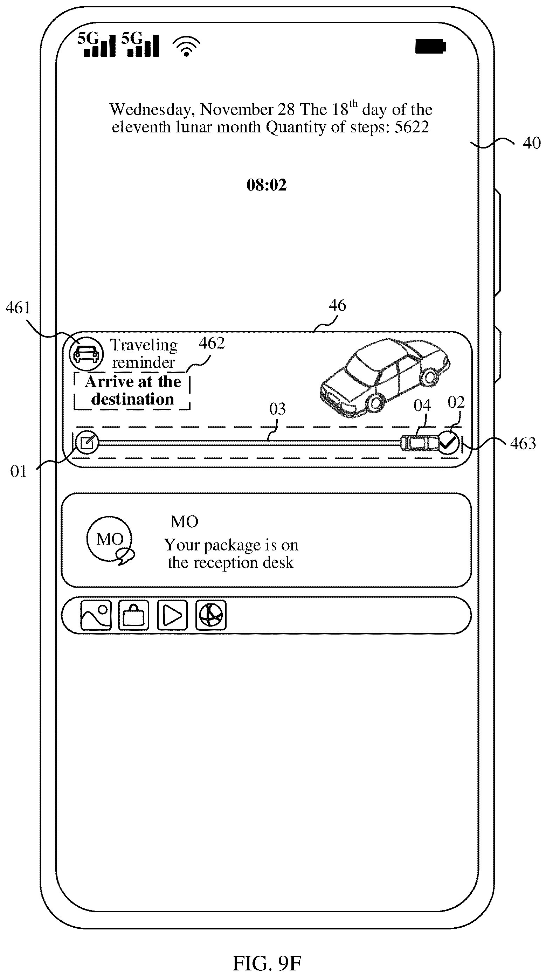

Then, when the ride-hailing application monitors that the user arrives at the destination, as shown in FIG. 9F, the electronic device may display a ride-hailing application card 46 on the locked screen interface 40. The ride-hailing application card 46 may include an icon 461 of the ride-hailing application and text 462 of "arriving at the destination". With reference to FIG. 9F, the ride-hailing application card 46 may further include a progress bar 463. The progress bar 463 may include a first identifier 01, a second identifier 02, a connecting line 03 between the first identifier 01 and the second identifier 02, and a vehicle identifier 04 located on the connecting line 03 between the first identifier 01 and the second identifier 02. Compared with the ride-hailing application card 45 shown in FIG. 9E, the vehicle identifier 04 on the progress bar 463 of the ride-hailing application card 46 moves to a location of the second identifier 02, which serves as a prompt that the order receiving vehicle has arrived at the destination and the ride-hailing order is completed.

In other words, when a service of the ride-hailing application is changed (for example, a processing progress of the ride-hailing order changes), the progress bar included in the ride-hailing application card displayed on the locked screen interface of the electronic device is synchronously updated.

In this example, the ride-hailing application running in the electronic device may generate a card view including the progress bar, and send an embedded window layer corresponding to the card view including the progress bar to the host application, so that the host application of the electronic device may display the embedded window layer corresponding to the card view including the progress bar. That is, the host application of the electronic device may display the ride-hailing application card including the progress bar. Further, the processing progress of the ride-hailing order may be more directly and effectively displayed to the user through the progress bar, so that a display effect is better. In addition, the progress bar is updated in real time according to the processing progress of the ride-hailing order, so that timeliness of notification information of the ride-hailing application can be ensured, and user experience is better.

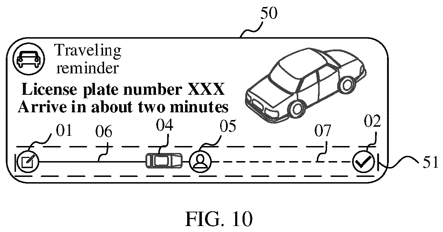

In some examples, the progress bar may be a segmentation progress bar. For example, an example of the ride-hailing application card displayed on the locked screen of the electronic device is still used, to provide descriptions about the foregoing segmentation progress bar. As shown in FIG. 10, a ride-hailing application card 50 may include a segmentation progress bar 51. The segmentation progress bar 51 may be used to prompt the user of the processing progress of the ride-hailing order. The segmentation progress bar 51 may include a first identifier 01, a second identifier 02, and a third identifier 05. The first identifier 01 may be used to represent a starting point (namely, a location at which an order receiving vehicle is located when a driver receives the order). That is, the first identifier 01 may be used to indicate that execution of the ride-hailing order starts. The second identifier 02 may be used to represent a destination of the ride-hailing order. That is, the second identifier 02 may be used to indicate that execution of the ride-hailing order is completed. The third identifier 05 may be used to indicate an origin of the user placing the order. The third identifier 03 is located between the first identifier 01 and the second identifier 02, and the third identifier 05 may divide the connecting line between the first identifier 01 and the second identifier 02 into two segments. That is, the third identifier 05 may divide a processing process of the ride-hailing order into two stages. In other words, a first connecting line 06 between the first identifier 01 and the third identifier 05 may be used to indicate that the order receiving vehicle drives from the starting point to the origin of the user. A second connecting line 07 between the third identifier 05 and the second identifier 02 may be used to indicate that the order receiving vehicle drives from the origin of the user to the destination. As shown in FIG. 10, the segmentation progress bar 51 may further include the vehicle identifier 04. When the vehicle identifier 04 is located on the first connecting line 06, it indicates that the order receiving vehicle is driving from the starting point to the origin of the user. When the vehicle identifier 04 is located on the first connecting line 07, it indicates that the order receiving vehicle has picked up the user, and the order receiving vehicle is driving from the origin of the user to the destination.

It should be noted that, a current processing stage of the ride-hailing order may be indicated through a line shape of the connecting line. For example, when both the first connecting line 06 and the second connecting line 07 are dashed lines, it indicates that the driver has not received the order. When the first connecting line 06 is a solid line and the second connecting line 07 is a dashed line, it indicates that the order receiving vehicle is driving from the starting point to the origin of the user. That is, a processing stage at which the ride-hailing order is currently located is a stage at which the driver picks up the user. That is, the driver has not received the user, and has not entered a stage at which the driver sends the user to the destination. When the second connecting line 07 is a solid line, it indicates that the order receiving vehicle is driving from the origin of the user to the destination. That is, a processing stage at which the ride-hailing order is currently located is changed to a stage at which the driver sends the user to the destination.

The first identifier 01 and the second identifier 02 may be respectively located at a left end and a right end of the segmentation progress bar 51. For example, as shown in FIG. 10, the first identifier 01 may be located at the left end of the segmentation progress bar 51, and the second identifier 02 may be located at the right end of the segmentation progress bar 51. Certainly, the first identifier 01 may alternatively be located at the right end of the segmentation progress bar 51, and the second identifier 02 may alternatively be located at the left end of the segmentation progress bar 51.

In addition, because congestion statuses of a driving route corresponding to the ride-hailing order are different, colors of the first connecting line 06 between the first identifier 01 and the third identifier 05 may be different, and colors of the second connecting line 07 between the third identifier 05 and the second identifier 02 may also be different, so that different colors may prompt the user of different congestion statuses.

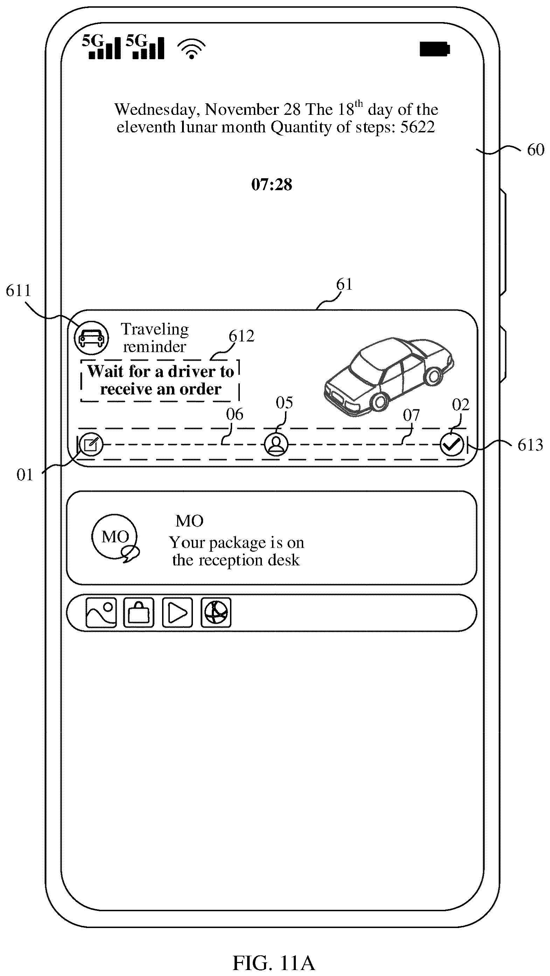

With reference to FIG. 11A to FIG. 11E, the following describes a card display process in the embodiments of this application by using an example in which the application providing the card is the ride-hailing application, the host application is the locked screen, and the ride-hailing application card includes the segmentation progress bar.

After the user places the ride-hailing order by using the ride-hailing application of the electronic device, when the ride-hailing application of the electronic device monitors that the driver has not received the order, as shown in FIG. 11A, the electronic device may display a ride-hailing application card 61 on a locked screen interface 60. The ride-hailing application card 61 may include an icon 611 of the ride-hailing application and text 612 of "waiting for a driver to receive the order". With reference to FIG. 11A, the ride-hailing application card 61 may further include a progress bar 613. The progress bar 613 may include a first identifier 01, a second identifier 02, and a third identifier 05 located between the first identifier 01 and the second identifier 02. The first identifier 01 may be used to represent a starting point (namely, a location at which an order receiving vehicle is located when the driver receives the order). That is, the first identifier 01 may be used to indicate that execution of the ride-hailing order starts. The second identifier 02 may be used to represent a destination of the ride-hailing order. That is, the second identifier 02 may be used to indicate that execution of the ride-hailing order is completed. The third identifier 05 may be used to indicate an origin of the user placing the order. The segmentation progress bar 613 further includes a first connecting line 06 between the first identifier 01 and the third identifier 05, and a second connecting line 07 between the third identifier 05 and the second identifier 02. In this case, both the first connecting line 06 and the second connecting line 07 are dashed lines, and a vehicle identifier is not displayed on the first connecting line 06, to prompt the user that the driver has not received the order.

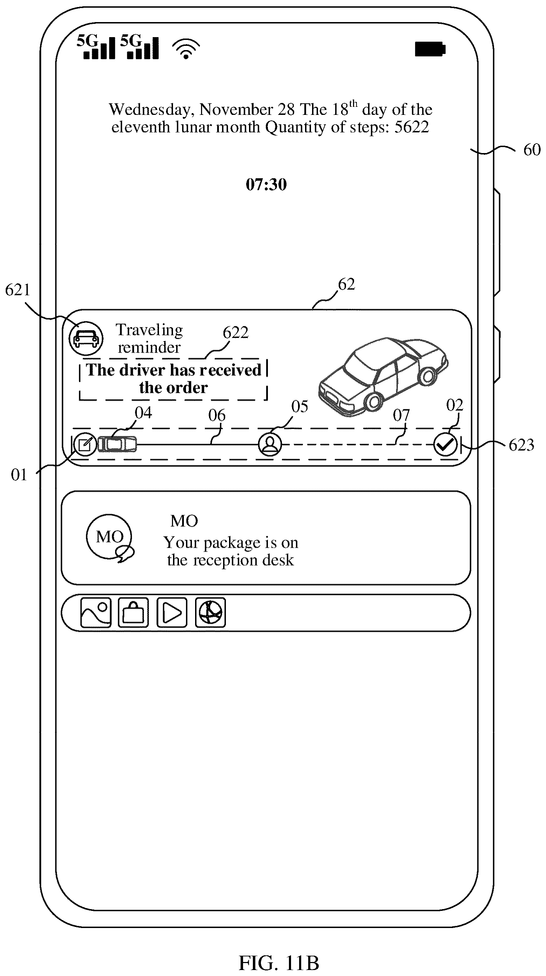

Then, when the ride-hailing application of the electronic device monitors that the driver has received the order, as shown in FIG. 11B, the electronic device may display a ride-hailing application card 62 on the locked screen interface 60. The ride-hailing application card 62 may include an icon 621 of the ride-hailing application and text 622 that "the driver has received the order". With reference to FIG. 11B, the ride-hailing application card 62 may further include a segmentation progress bar 623. The segmentation progress bar 623 may include a first identifier 01, a second identifier 02, and a third identifier 05 located between the first identifier 01 and the second identifier 02. The segmentation progress bar 613 further includes a first connecting line 06 between the first identifier 01 and the third identifier 05, a second connecting line 07 between the third identifier 05 and the second identifier 02, and a vehicle identifier 04. Compared with the segmentation progress bar 613 shown in FIG. 11A, the first connecting line 06 is a solid line, and the vehicle identifier 04 is located on the first connecting line 06. That is, updating a line shape of the first connecting line 06 from the dashed line to the solid line, and displaying the vehicle identifier 04 on the first connecting line 06 may serve as a prompt that the driver has received the order, and is about to drive to the origin to pick up the user.

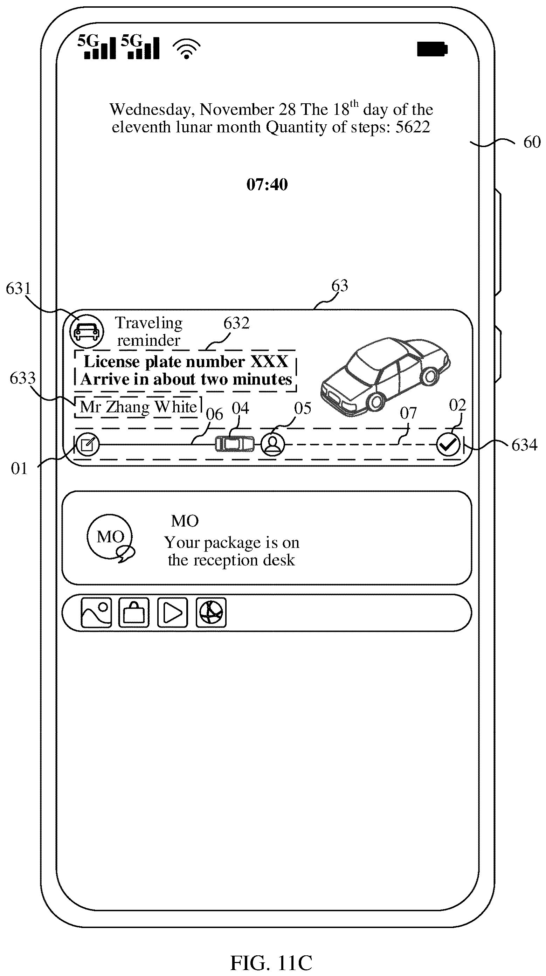

Then, the driver drives to the origin to pick up the user. In this case, as shown in FIG. 11C, the electronic device may display the ride-hailing application card 63 on the locked screen interface 60. The ride-hailing application card 63 may include an icon 631 of the ride-hailing application, text 632 of "license plate number XXX and arriving in two minutes", and text 633 of "Mr Zhang and white". With reference to FIG. 11C, the ride-hailing application card 63 may further include a segmentation progress bar 634. The segmentation progress bar 634 may include a first identifier 01, a second identifier 02, and a third identifier 05 located between the first identifier 01 and the second identifier 02. The segmentation progress bar 634 further includes a first connecting line 06 between the first identifier 01 and the third identifier 05, a second connecting line 07 between the third identifier 05 and the second identifier 02, and a vehicle identifier 04 located on the first connecting line 06. Compared with the segmentation progress bar 623 shown in FIG. 11B, the vehicle identifier 04 on the segmentation progress bar 634 moves toward the third identifier 05 by a distance, and is close to the third identifier 05. That is, a moving direction of the vehicle identifier 04 on the segmentation progress bar 634 and a change of the distance between the vehicle identifier 04 and the third identifier 05 may serve as a prompt that the order receiving vehicle is to arrive at the origin, and the user needs to go to the origin as soon as possible.

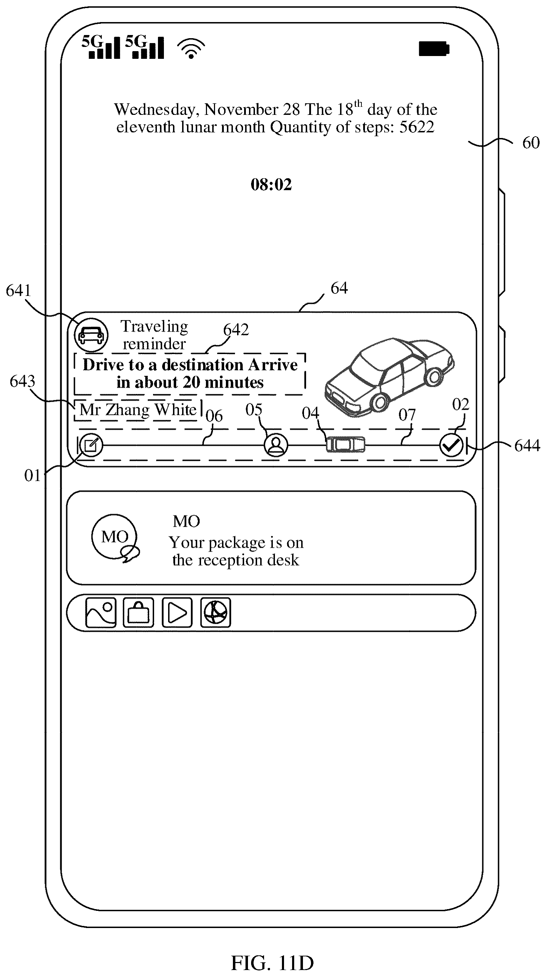

Then, when the driver picks up the user and drives to the destination, as shown in FIG. 11D, the electronic device may display a ride-hailing application card 64 on the locked screen interface 60. The ride-hailing application card 64 may include an icon 641 of the ride-hailing application, text 642 of "driving to the destination and arriving in about 20 minutes", and text 643 of "Mr Zhang and white". With reference to FIG. 11D, the ride-hailing application card 64 may further include a segmentation progress bar 644. The segmentation progress bar 644 may include a first identifier 01, a second identifier 02, and a third identifier 05 located between the first identifier 01 and the second identifier 02. The segmentation progress bar 644 further includes a first connecting line 06 between the first identifier 01 and the third identifier 05, a second connecting line 07 between the third identifier 05 and the second identifier 02, and a vehicle identifier 04. Compared with the segmentation progress bar 634 shown in FIG. 11C, the second connecting line 07 on the segmentation progress bar 644 is a solid line, and the vehicle identifier 04 is located on the second connecting line 07, which indicates that the order receiving vehicle has picked up the user, and the order receiving vehicle is driving to the destination from the origin of the user. That is, updating the line shape of the second connecting line 07 from the dashed line to the solid line, and displaying the vehicle identifier 04 on the second connecting line 07 may serve as a prompt that the driver has picked up the user and is driving to the destination.

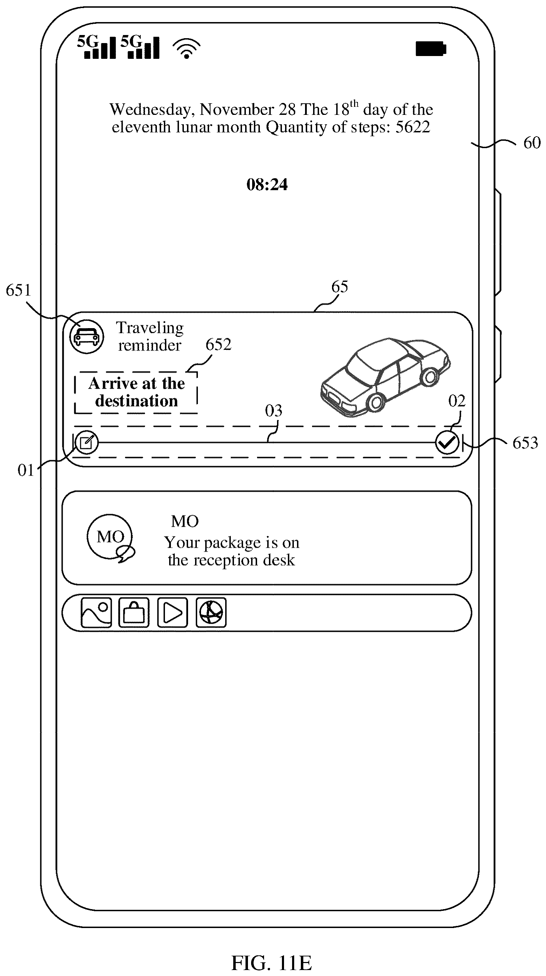

Then, when the order receiving vehicle drives to the destination, as shown in FIG. 11E, the electronic device may display a ride-hailing application card 65 on the locked screen interface 60. The ride-hailing application card 65 may include an icon 651 of the ride-hailing application and text 652 of "arriving at the destination". With reference to FIG. 11E, the ride-hailing application card 65 may further include a segmentation progress bar 653. Compared with the segmentation progress bar 644 shown in FIG. 11D, the segmentation progress bar 653 may include the first identifier 01 and the second identifier 02, that is, the segmentation progress bar 653 does not include the third identifier. The segmentation progress bar 653 may further include a connecting line 03 between the first identifier 01 and the second identifier 02, and the connecting line 03 is a solid line. That is, canceling display of the third identifier and the vehicle identifier on the segmentation progress bar 654, and displaying the connecting line 03 between the first identifier 01 and the second identifier 02 may serve as a prompt that the order receiving vehicle has arrived at the destination, and the ride-hailing order has been completed.

In other words, when a service of the ride-hailing application is changed (for example, a processing progress of the ride-hailing order changes), the segmentation progress bar included in the ride-hailing application card displayed on the locked screen interface of the electronic device is synchronously updated.

In this example, the ride-hailing application running in the electronic device may generate a card view including the segmentation progress bar, and send an embedded window layer corresponding to the card view including the segmentation progress bar to the host application, so that the host application of the electronic device may display the embedded window layer corresponding to the card view including the segmentation progress bar. That is, the host application of the electronic device may display the ride-hailing application card including the segmentation progress bar. Further, the processing progress of the ride-hailing order may be more directly and effectively displayed to the user through the segmentation progress bar, so that a display effect is better. In addition, the segmentation progress bar is updated in real time according to the processing progress of the ride-hailing order, so that timeliness of notification information of the ride-hailing application can be ensured, and user experience is better.

In some examples, when the application providing the card is the ride-hailing application, the ride-hailing application may include a first progress bar and a second progress bar. The first progress bar is used to indicate that the order receiving vehicle drives from a starting point (namely, a location of the order receiving vehicle when a driver receives the order) to an origin of the user. The second progress bar is used to indicate that the order receiving vehicle drives from the origin of the user to a destination.

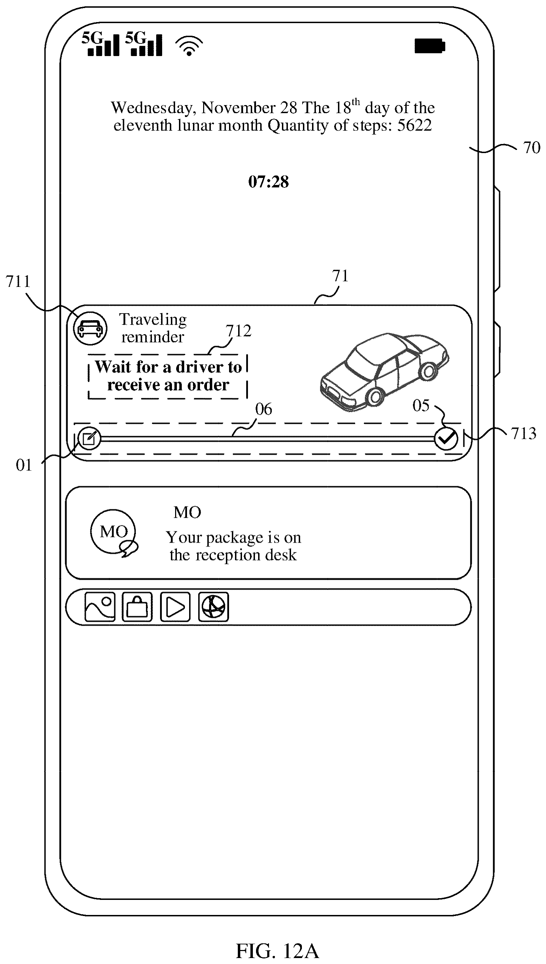

With reference to FIG. 12A to FIG. 12F, the following describes a card display process in the embodiments of this application still by using an example in which the application providing the card is the ride-hailing application, the host application is the locked screen, and the ride-hailing application card includes the first progress bar and the second progress bar.

After the user places the ride-hailing order by using the ride-hailing application of the electronic device, when the ride-hailing application of the electronic device monitors that the driver has not received the order, as shown in FIG. 12A, the electronic device may display a ride-hailing application card 71 on a locked screen interface 70. The ride-hailing application card 71 may include an icon 711 of the ride-hailing application and text 712 of "waiting for a driver to receive the order". With reference to FIG. 12A, the ride-hailing application card 71 may further include a first progress bar 713. The first progress bar 713 may include a first identifier 01, a third identifier 05, and a first connecting line 06 between the first identifier 01 and the third identifier 05. The first identifier 01 may be used to represent a starting point (namely, a location at which an order receiving vehicle is located when the driver receives the order). That is, the first identifier 01 may be used to indicate that execution of the ride-hailing order starts. The third identifier 05 may be used to indicate an origin of the user placing the order. In this case, a vehicle identifier is not displayed on the first connecting line 06 between the first identifier 01 and the third identifier 05, to prompt the user that the driver has not received the order.

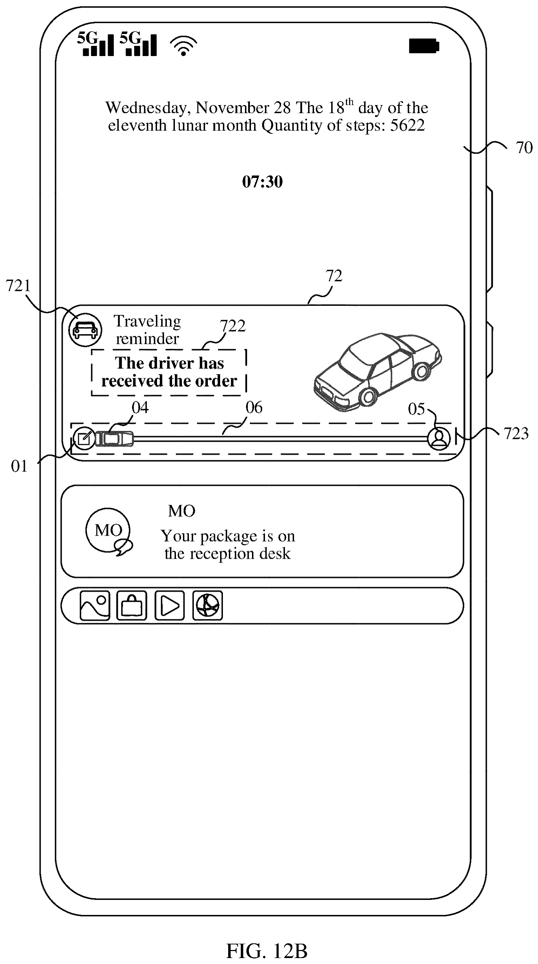

After the user places the ride-hailing order by using the ride-hailing application of the electronic device, when the ride-hailing application of the electronic device monitors that the driver has received the order, as shown in FIG. 12B, the electronic device may display a ride-hailing application card 72 on the locked screen interface 70. The ride-hailing application card 72 may include an icon 721 of the ride-hailing application and text 722 that "the driver has received the order". With reference to FIG. 12B, the ride-hailing application card 72 may further include a first progress bar 723. The first progress bar 723 may include a first identifier 01, a third identifier 05, and a first connecting line 06 between the first identifier 01 and the third identifier 05. Compared with the first progress bar 713 shown in FIG. 12A, the first progress bar 723 may further include the vehicle identifier 04 displayed on the first connecting line 06 between the first identifier 01 and the third identifier 05, and the vehicle identifier 04 is close to the first identifier 01. That is, displaying the vehicle identifier 04 at a location close to the first identifier 01 on the first connecting line 06 between the first identifier 01 and the second identifier 02 may serve as a prompt that the driver has received the order, and is about to drive to the origin to pick up the user.

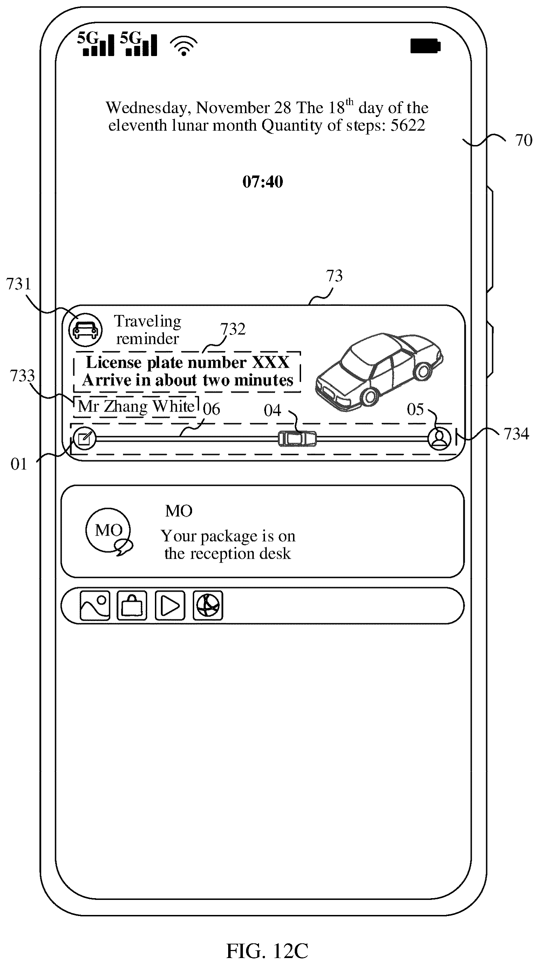

Then, the driver drives to the origin to pick up the user. In this case, as shown in FIG. 12C, the electronic device may display the ride-hailing application card 73 on the locked screen interface 70. The ride-hailing application card 73 may include an icon 731 of the ride-hailing application, text 732 of "license plate number XXX and arriving in two minutes", and text 733 of "Mr Zhang and white". With reference to FIG. 12C, the ride-hailing application card 73 may further include a first progress bar 734. The first progress bar 734 may include a first identifier 01, a third identifier 05, a first connecting line 06 between the first identifier 01 and the third identifier 05, and a vehicle identifier 04. Compared with the first progress bar 723 shown in FIG. 12B, the vehicle identifier 04 on the first progress bar 734 moves toward the third identifier 05 by a distance. That is, the order receiving vehicle drives toward the origin of the user by a distance. In other words, a change of a distance between the vehicle identifier 04 and the third identifier 05 on the first progress bar 734 may serve as a prompt that the order receiving vehicle is to arrive at the origin, and the user needs to go to the origin as soon as possible.

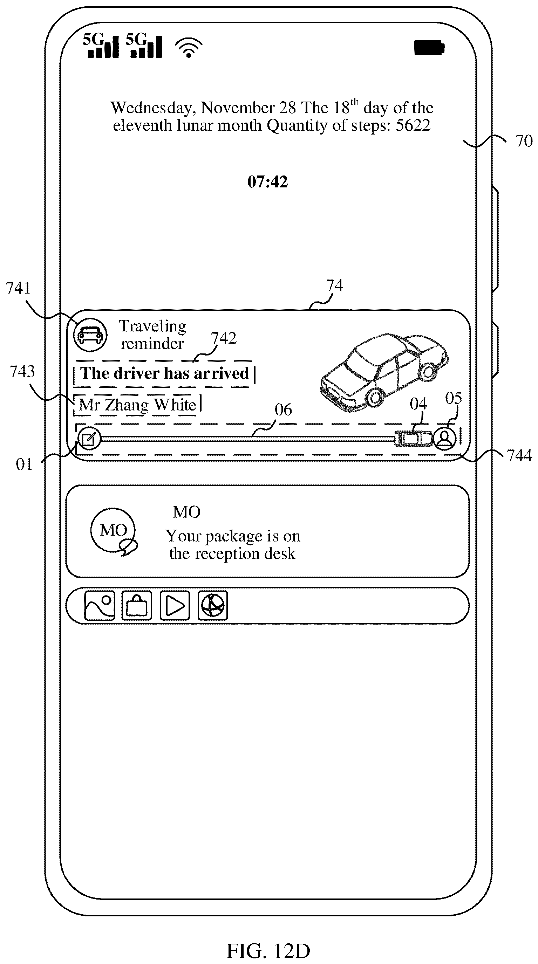

Then, when the driver arrives at the origin, as shown in FIG. 12D, the electronic device may display a ride-hailing application card 74 on the locked screen interface 70. The ride-hailing application card 74 may include an icon 741 of the ride-hailing application, the text 742 that "the driver has arrived", and the text 743 of "Mr Zhang and white". With reference to FIG. 12D, the ride-hailing application card 74 may further include a first progress bar 744. The first progress bar 744 may include a first identifier 01, a third identifier 05, a first connecting line 06 between the first identifier 01 and the third identifier 05, and a vehicle identifier 04. Compared with the first progress bar 734 shown in FIG. 12C, the vehicle identifier 04 on the first progress bar 744 moves to a location of the third identifier 05. That is, a change of a distance between the vehicle identifier 04 and the third identifier 05 on the first progress bar 734 serves as a prompt that the driver arrives at the origin, and waits for the user to get on the vehicle.

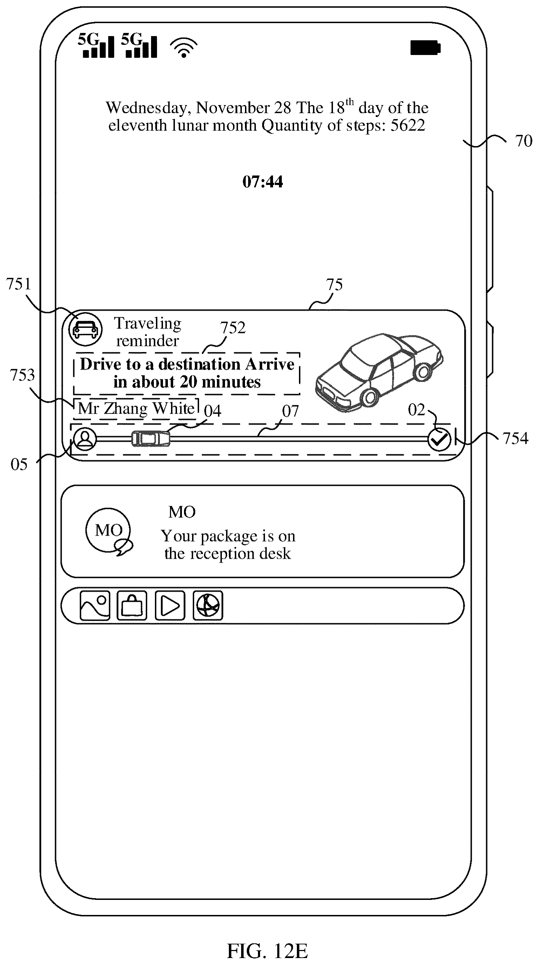

Then, when the driver picks up the user and drives to the destination, as shown in FIG. 12E, the electronic device may display a ride-hailing application card 75 on the locked screen interface 70. The ride-hailing application card 75 may include an icon 751 of the ride-hailing application, text 752 of "driving to the destination and arriving in about 20 minutes", and text 753 of "Mr Zhang and white". With reference to FIG. 12E, the ride-hailing application card 75 may further include a second progress bar 754. The second progress bar 754 may include a third identifier 05, a second identifier 02, a second connecting line 07 between the third identifier 05 and the second identifier 02, and a vehicle identifier 04 located on the second connecting line 07 between the third identifier 05 and the second identifier 02. Compared with the ride-hailing application card 74 shown in FIG. 12D, a progress bar of the ride-hailing application card 75 is updated to a second progress bar 754, and the second progress bar is used to indicate that the order receiving vehicle is driving to the destination from the origin of the user. In other words, updating the progress bar in the ride-hailing application card 75 to the second progress bar 74, and displaying the vehicle identifier 04 on the second progress bar 74 may serve as a prompt that the driver has picked up the user and is about to drive to the destination.

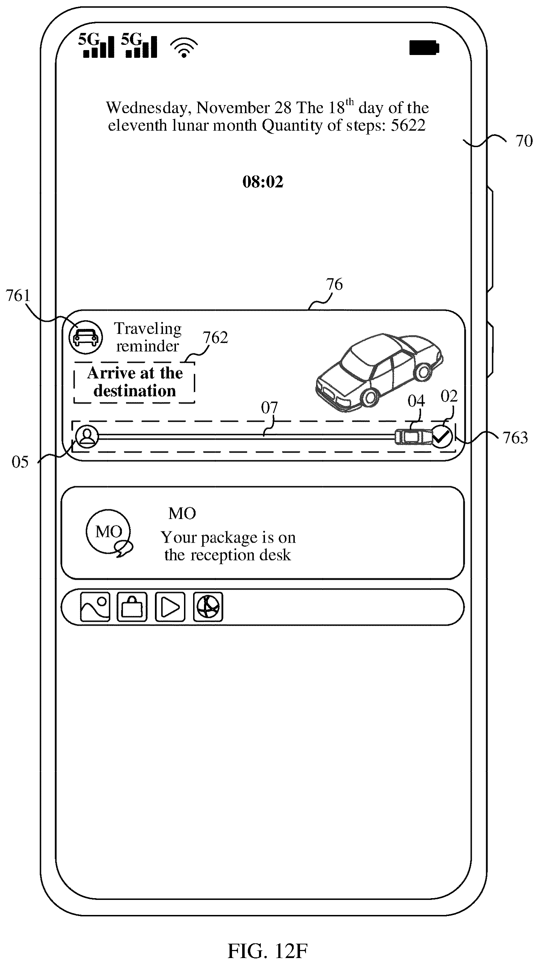

Then, when the ride-hailing application monitors that the user arrives at the destination, as shown in FIG. 12F, the electronic device may display a ride-hailing application card 76 on the locked screen interface 70. The ride-hailing application card 76 may include an icon 761 of the ride-hailing application and text 762 of "arriving at the destination". With reference to FIG. 12F, the ride-hailing application card 76 may further include a second progress bar 763. The second progress bar 763 may include a third identifier 05, a second identifier 02, a second connecting line 07 between the third identifier 05 and the second identifier 02, and a vehicle identifier 04 located on the second connecting line 07 between the third identifier 05 and the second identifier 02. Compared with the ride-hailing application card 75 shown in FIG. 12E, the vehicle identifier 04 on the second progress bar 763 of the ride-hailing application card 76 moves to a location of the second identifier 02, which serves as a prompt that the order receiving vehicle has arrived at the destination and the ride-hailing order is completed.

In other words, when a service of the ride-hailing application is changed (for example, a processing progress of the ride-hailing order changes), the progress bar included in the ride-hailing application card displayed on the locked screen interface of the electronic device is synchronously updated.

In this example, the ride-hailing application running in the electronic device may generate a card view including the progress bar, and send an embedded window layer corresponding to the card view including the progress bar to the host application, so that the host application of the electronic device may display the embedded window layer corresponding to the card view including the progress bar. That is, the host application of the electronic device may display the ride-hailing application card including the progress bar. Further, the processing progress of the ride-hailing order may be more directly and effectively displayed to the user through the progress bar, so that a display effect is better. In addition, the progress bar is updated in real time according to the processing progress of the ride-hailing order, so that timeliness of notification information of the ride-hailing application can be ensured, and user experience is better.

In some examples, when displaying a card corresponding to another application, the electronic device may also display the card including the progress bar. The foregoing segmentation progress bar is described by using an example of the takeaway application card displayed on the locked screen of the electronic device.

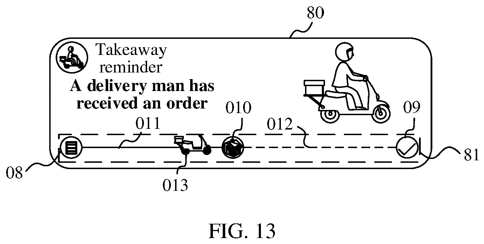

As shown in FIG. 13, the takeaway application card 80 may include a segmentation progress bar 81. The segmentation progress bar 81 may be used to prompt a user of a processing progress of a takeaway order. The segmentation progress bar 81 may include a fourth identifier 08, a fifth identifier 09, and a sixth identifier 010. The fourth identifier 08 may be used to represent a starting point (namely, a location of a delivery man when the delivery man receives an order). That is, the fourth identifier 08 may be used to indicate that execution of the takeaway order starts. The fifth identifier 09 may be used to represent a location of a user who places the takeaway order. That is, the fifth identifier 09 may be used to indicate that execution of the takeaway order is completed. The sixth identifier 010 may be used to indicate a location of a merchant corresponding to the takeaway order. The sixth identifier 010 is located between the fourth identifier 08 and the fifth identifier 09. The sixth identifier 010 may divide a connecting line between the fourth identifier 08 and the fifth identifier 09 into two segments. That is, the sixth identifier 010 may divide a processing process of the takeaway order into two stages. In other words, a third connecting line 011 is between the fourth identifier 08 and the sixth identifier 010. The third connecting line 011 may be used to indicate a distance that the delivery man moves from a starting point to a location of the merchant. That is, the third connecting line 011 may be used to indicate a stage at which the merchant receives the order. A fourth connecting line 012 is between the sixth identifier 010 and the fifth identifier 09. The fourth connecting line 012 may be used to indicate a distance that the delivery man moves from the location of the merchant to the location of the user. That is, the fourth connecting line 012 may be used to indicate a stage at which the delivery man does delivery. As shown in FIG. 13, the segmentation progress bar 81 may further include a delivery man identifier 013. When the delivery man identifier 013 is located on the third connecting line 011, it indicates that the delivery man is moving from the starting point to the location of the merchant. That is, the takeaway order is at a stage at which the merchant receives the order. When the delivery man identifier 013 is located on the fourth connecting line 012, it indicates that the delivery man is moving from the location of the merchant to the location of the user. That is, the takeaway order is at a stage at which the delivery man does delivery.

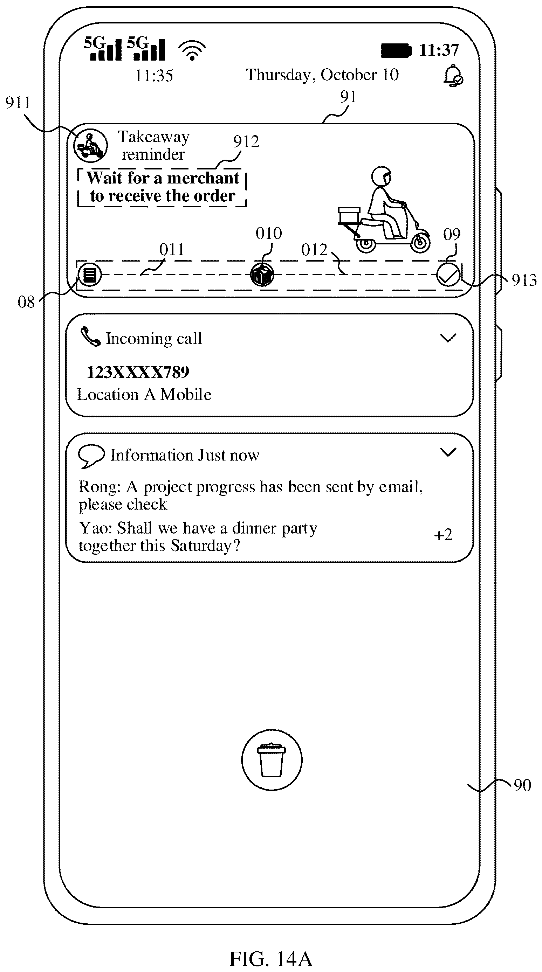

With reference to FIG. 14A to FIG. 14E, the following describes a card display process in the embodiments of this application by using an example in which an application providing a card is the takeaway application, a host application is a notification center, and a takeaway application card includes a segmentation progress bar.

After the user places the takeaway order by using the takeaway application of the electronic device, when the takeaway application of the electronic device monitors that the delivery man has not received the order, as shown in FIG. 14A, the electronic device may display a takeaway application card 91 in a notification center 90. The takeaway application card 91 may include an icon 911 of the takeaway application and text 912 of "waiting for a merchant to receive the order". With reference to FIG. 14A, the takeaway application card 91 may further include a segmentation progress bar 913. The segmentation progress bar 913 may include a fourth identifier 08, a fifth identifier 09, and a sixth identifier 010 located between the fourth identifier 08 and the fifth identifier 09. The fourth identifier 08 may be used to represent a starting point (namely, a location of a delivery man when the delivery man receives an order). That is, the fourth identifier 08 may be used to indicate that execution of the takeaway order starts. The fifth identifier 09 may be used to represent a location of a user who places the takeaway order. That is, the fifth identifier 09 may be used to indicate that execution of the takeaway order is completed. The sixth identifier 010 may be used to indicate a location of a merchant corresponding to the takeaway order. With reference to FIG. 14A, the segmentation progress bar 913 further includes a third connecting line 011 between the fourth identifier 08 and the sixth identifier 010, and a fourth connecting line 012 between the sixth identifier 010 and the fifth identifier 09. In this case, both the third connecting line 011 and the fourth connecting line 012 are dashed lines, to prompt the user that the merchant has not received the order.

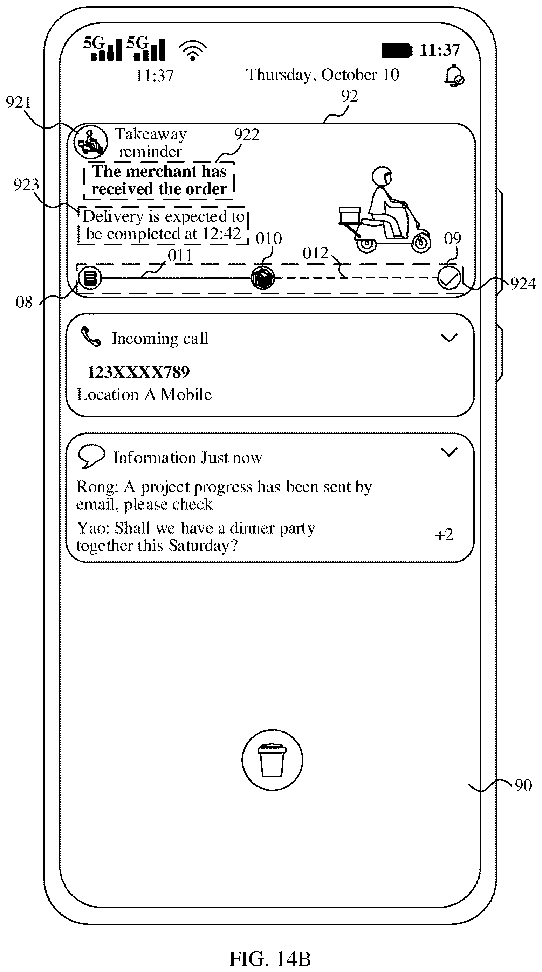

Then, when the takeaway application of the electronic device monitors that the merchant has received the order, as shown in FIG. 14B, the electronic device may display a takeaway application card 92 in the notification center 90. The takeaway application card 92 may include an icon 921 of the takeaway application, text 922 that "the merchant has received the order", and text 923 that "delivery is expected to be completed at 12:42". With reference to FIG. 14B, the takeaway application card 92 may further include a segmentation progress bar 924. The segmentation progress bar 924 may include a fourth identifier 08, a fifth identifier 09, and a sixth identifier 010 located between the fourth identifier 08 and the fifth identifier 09. The segmentation progress bar 924 further includes a third connecting line 011 between the fourth identifier 08 and the sixth identifier 010, and a fourth connecting line 012 between the sixth identifier 010 and the fifth identifier 09. Compared with the segmentation progress bar 913 shown in FIG. 14A, the third connecting line 011 is a solid line, and the fourth connecting line 012 is a dashed line. That is, updating a line shape of the third connecting line 011 from the dashed line to the solid line may serve as a prompt that the merchant has received the order and is preparing the takeaway, and a delivery man is waited for to receive the order.

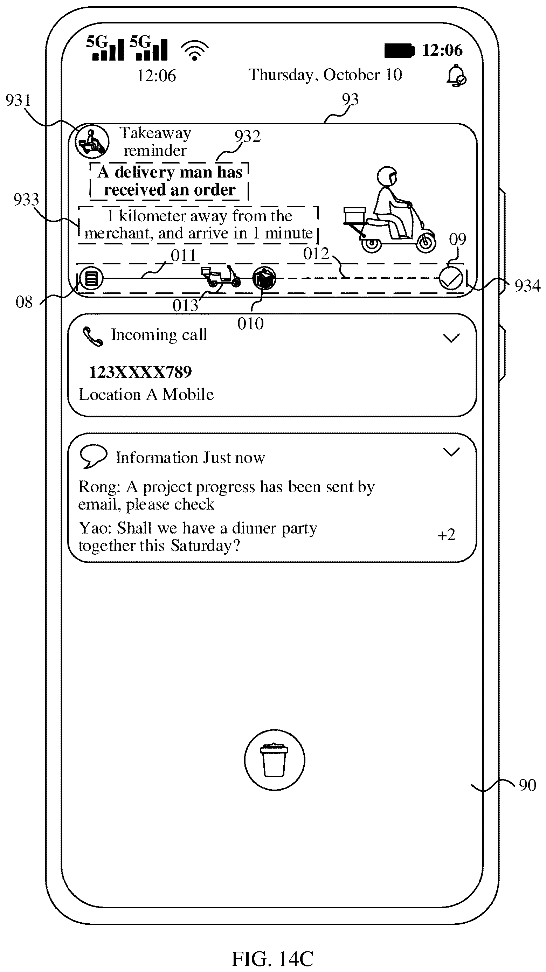

Then, when the delivery man receives the order and is heading to the merchant to pick up the takeaway, as shown in FIG. 14C, the electronic device may display a takeaway application card 93 in the notification center 90. The takeaway application card 93 may include an icon 931 of the takeaway application, text 932 that "the delivery man has received the order", and text 933 of "1 kilometer away from the merchant and arriving in 1 minute". With reference to FIG. 14C, the takeaway application card 93 may further include a segmentation progress bar 934. The segmentation progress bar 934 may include a fourth identifier 08, a fifth identifier 09, and a sixth identifier 010 located between the fourth identifier 08 and the fifth identifier 09. The segmentation progress bar 934 may further include a third connecting line 011 between the fourth identifier 08 and the sixth identifier 010, and a fourth connecting line 012 between the sixth identifier 010 and the fifth identifier 09. Compared with the segmentation progress bar 924 shown in FIG. 14B, the segmentation progress bar 934 may further include a delivery man identifier 013 displayed on the third connecting line 011. That is, the delivery man identifier 013 displayed on the third connecting line 011 on the segmentation progress bar 934 may serve as a prompt that the delivery man has received the order, and is heading to the merchant to pick up the takeaway.

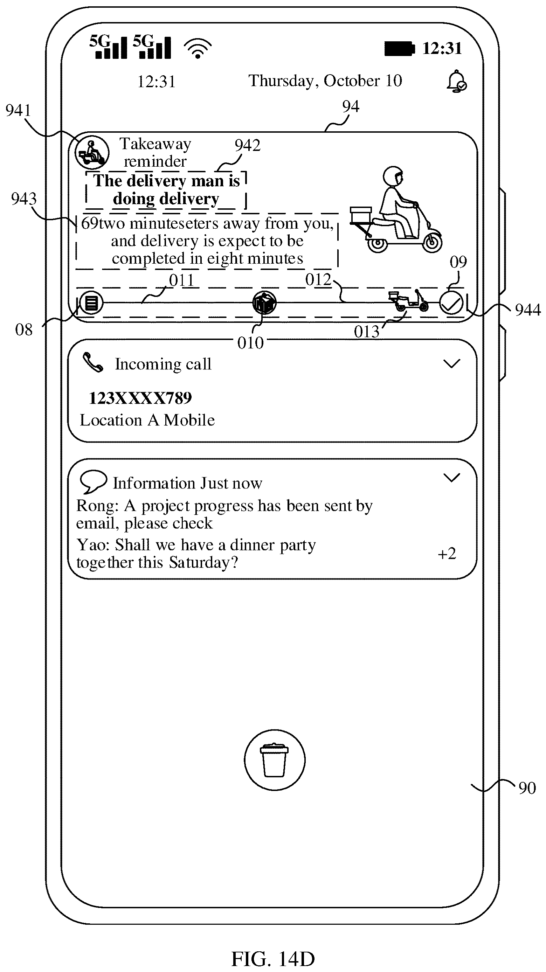

Then, when the delivery man picks up the takeaway from the merchant and delivers the takeaway to the user, as shown in FIG. 14D, the electronic device may display a takeaway application card 94 in the notification center 90. The takeaway application card 94 may include an icon 941 of the takeaway application, text 942 that "the delivery man is doing delivery", and text 943 that "602 meters away from you and delivery is estimated to be completed in eight minutes". With reference to FIG. 14D, the takeaway application card 94 may further include a segmentation progress bar 944. The segmentation progress bar 944 may include a fourth identifier 08, a fifth identifier 09, and a sixth identifier 010 located between the fourth identifier 08 and the fifth identifier 09. The segmentation progress bar 944 further includes a third connecting line 011 between the fourth identifier 08 and the sixth identifier 010, a fourth connecting line 012 between the sixth identifier 010 and the fifth identifier 09, and a delivery man identifier 013. Compared with the segmentation progress bar 934 shown in FIG. 14C, both the third connecting line 011 and the fourth connecting line 012 are solid lines, and the delivery man identifier 013 is located on the fourth connecting line 012, which indicates that the delivery man has picked up the takeaway from the merchant, and the delivery man is heading from the location of the merchant to the location of the user. That is, updating a line type of the fourth connecting line 012 from a dashed line to a solid line, and displaying the delivery man identifier 013 on the fourth connecting line 012 may serve as a prompt that the delivery man has picked up the takeaway from the merchant and is delivering the takeaway to the user.

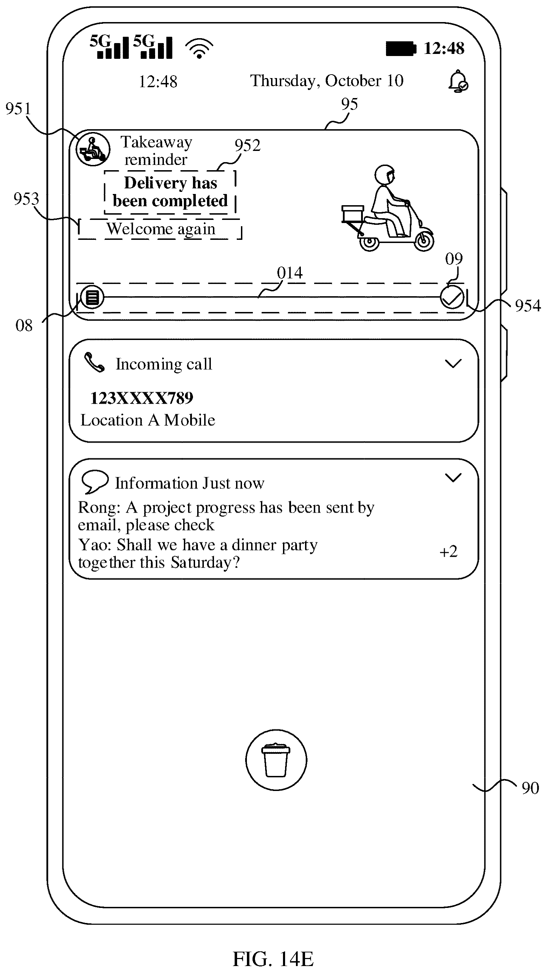

Then, when the delivery man delivers the takeaway to a destination, as shown in FIG. 14E, the electronic device may display a takeaway application card 95 in the notification center 90. The takeaway application card 95 may include an icon 951 of the takeaway application, text 952 that "delivery has been completed", and text 953 that "welcome again". With reference to FIG. 14E, the takeaway application card 95 may further include a segmentation progress bar 954. Compared with the segmentation progress bar 944 shown in FIG. 14D, the segmentation progress bar 954 may include the fourth identifier 08 and the fifth identifier 09, and does not include the sixth identifier. In addition, the segmentation progress bar 954 may further include a connecting line 014 between the fourth identifier 08 and the fifth identifier 09, and the connecting line 014 between the fourth identifier 08 and the fifth identifier 09 is a solid line. That is, canceling display of the sixth identifier and the delivery man identifier on the segmentation progress bar 954, and displaying the connecting line 014 between the fourth identifier 08 and the fifth identifier 09 may serve as a prompt that the takeaway has been delivered and the takeaway order has been completed.

In other words, when a service of the takeaway application changes (a processing progress of the takeaway order changes), the segmentation progress bar included in the takeaway application card displayed in the notification center of the electronic device is synchronously updated.

In this example, the takeaway application running in the electronic device may generate a card view including the segmentation progress bar, and send an embedded window layer corresponding to the card view including the segmentation progress bar to the host application, so that the host application of the electronic device may display the embedded window layer corresponding to the card view including the segmentation progress bar. That is, the host application of the electronic device may display the takeaway application card including the segmentation progress bar. Further, the processing progress of the takeaway order may be more directly and effectively displayed to the user through the segmentation progress bar, so that a display effect is better. In addition, the segmentation progress bar is updated in real time according to the processing progress of the takeaway order, so that timeliness of notification information of the takeaway application can be ensured, and user experience is better.

It should be noted that, when the host application of the electronic device displays the card, the host application running in the foreground of the electronic device may change. For different host applications, content to be displayed on an interface of the electronic device is different. Therefore, a suitable card may be displayed according to display content of the host application. In other words, when different host applications display cards corresponding to the application providing the card, card display manners corresponding to the application providing the card are different. A card display manner corresponding to the application providing the card may include at least one of display content, a display size, or a display location.

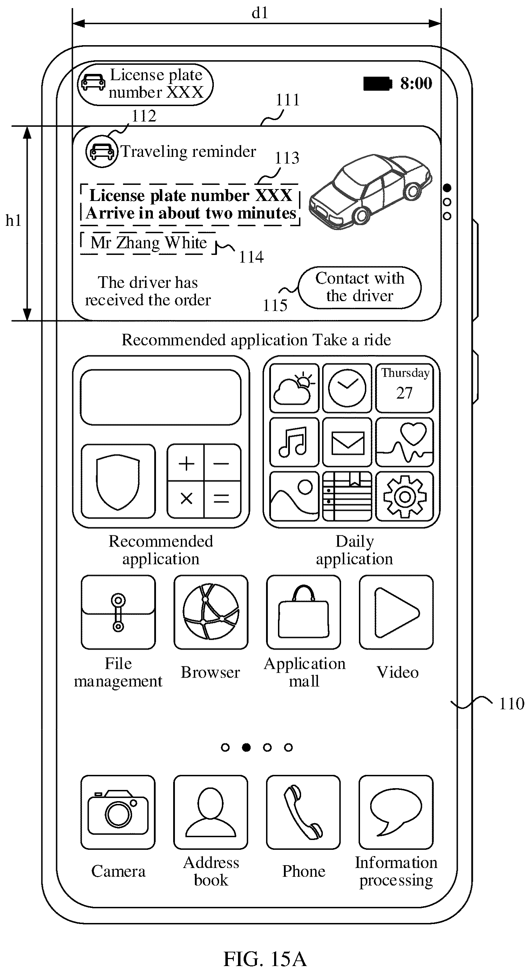

With reference to FIG. 15A to FIG. 15D, an example in which the application providing the card is the ride-hailing application is used to provide descriptions about the card display process in the embodiments of this application below.

When needing to take a ride, the user may place a ride-hailing order by using a ride-hailing application of the electronic device. Then, when the electronic device displays a desktop, and when a service of the ride-hailing application is changed (for example, a driver receives the order), as shown in FIG. 15A, a ride-hailing application card 111 may be displayed at the top of the desktop 110 of the electronic device. The ride-hailing application card 111 may be used to serve as a prompt that the driver has received the order. With reference to FIG. 15A, the ride-hailing application card 111 may include an icon 112 of the ride-hailing application, text 113 of "license plate number XXX and arriving in two minutes", and text 114 of "Mr Zhang and white". The ride-hailing application card 111 may further include a call control 115, and the call control 115 may be configured to contact an order receiving driver. A display height of the ride-hailing application card 111 is h1, and a display width of the ride-hailing application card 111 is d1.

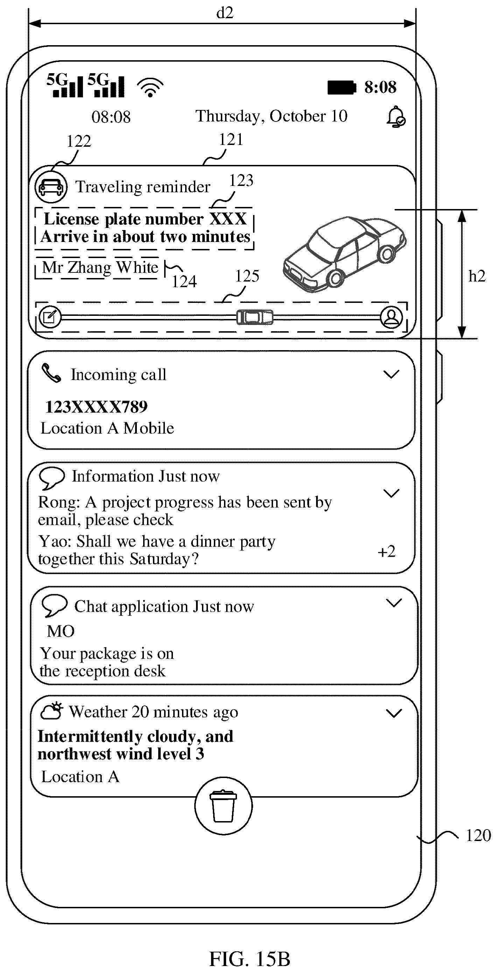

After the desktop 110 of the electronic device displays the ride-hailing application card 111, when the electronic device receives a swiping-down operation of the user on a top status bar of a display screen, in response, as shown in FIG. 15B, the electronic device displays a notification center 120, and displays a ride-hailing application card 121 in the notification center 120. With reference to FIG. 15B, the ride-hailing application card 121 may include an icon 122 of the ride-hailing application, text 123 of "license plate number XXX and arriving in two minutes", and text 124 of "Mr Zhang and white". Compared with the ride-hailing application card 111 shown in FIG. 15A, the ride-hailing application card 121 may further include a progress bar 125. The progress bar 125 may more intuitively prompt the user of a processing progress of the ride-hailing order. In addition, a display height of the ride-hailing application card 121 is h2, and a display width of the ride-hailing application card 121 is d2. The display height h2 of the ride-hailing application card 121 is less than the display height h1 of the ride-hailing application card 111. The display width d2 of the ride-hailing application card 121 may be equal to the display width d1 of the ride-hailing application card 111. It can be learned that, when the host application running in the foreground of the electronic device is switched from the desktop to the notification center, a display size of the ride-hailing application card can be reduced, and a space occupied by the ride-hailing application card can be reduced, so that the electronic device can display more other notification information cards, and further, the user can view more notification information cards without a viewing operation, so that man-machine interaction efficiency can be improved.

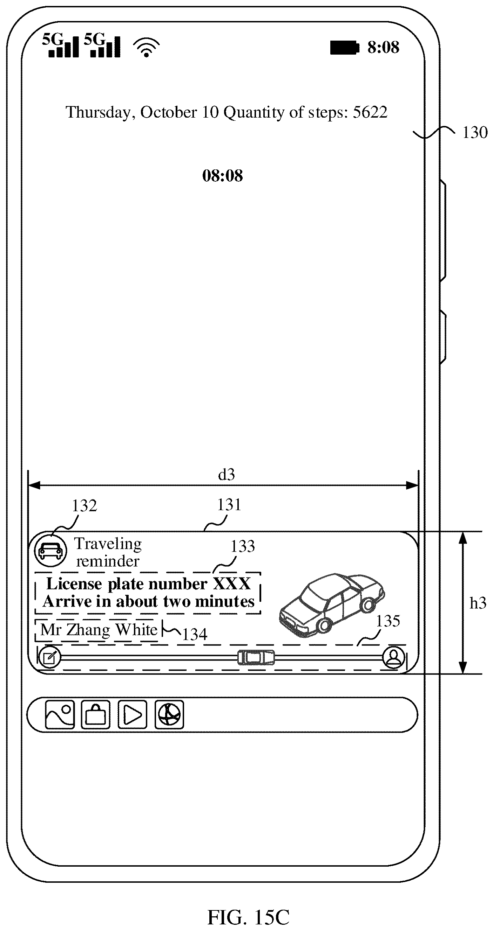

After the desktop 110 of the electronic device displays the ride-hailing application card 111, when the electronic device receives a screen locking operation (for example, pressing a screen locking key) of the user, the electronic device enters a screen locking state. When the electronic device is in the screen locking state, in response to a touch operation of the user on the display screen of the electronic device, as shown in FIG. 15C, the electronic device displays a locked screen interface 130, and displays a ride-hailing application card 131 on the locked screen interface 130. With reference to FIG. 15C, the ride-hailing application card 131 may include an icon 132 of the ride-hailing application, text 133 of "license plate number XXX and arriving in two minutes", and text 134 of "Mr Zhang and white". Compared with the ride-hailing application card 111 shown in FIG. 15A and the ride-hailing application card 121 shown in FIG. 15B, the ride-hailing application card 131 may further include a progress bar 135. The progress bar 135 may more intuitively prompt the user of a processing progress of the ride-hailing order. In addition, a display height of the ride-hailing application card 131 is h3, and a display width of the ride-hailing application card 131 is d3. The display height h3 of the ride-hailing application card 131 is less than the display height h2 of the ride-hailing application card 121. The display width d3 of the ride-hailing application card 131 may be equal to the display width d1 of the ride-hailing application card 111. In addition, the ride-hailing application card 131 is located on a lower side of the locked screen interface 130, and the ride-hailing application card 111 is located on the top of the desktop 110. That is, a display location of the ride-hailing application card 131 is different from a display location of the ride-hailing application card 111. It can be learned that, when the host application running in the foreground of the electronic device is switched from the desktop to the locked screen, a display size of the ride-hailing application card can be reduced, and a space occupied by the ride-hailing application card can be reduced, so that the electronic device can display more other notification information cards, and further, the user can view more notification information cards without a viewing operation, so that man-machine interaction efficiency can be improved.

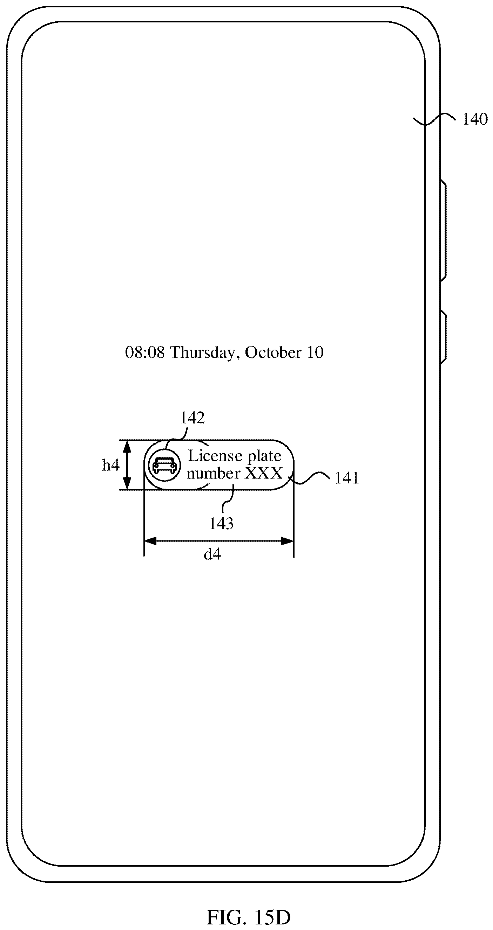

After the desktop 110 of the electronic device displays the ride-hailing application card 111, when the electronic device receives a screen locking operation (for example, pressing a screen locking key) of the user, as shown in FIG. 15D, the electronic device displays an off screen (always on display, AOD) interface 140, and displays a ride-hailing application card 141 on the off screen interface 140. Compared with the ride-hailing application card 111 shown in FIG. 15A, the ride-hailing application card 141 is a card capsule. After the electronic device receives a touch operation (for example, a swiping operation) of the user on the ride-hailing application card 141 (namely, the card capsule), the electronic device opens the ride-hailing application. In addition, because a space of the off screen interface of the electronic device is limited, a display height h4 of the ride-hailing application card 141 (namely, the card capsule) is less than a display height h1 of the ride-hailing application card 111, and a display width d3 of the ride-hailing application card 141 (namely, the card capsule) is less than a display width d1 of the ride-hailing application card 111. In this way, when the host application running in the foreground of the electronic device is switched to the off screen, a space occupied by the ride-hailing application card can be maximally reduced, to avoid a case in which the ride-hailing application card cannot be fully displayed. In addition, as shown in FIG. 15D, because a display size of the ride-hailing application card 141 (namely, the card capsule) is relatively small, the ride-hailing application card 141 (namely, the card capsule) may include some related information (such as an icon 142 of the ride-hailing application and text 143 of "license plate number XXX") of the ride-hailing order. In this way, the user can learn of some information of the ride-hailing application without opening the ride-hailing application, so that use is more convenient.

In this example, when the host application of the electronic device displays a card, card display manners may be different for different host applications, which can ensure that cards displayed in different host applications all have a good display effect. In addition, for content to be displayed in different host applications and a use habit of the user, content information carried in a card may be set with priorities, to notify the user, and further improve man-machine interaction efficiency, thereby improving user experience.

Methods in the following embodiments may all be implemented in the electronic device having the foregoing hardware structure or software structure.

After the electronic device is powered on, the host application (the desktop, the leftmost screen, the notification center, the banner notification, the off screen, the locked screen, and the like) registers a service change of the ride-hailing application (not shown in the figure). Therefore, when the service change of the ride-hailing application occurs, the electronic device may generate a card view of a ride-hailing application card corresponding to each of all host applications that register the service change of the ride-hailing application, and when a host application runs in the foreground of the electronic device, the electronic device may display the card view of the ride-hailing application card corresponding to the host application, that is, display the ride-hailing application card corresponding to the host application.

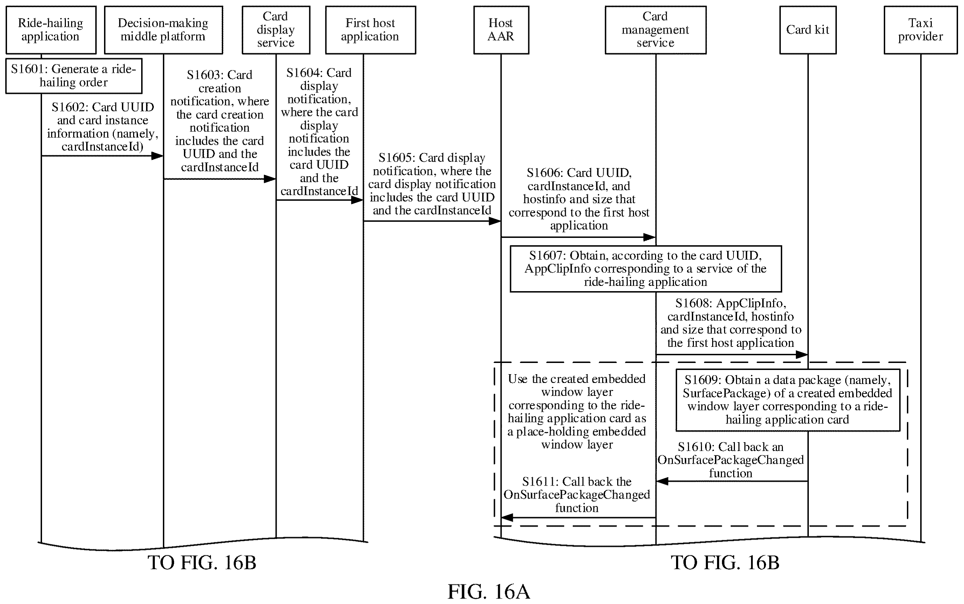

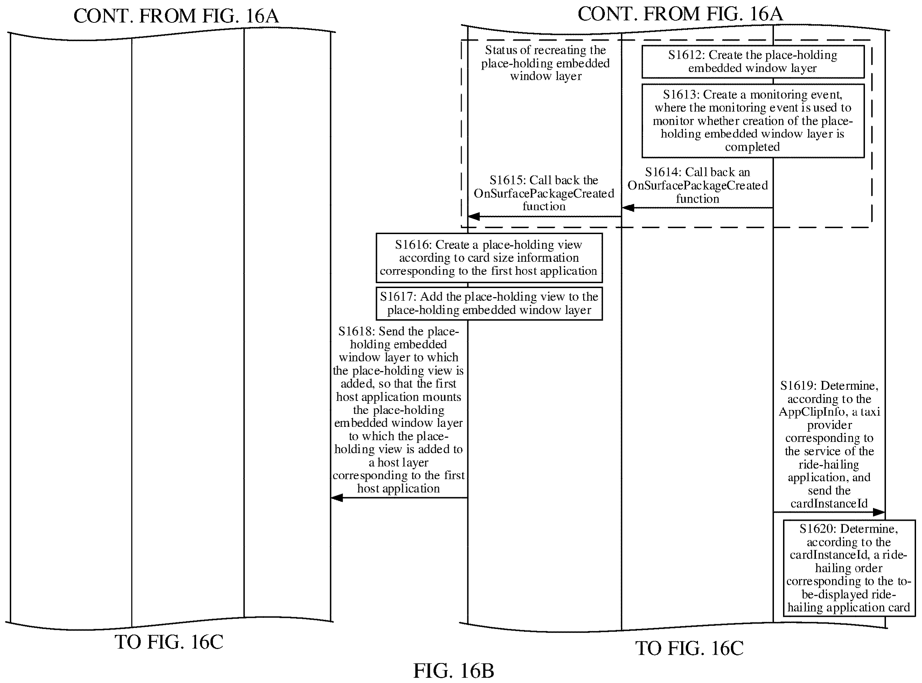

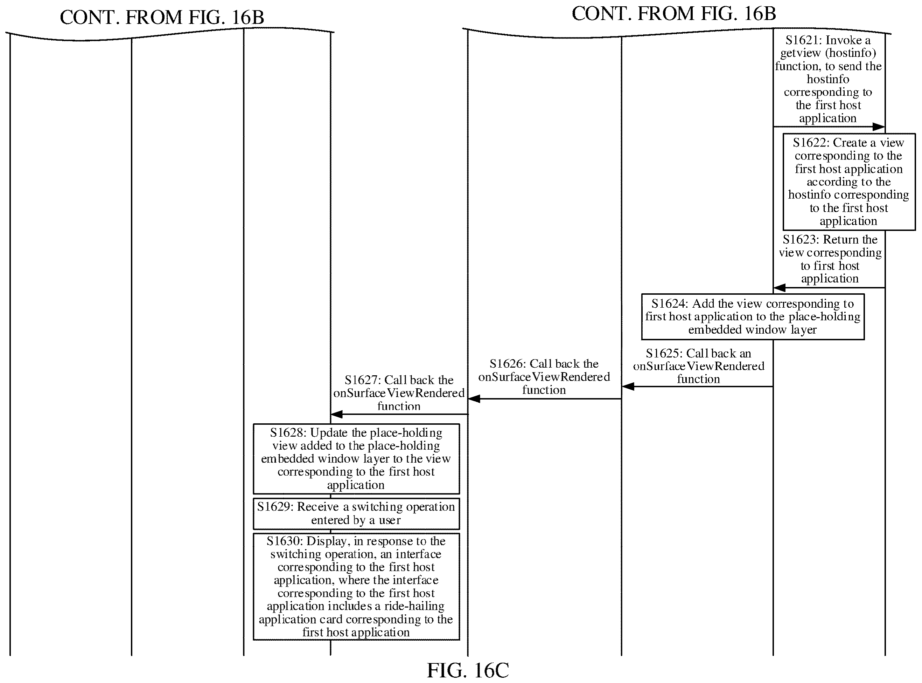

A card display method provided in the embodiments of this application is described in detail below with reference to FIG. 16A to FIG. 16C by using an example in which an application provided by a card is the ride-hailing application, and the host application is a first host application. FIG. 16A to FIG. 16C are schematic flowcharts of a card display method according to an embodiment of this application. As shown in FIG. 16A to FIG. 16C, the card display method may include S1601 to S1630.

S1601: A ride-hailing application generates a ride-hailing order.

In some examples, a ride-hailing application of an electronic device may receive an order placing operation of a user, and in response to the order placing operation, the ride-hailing application of the electronic device generates the ride-hailing order. Specifically, when the user places the ride-hailing order by using the ride-hailing application of the electronic device, the user may start the ride-hailing application of the electronic device, and perform a corresponding order placing operation on the ride-hailing application. That is, the ride-hailing application of the electronic device may receive the order placing operation of the user. Then, the ride-hailing application of the electronic device generates the ride-hailing order in response to the order placing operation of the user.

The order placing operation may include one operation, or may include a plurality of operations.

For example, when the order placing operation includes the plurality of operations, the order placing operation may include an operation of entering related information of the ride-hailing order and an operation of triggering generation of the ride-hailing order. For example, the operation of entering the related information of the ride-hailing order may include an operation of entering origin information, destination information, departure time information, and vehicle type information. The operation of triggering generation of the ride-hailing order may be a tapping operation on an order placing control. For example, the order placing control may be the call control 39 shown in (b) in FIG. 8.

S1602: The ride-hailing application sends a card UUID and card instance information to a decision-making middle platform.

After the ride-hailing application generates the ride-hailing order, the ride-hailing application may generate the card instance information (namely, cardInstanceId) corresponding to the ride-hailing order. After the ride-hailing application of the electronic device generates the cardInstanceId corresponding to the ride-hailing order, the ride-hailing application may send the cardInstanceId corresponding to the ride-hailing order to the decision-making middle platform.

The card instance information may be used to indicate the ride-hailing order generated by the ride-hailing application, that is, one piece of unique card instance information is correspondingly generated for one ride-hailing order.

For example, when a user places two ride-hailing orders (such as an order A and an order B) by using the ride-hailing application, card instance information 1 corresponding to the order A may be generated, and card instance information 2 corresponding to the order B may be generated. When a processing progress of the order A changes, the ride-hailing application may determine, according to the card instance information 1, that a ride-hailing application card to be displayed by the electronic device is a ride-hailing application card corresponding to the order A. When a processing progress of the order B changes, the ride-hailing application may determine, according to the card instance information 2, that a ride-hailing application card to be displayed by the electronic device is a ride-hailing application card corresponding to the order B.

In addition, after the ride-hailing application of the electronic device generates the ride-hailing order, when a processing progress of the ride-hailing order changes (for example, a driver receives the order), the ride-hailing application may generate the card UUID, and send the card UUID to the decision-making middle platform of the electronic device, to notify the decision-making middle platform that a ride-hailing application card (namely, a card corresponding to notification information of the ride-hailing application) corresponding to the card UUID currently needs to be displayed.

The card UUID may be used to uniquely identify a group of cards corresponding to a service of the ride-hailing application (namely, the processing progress of the ride-hailing order). In other words, when the processing progress of the ride-hailing order changes, the ride-hailing application sends the card UUID to the decision-making middle platform.

Specifically, when the host application of the electronic device displays the card, a host application running in the foreground of the electronic device may change. For different host applications, content to be displayed on an interface of the electronic device is different. In other words, for a same service (for example, the driver receives the order) of the ride-hailing application, different host applications of the electronic device display different ride-hailing application cards. Therefore, the card UUID may be used to uniquely identify a group of cards corresponding to one service of the ride-hailing application. That is, a desktop of the electronic device corresponds to a ride-hailing application card, a locked screen of the electronic device corresponds to a ride-hailing application card, a notification center of the electronic device corresponds to a ride-hailing application card, a banner notification (or referred to as a status bar) of the electronic device corresponds to a ride-hailing application card, an off screen of the electronic device corresponds to a ride-hailing application card, and a leftmost screen of the electronic device corresponds to a ride-hailing application card.

For example, after the ride-hailing application of the electronic device generates the ride-hailing order, the ride-hailing application of the electronic device issues a ride-hailing task and waits for a driver to receive the order. After the driver receives the order, the ride-hailing application may generate a card UUID (for example, a8146578-c7b1-4a19-92eb-f91ae4542779) used to identify a group of cards indicating that the driver has received the order, and send the card UUID to the decision-making middle platform of the electronic device, to notify the decision-making middle platform that a card indicating that the driver has received the order currently needs to be displayed.

S1603: The decision-making middle platform sends a card creation notification to a card display service, where the card creation notification includes the card UUID and the cardInstanceId, and the card creation notification is used to indicate the card display service to create the ride-hailing application card.

After the decision-making middle platform of the electronic device receives the card UUID sent by the ride-hailing application, the decision-making middle platform may obtain, according to the card UUID, AppClipInfo (such as a package name of the ride-hailing application) corresponding to the service of the ride-hailing application. The decision-making middle platform may determine, according to the AppClipInfo, whether the ride-hailing application has a card display permission. For example, the decision-making middle platform may compare the package name of the ride-hailing application with a whitelist stored in the electronic device. When the package name of the ride-hailing application is in the whitelist stored in the electronic device, it is determined that the ride-hailing application has the card display permission. After the decision-making middle platform determines that the ride-hailing application has the card display permission, the decision-making middle platform may determine that the ride-hailing application is an application meeting an emergency condition, and further, the decision-making middle platform may send the card creation notification to the card display service, to notify the card display service to create the ride-hailing application card (namely, the card corresponding to the notification information of the ride-hailing application).

It should be noted that, the application meeting the emergency condition may be a preset application. The preset application may include an application related to time information (such as a ride-hailing application, a takeaway application, a map application, or an express application), an application related to property information (such as a payment application), an application related to property information (such as a payment application or a financial application), or an application related to personal safety information (such as a motion monitoring application or an emergency call application).

S1604: The card display service sends a card display notification to a first host application of the electronic device, where the card display notification may include the card UUID and the cardInstanceId, and the card display notification is used to notify the first host application of the electronic device to display the ride-hailing application card.

The card UUID may be obtained from the ride-hailing application. Specifically, after the ride-hailing application of the electronic device generates the ride-hailing order, when the processing progress of the ride-hailing order changes, the ride-hailing application generates and sends the card UUID to the decision-making middle platform of the electronic device. After receiving the card UUID, the decision-making middle platform sends the card creation notification carrying the card UUID to the card display service of the electronic device.

The cardInstanceId may be obtained from the ride-hailing application. Specifically, after the ride-hailing application of the electronic device generates the ride-hailing order, the ride-hailing application generates the cardInstanceId corresponding to the ride-hailing order. After the ride-hailing application of the electronic device generates the cardInstanceId corresponding to the ride-hailing order, the ride-hailing application may send the cardInstanceId corresponding to the ride-hailing order to the decision-making middle platform. After the decision-making middle platform receives the cardInstanceId, the decision-making middle platform may send the card creation notification carrying the cardInstanceId to the card display service of the electronic device, so that the card display service may send the card display notification carrying the cardInstanceId to the first host application of the electronic device.

In an example, after the electronic device is powered on, the host application (the desktop, the leftmost screen, the notification center, the banner notification, the off screen, the locked screen, and the like) may register a service change of the ride-hailing application (not shown in the figure). When the service change of the ride-hailing application occurs, the card display service sends the card display notification to these host applications, to notify each host application of the electronic device that the ride-hailing application card currently needs to be displayed. After each host application of the electronic device receives the card display notification sent by the card display service, each host application of the electronic device may send a card display notification to a host AAR corresponding to the host application, to notify the host AAR corresponding to the host application that the ride-hailing application card currently needs to be displayed.

The foregoing registration process may alternatively be performed at another occasion, for example, an occasion at which the ride-hailing application is installed on the electronic device, or an occasion at which the electronic device updates the ride-hailing application. This is not limited in this application.

In other words, after the card display service of the electronic device receives the card creation notification sent by the decision-making middle platform, the card display service may separately send the card display notification to the foregoing host application that registers the service change of the ride-hailing application. The foregoing host application that registers the service change of the ride-hailing application includes the foregoing first host application. That is, the first host application may be any application of the desktop, the leftmost screen, the notification center, the banner notification, the off screen, or the locked screen. It should be noted that, a specific implementation process in which the card display service sends the card display notification to a plurality of host applications that register the service change of the ride-hailing application may be described by using S 1604 (namely, a specific implementation process in which the card display service sends the card display notification to the first host application) as an example.

S 1605: The first host application sends the card display notification to the host AAR corresponding to the first host application, where the card display notification may include the card UUID and the cardInstanceId.

After the first host application receives the card display notification sent by the card display service, the first host application may send the card display notification to the host AAR corresponding to the first host application, to notify the host AAR corresponding to the first host application that the ride-hailing application card currently needs to be displayed.

It should be noted that, after the card display service of the electronic device receives the card creation notification sent by the decision-making middle platform, the card display service may separately send the card display notification to all the host applications that register the service change of the ride-hailing application. Therefore, after each of all the host applications that register the service change of the ride-hailing application receives the card display notification sent by the card display service, each host application may send the card display notification to the host AAR corresponding to the host application. A specific implementation process in which each host application sends the card display notification to the host AAR corresponding to the host application may be described by using S1605 (namely, a specific implementation process in which the first host application sends the card display notification to the host AAR corresponding to the first host application) as an example.

S 1606: The host AAR corresponding to the first host application sends the card UUID, the cardInstanceId, hostinfo corresponding to the first host application, and a size corresponding to the first host application to the card management service.

After the host AAR corresponding to the first host application receives the card UUID and the cardInstanceId that are sent by the first host application, the host AAR corresponding to the first host application may send the card UUID and the cardInstanceId to the card management service.

Identification information (namely, the hostinfo) corresponding to the first host application and card size information (namely, the size) corresponding to the first host application may be pre-generated by the first host application. For example, after the electronic device is powered on, the first host application may register the service change of the ride-hailing application. After the first host application registers the service change of the ride-hailing application, the first host application may generate the hostinfo corresponding to the first host application and the size corresponding to the first host application, and send, through the host AAR corresponding to the first host application, the hostinfo corresponding to the first host application and the size corresponding to the first host application to the card management service.

Before the hostinfo corresponding to the first host application is described, the hostinfo of the host application is described first.

The hostinfo of the host application may include a host identifier (namely, a host id) corresponding to the host application and a card view identifier (namely, a view id) corresponding to the host application.

The host identifier may be used to uniquely identify the host application of the electronic device, that is, different host applications of the electronic device correspond to different host identifiers.

For example, an example in which the host application of the electronic device includes a desktop, a notification center, a locked screen, an off screen, a leftmost screen, and a banner notification is used. A host id corresponding to the desktop is 1, a host id corresponding to the notification center is 2, a host id corresponding to the locked screen is 3, a host id corresponding to the off screen is 4, a host id corresponding to the leftmost screen is 5, and a host id corresponding to the banner notification is 6.

The card view identifier may uniquely identify a card view (namely, a view) corresponding to a card to be displayed by the host application.

For example, an example in which the host application of the electronic device includes the desktop, the notification center, the locked screen, the off screen, the leftmost screen, and the banner notification is still used. For a same service (for example, the driver receives the order) of the ride-hailing application, a view id of a card view of a ride-hailing application card corresponding to the desktop is 1, a view id of a card view of a ride-hailing application card corresponding to the notification center is 2, a view id of a card view of a ride-hailing application card corresponding to the locked screen is 3, a view id of a card view of a ride-hailing application card corresponding to the off screen is 4, a view id of a card view of a ride-hailing application card corresponding to the leftmost screen is 5, and a view id of a card view of a ride-hailing application card corresponding to the banner notification is 6.

It should be noted that, because different host applications correspond to different card view identifiers of a same ride-hailing application card, when the host application of the electronic device displays the ride-hailing application card, the electronic device may determine, according to the host id corresponding to the host application, the view id corresponding to the host application, and may further obtain the card view of the ride-hailing application card from the ride-hailing application according to the view id corresponding to the host application.

The following describes the hostinfo corresponding to the first host application.

The hostinfo of the first host application may include the host id corresponding to the first host application and the view id corresponding to the first host application.

The host id corresponding to the first host application may be used to uniquely identify the first host application. For example, if the first host application is the desktop, the host id corresponding to the first host application is 1. For another example, if the first host application is the notification center, the host id corresponding to the first host application is 2.

The view id corresponding to the first host application is identification information of a card view corresponding to a card to be displayed by the first host application. For example, if the first host application is the desktop, the view id corresponding to the first host application is 1. For another example, if the first host application is the notification center, the view id corresponding to the first host application is 2.

Card size information corresponding to the host application may be size information of a card view corresponding to a card that is allowed to be displayed by the host application, namely, size information of a card view generated by an application (such as the ride-hailing application) providing the card. The card size information corresponding to the host application may include a display height and a display width.

The card size information corresponding to the first host application is the size information of the card view corresponding to the card that is allowed to be displayed by the first host application. For example, if the first host application is the desktop, the card size information corresponding to the first host application may include a display height h1 and a display width d1. For another example, if the first host application is the off screen, the card size information corresponding to the first host application may include a display height h4 and a display width d4. The display height h4 is less than the display height h1, and the display width d4 is less than the display width d1.

It should be noted that, each of the host applications (such as the desktop, the leftmost screen, the notification center, the banner notification, the off screen, and the locked screen) that register the service change of the ride-hailing application may send the card display notification to the host AAR corresponding to the host application. Therefore, after the host AAR corresponding to each host application receives the card display notification, the host AAR corresponding to each host application may send the card UUID, the cardInstanceId, the hostinfo corresponding to the host application, and the size corresponding to the host application to the card management service. A specific implementation process in which each host application sends the card UUID, the cardInstanceId, the hostinfo corresponding to the host application, and the size corresponding to the host application to the card management service may be described by using S1606 (namely, a specific implementation process in which the host AAR corresponding to the first host application sends the card UUID, the cardInstanceId, the hostinfo corresponding to the first host application, and the size corresponding to the first host application to the card management service) as an example.

S1607: The card management service obtains, according to the card UUID, AppClipInfo corresponding to the service of the ride-hailing application.

The AppClipInfo corresponding to the service of the ride-hailing application may include a package name of the ride-hailing application, a class name of a specific implementation corresponding to the service of the ride-hailing application, and the like.

Specifically, after the card management service of the electronic device receives the card UUID sent by the host AAR corresponding to the first host application, the card management service may obtain, through a package manager service (package manager service, PMS) and according to the card UUID, the AppClipInfo corresponding to the service of the ride-hailing application.

Because the card UUID may be used to uniquely identify a group of cards corresponding to the service of the ride-hailing application (namely, the processing progress of the ride-hailing order), the card management service may obtain, according to the card UUID, the AppClipInfo corresponding to the service of the ride-hailing application, and further determine and invoke, according to the AppClipInfo, a card kit corresponding to the ride-hailing application. The card kit corresponding to the ride-hailing application may determine, according to the AppClipInfo, a taxi provider corresponding to the service of the ride-hailing application, so that the card kit corresponding to the ride-hailing application may obtain the card view corresponding to the ride-hailing application card from the taxi provider corresponding to the service of the ride-hailing application.

S1608: The card management service sends the AppClipInfo, the cardInstanceId, the hostinfo corresponding to the first host application, and the size corresponding to the first host application to the card kit corresponding to the ride-hailing application.

After the card management service obtains, according to the card UUID, the AppClipInfo corresponding to the service of the ride-hailing application, the card management service may determine, according to the AppClipInfo corresponding to the service of the ride-hailing application, the card kit corresponding to the ride-hailing application, and send the AppClipInfo corresponding to the service of the ride-hailing application, the cardInstanceId, the hostinfo corresponding to the first host application, and the size corresponding to the first host application to the card kit corresponding to the ride-hailing application.

It should be noted that, each of the host applications (such as the desktop, the leftmost screen, the notification center, the banner notification, the off screen, and the locked screen) that register the service change of the ride-hailing application may send the card UUID, the cardInstanceId, the hostinfo corresponding to the host application, and the size corresponding to the host application to the card management service. Therefore, after the card management service receives the card UUID, the cardInstanceId, the hostinfo corresponding to the host application, and the size corresponding to the host application that are sent by any host application, the card management service may obtain the AppClipInfo according to the card UUID, and after the card management service obtains the AppClipInfo according to the card UUID, the card management service determines to send, according to the AppClipInfo, the AppClipInfo, the cardInstanceId, the hostinfo corresponding to the host application, and the size corresponding to the host application to the card kit corresponding to the ride-hailing application.

In the embodiments of this application, after the card kit corresponding to the ride-hailing application receives the AppClipInfo corresponding to the service of the ride-hailing application, the cardInstanceId, the hostinfo corresponding to the first host application, and the size corresponding to the first host application that are sent by the card management service, the card kit corresponding to the ride-hailing application may determine, according to the AppClipInfo, a taxi provider corresponding to the service of the ride-hailing application, so that the card kit corresponding to the ride-hailing application may obtain the card view corresponding to the ride-hailing application card from the taxi provider corresponding to the service of the ride-hailing application. After the card kit corresponding to the ride-hailing application obtains the card view corresponding to the ride-hailing application card, the card kit corresponding to the ride-hailing application may generate, according to the card view corresponding to the ride-hailing application card, an embedded window layer corresponding to the ride-hailing application card. After the card kit corresponding to the ride-hailing application generates the embedded window layer corresponding to the ride-hailing application card, the card kit corresponding to the ride-hailing application may send the embedded window layer corresponding to the ride-hailing application card to the first host application, so that the first host application displays the embedded window layer corresponding to the ride-hailing application card. That is, the first host application displays the ride-hailing application card.

In some examples, to prevent the first host application of the electronic device from displaying a card of another application in a process in which the card kit corresponding to the ride-hailing application obtains the card view corresponding to the ride-hailing application card from the taxi provider and generates, according to the card view, the embedded window layer corresponding to the ride-hailing application card, before the card kit corresponding to the ride-hailing application obtains the card view corresponding to the ride-hailing application card from the taxi provider, the card kit corresponding to the ride-hailing application may generate the embedded window layer (namely, the place-holding embedded window layer), used for place-holding, to which the card view corresponding to the ride-hailing application card is not added, and send the place-holding embedded window layer to the host AAR corresponding to the first host application, so that the host AAR corresponding to the first host application adds a place-holding view to the place-holding embedded window layer. Further, the host AAR corresponding to the first host application may send the place-holding embedded window layer to which the place-holding view is added to the first host application, so that the first host application may mount the place-holding embedded window layer to which the place-holding view is added to a host layer of the first host application for place-holding.

Specifically, for a specific implementation process in which the card kit corresponding to the ride-hailing application generates the place-holding embedded window layer, refer to S1609 to S1615.

In some examples, when a data package of the created embedded window layer corresponding to the ride-hailing application card exists in a cache of the electronic device, when the card kit corresponding to the ride-hailing application creates the place-holding embedded window layer, the card kit corresponding to the ride-hailing application may obtain status information of the data package (namely, SurfacePackage) of the created embedded window layer corresponding to the ride-hailing application card. When the status information indicates that the data package of the created embedded window layer corresponding to the ride-hailing application card is valid, the card kit corresponding to the ride-hailing application may use the created embedded window layer corresponding to the ride-hailing application card as the place-holding embedded window layer (namely, the embedded window layer, used for place-holding, to which the card view corresponding to the ride-hailing application card is not added).

Specifically, for a specific implementation process in which the card kit corresponding to the ride-hailing application may use the created embedded window layer corresponding to the ride-hailing application card as the place-holding embedded window layer, refer to S1609 to S1611.

When the status information indicates that the data package of the created embedded window layer corresponding to the ride-hailing application card is invalid, the card kit corresponding to the ride-hailing application may create the place-holding embedded window layer (namely, the embedded window layer, used for place-holding, to which the card view corresponding to the ride-hailing application card is not added).

In some examples, when the data package of the created embedded window layer corresponding to the ride-hailing application card does not exist in the cache of the electronic device, the card kit corresponding to the ride-hailing application may create the place-holding embedded window layer.

Specifically, for a specific implementation process in which the card kit corresponding to the ride-hailing application creates the place-holding embedded window layer, refer to S1612 to S1615.

The following describes a specific implementation process in which the card kit corresponding to the ride-hailing application generates the place-holding embedded window layer.

S1609: The card kit corresponding to the ride-hailing application obtains the data package of the created embedded window layer corresponding to the ride-hailing application card.

The card kit corresponding to the ride-hailing application may obtain the data package of the created embedded window layer corresponding to the ride-hailing application card from the cache of the electronic device, and determine the status information of the data package of the created embedded window layer corresponding to the ride-hailing application card.

S1610: When the status information indicates that the data package of the created embedded window layer corresponding to the ride-hailing application card is valid, the card kit corresponding to the ride-hailing application calls back an OnSurfacePackageChanged function.

When the status information indicates that the data package of the created embedded window layer corresponding to the ride-hailing application card is valid, the card kit corresponding to the ride-hailing application may return, by calling back the OnSurfacePackageChanged function, the data package of the created embedded window layer corresponding to the ride-hailing application card to the card management service.

For example, when a return value of the status information of the data package (namely, the SurfacePackage) of the created embedded window layer corresponding to the ride-hailing application card is a first value (for example, 1), the card kit corresponding to the ride-hailing application determines that the data package (namely, the SurfacePackage) of the created embedded window layer corresponding to the ride-hailing application card is valid.

S1611: The card management service calls back the OnSurfacePackageChanged function.

The card management service may return, by calling back the OnSurfacePackageChanged function, the data package of the created embedded window layer corresponding to the ride-hailing application card to the host AAR corresponding to the first host application of the electronic device. After receiving the data package of the created embedded window layer corresponding to the ride-hailing application card, the host AAR corresponding to the first host application may obtain, according to the data package of the created embedded window layer corresponding to the ride-hailing application card, the created embedded window layer corresponding to the ride-hailing application card, and use the created embedded window layer corresponding to the ride-hailing application card as the place-holding embedded window layer. After the place-holding embedded window layer is obtained, the host AAR corresponding to the first host application may add the place-holding view to the place-holding embedded window layer. That is, after S1611, S1616 is performed.

In some examples, when the status information indicates that the data package of the created embedded window layer corresponding to the ride-hailing application card is invalid, the card kit corresponding to the ride-hailing application may create the place-holding embedded window layer, and return the data package of the place-holding embedded window layer to the host AAR corresponding to the first host application, so that the host AAR corresponding to the first host application adds the place-holding view to the place-holding embedded window layer. That is, when the status information indicates that the data package of the created embedded window layer corresponding to the ride-hailing application card is invalid, S1612 to S1615 are performed.

For example, when a return value of the status information of the data package of the created embedded window layer corresponding to the ride-hailing application card is a second value (for example, 0), the card kit corresponding to the ride-hailing application determines that the data package of the created embedded window layer corresponding to the ride-hailing application card is invalid.

S1612: The card kit corresponding to the ride-hailing application creates the place-holding embedded window layer.

S1613: The card kit corresponding to the ride-hailing application creates a monitoring event, where the monitoring event is used to monitor whether creation of the place-holding embedded window layer is completed.

S1614: When creation of the place-holding embedded window layer is completed, the card kit corresponding to the ride-hailing application calls back the OnSurfacePackageCreated function.

When creation of the place-holding embedded window layer is completed, the card kit corresponding to the ride-hailing application may return the data package of the place-holding embedded window layer to the card management service by calling back the OnSurfacePackageCreated function.

S1615: The card management service calls back the OnSurfacePackageCreated function.

The card management service may return, by calling back the OnSurfacePackageCreated function, the data package of the place-holding embedded window layer to the host AAR corresponding to the first host application, so that the host AAR corresponding to the first host application adds the place-holding view to the place-holding embedded window layer.

After the host AAR corresponding to the first host application receives the place-holding embedded window layer sent by the card management service, the host AAR corresponding to the first host application may create the place-holding view, and add the place-holding view to the place-holding embedded window layer. Further, the host AAR corresponding to the first host application may send the place-holding embedded window layer to which the place-holding view is added to the first host application, so that the first host application may mount the place-holding embedded window layer to which the place-holding view is added to the host layer of the first host application for place-holding. Specifically, for a specific implementation process in which the host AAR corresponding to the first host application creates the place-holding view, and adds the place-holding view to the place-holding embedded window layer, refer to S1616 to S1618.

S1616: The host AAR corresponding to the first host application creates the place-holding view according to the card size information (namely, the size) corresponding to the first host application.

The host AAR corresponding to the first host application may create the place-holding view according to the card size information of the first host application. For example, the place-holding view may be a DynamicCardHostView object that can be reused.

S1617: The host AAR corresponding to the first host application adds the place-holding view to the place-holding embedded window layer.

After the host AAR corresponding to the first host application receives the data package of the place-holding embedded window layer sent by the card management service, the host AAR corresponding to the first host application may obtain the place-holding embedded window layer according to the data package of the place-holding embedded window layer. After the place-holding view is created by the host AAR corresponding to the first host application, the first host application calls back an onCardViewCreated {cardInstanceId, view} function, to add the place-holding view (namely, the DynamicCardHostView object) to the place-holding embedded window layer.

In some examples, after the host AAR corresponding to the first host application receives the data package of the created embedded window layer corresponding to the ride-hailing application card, the host AAR corresponding to the first host application obtains, according to the data package of the created embedded window layer corresponding to the ride-hailing application card, the created embedded window layer corresponding to the ride-hailing application card. After the host AAR corresponding to the first host application creates the place-holding view, the host AAR corresponding to the first host application may invoke the onCardViewCreated {cardInstanceId, view} function, to update the card view in the created embedded window layer corresponding to the ride-hailing application card as the place-holding view. Then, the host AAR corresponding to the first host application sends the embedded window layer to which the place-holding view is added to the first host application, so that the first host application mounts the place-holding embedded window layer to which the place-holding view is added to the host layer corresponding to the first host application.

In some examples, after the host AAR corresponding to the first host application receives the data package of the place-holding embedded window layer, the host AAR corresponding to the first host application obtains the place-holding embedded window layer according to the data package of the place-holding embedded window layer. After the host AAR corresponding to the first host application creates the place-holding view, the host AAR corresponding to the first host application may invoke the onCardViewCreated {cardInstanceId, view} function, to add the place-holding view to the place-holding embedded window layer. Then, the host AAR corresponding to the first host application may send the place-holding embedded window layer to which the place-holding view is added to the first host application, so that the first host application mounts the place-holding embedded window layer to which the place-holding view is added to the host layer corresponding to the first host application.

S1618: The host AAR corresponding to the first host application sends the place-holding embedded window layer to which the place-holding view is added to the first host application, so that the first host application mounts the place-holding embedded window layer to which the place-holding view is added to the host layer corresponding to the first host application.

After the first host application receives the place-holding embedded window layer to which the place-holding view is added that is sent by the host AAR corresponding to the first host application, the first host application mounts the place-holding embedded window layer to which the place-holding view is added to the host layer corresponding to the first host application. That is, the first host application embeds the place-holding view into a window of the first host application.

It should be noted that, after the card management service receives the card UUID, the card instance information, the identification information corresponding to the host application, and the card size information corresponding to the host application that are sent by any host application, the card management service may obtain the AppClipInfo according to the card UUID. Therefore, after the card management service obtains the AppClipInfo according to the card UUID, the card management service determines to send, according to the AppClipInfo, the AppClipInfo, the card instance information, the identification information corresponding to the host application, and the card size information corresponding to the host application to the card kit corresponding to the ride-hailing application. In other words, the card kit corresponding to the ride-hailing application may obtain, from the taxi provider, the card view (namely, the view) corresponding to the ride-hailing application card corresponding to each of the host applications that register the service change of the ride-hailing application. Therefore, before the card kit corresponding to the ride-hailing application may obtain, from the taxi provider, the card view (namely, the view) corresponding to the ride-hailing application card corresponding to each of the host applications that register the service change of the ride-hailing application, each host application may mount the place-holding embedded window layer to which the place-holding view is added to the host layer of the first host application for place-holding. A specific implementation process in which each host application mounts the place-holding embedded window layer to which the place-holding view is added to the host layer of the first host application for place-holding may be described by using S1609 to S1618 (that is, the first host application mounts the place-holding embedded window layer to which the place-holding view is added to the host layer of the first host application for place-holding) as an example.

S1619: The card kit corresponding to the ride-hailing application determines, according to the AppClipInfo, the taxi provider corresponding to the service of the ride-hailing application, and sends the cardInstanceId to the taxi provider corresponding to the service of the ride-hailing application.

After the card kit corresponding to the ride-hailing application receives the AppClipInfo corresponding to the service of the ride-hailing application, the cardInstanceId, and the hostinfo corresponding to the first host application, the card kit corresponding to the ride-hailing application may determine, according to the AppClipInfo, the taxi provider corresponding to the service of the ride-hailing application, and send a binding service request to the taxi provider corresponding to the service of the ride-hailing application.

After the taxi provider corresponding to the service of the ride-hailing application receives the binding service request sent by the card kit corresponding to the ride-hailing application, the taxi provider corresponding to the service of the ride-hailing application performs an initialization operation. After the taxi provider corresponding to the service of the ride-hailing application performs the initialization operation, the taxi provider corresponding to the service of the ride-hailing application may bind a service with the card kit corresponding to the ride-hailing application. That is, the taxi provider corresponding to the service of the ride-hailing application establishes a communication connection with the card kit corresponding to the ride-hailing application. After the taxi provider corresponding to the service of the ride-hailing application binds the service with the card kit corresponding to the ride-hailing application, the taxi provider corresponding to the service of the ride-hailing application may send, to the card kit corresponding to the ride-hailing application, a notification indicating that the binding service is successfully created.

After the card kit corresponding to the ride-hailing application receives the notification that indicates that the binding service is successfully created and that is sent by the taxi provider corresponding to the service of the ride-hailing application, the card kit corresponding to the ride-hailing application may send the cardInstanceId corresponding to the service of the ride-hailing application to the taxi provider corresponding to the service of the ride-hailing application, so that the taxi provider corresponding to the service of the ride-hailing application determines, according to the cardInstanceId, a to-be-displayed ride-hailing order corresponding to the ride-hailing application card, and obtains, according to the hostinfo corresponding to the first host application, the card view of the ride-hailing application card corresponding to the ride-hailing order. That is, the taxi provider corresponding to the service of the ride-hailing application obtains, according to the hostinfo corresponding to the first host application, the card view of the ride-hailing application card corresponding to the first host application.

The ride-hailing application may include a plurality of taxi providers. A service (namely, the processing progress of the ride-hailing order) of one ride-hailing application corresponds to one taxi provider. The taxi provider may be configured to generate the card view corresponding to the service (for example, a driver receives an order) of the ride-hailing application. It should be noted that, the taxi provider corresponding to the service of the ride-hailing application may be integrated in the ride-hailing application.

It should be noted that, when the card kit corresponding to the ride-hailing application uses the created embedded window layer corresponding to the ride-hailing application card as the place-holding embedded window layer, S1619 may be performed before S1609, or S1619 and S1609 may be simultaneously performed. An execution sequence of S1619 and S1609 is not specifically limited herein.

In addition, when the card kit corresponding to the ride-hailing application creates the place-holding embedded window layer, S1619 may be performed before S1612, and S1619 and S1612 may also be simultaneously performed. An execution sequence of S1619 and S1612 is not specifically limited herein.

S 1620: The taxi provider corresponding to the service of the ride-hailing application determines, according to the cardInstanceId corresponding to the service of the ride-hailing application, the ride-hailing order corresponding to the to-be-displayed ride-hailing application card.

For example, when a user places two ride-hailing orders (such as an order A and an order B) by using the ride-hailing application, card instance information 1 corresponding to the order A may be generated, and card instance information 2 corresponding to the order B may be generated. The taxi provider corresponding to the service (namely, the processing progress of the ride-hailing order) of the ride-hailing application may determine, according to the card instance information 1, that a to-be-displayed ride-hailing application card is a ride-hailing application card corresponding to the order A. The taxi provider corresponding to the service (namely, the processing progress of the ride-hailing order) of the ride-hailing application may determine, according to the card instance information 2, that a to-be-displayed ride-hailing application card is a ride-hailing application card corresponding to the order B.

S1621: The card kit corresponding to the ride-hailing application invokes a getview (hostinfo) function, to send the hostinfo corresponding to the first host application to the taxi provider corresponding to the service of the ride-hailing application.

After the taxi provider corresponding to the service of the ride-hailing application determines, according to the cardInstanceId corresponding to the service of the ride-hailing application, the ride-hailing order corresponding to the to-be-displayed ride-hailing application card, the card kit corresponding to the ride-hailing application may send the hostinfo corresponding to the first host application to the taxi provider corresponding to the service of the ride-hailing application. That is, the card kit corresponding to the ride-hailing application may send the view id corresponding to the first host application to the taxi provider corresponding to the service of the ride-hailing application.

It should be noted that, after the card management service receives the card UUID, the card instance information, the identification information corresponding to the host application, and the card size information corresponding to the host application that are sent by any host application, the card management service may obtain the AppClipInfo according to the card UUID, and send the AppClipInfo, the card instance information, the identification information corresponding to the host application, and the card size information corresponding to the host application to the card kit corresponding to the ride-hailing application. Therefore, after the card kit corresponding to the ride-hailing application receives the AppClipInfo, the card instance information, and the identification information corresponding to the host application, the card kit corresponding to the ride-hailing application may determine, according to the AppClipInfo, the taxi provider corresponding to the service of the ride-hailing application, and send the card instance information and the identification information corresponding to the host application to the taxi provider corresponding to the service of the ride-hailing application.

S1622: The taxi provider corresponding to the service of the ride-hailing application creates, according to the hostinfo corresponding to the first host application, the card view of the ride-hailing application card corresponding to the first host application.

After the taxi provider corresponding to the service of the ride-hailing application receives the hostinfo that is sent by the card kit corresponding to the ride-hailing application and that corresponds to the first host application, the taxi provider corresponding to the service of the ride-hailing application may determine, according to the hostinfo corresponding to the first host application, the view id corresponding to the first host application, and obtain, according to the view id corresponding to the first host application, the card view of the ride-hailing application card corresponding to the first host application. The card view of the ride-hailing application card is the card view of the ride-hailing application card corresponding to the target ride-hailing order. The card view of the ride-hailing application card may be used to indicate the service change of the ride-hailing application, that is, used to indicate the processing progress of the target order. The target ride-hailing order is the ride-hailing order determined according to cardInstanceId corresponding to the service of the ride-hailing application.

For example, an example in which the host application of the electronic device includes the desktop, the notification center, the locked screen, the off screen, the leftmost screen, and the banner notification is still used. For the same service (for example, the driver receives the order) of the ride-hailing application, when the first host application is the desktop, the card view identifier corresponding to the first host application is 1, and the taxi provider corresponding to the service of the ride-hailing application may obtain, according to the card view identifier 1, the card view of the ride-hailing application card corresponding to the desktop. When the first host application is the notification center, the card view identifier corresponding to the first host application is 2, and the taxi provider corresponding to the service of the ride-hailing application may obtain, according to the card view identifier 2, the card view of the ride-hailing application card corresponding to the notification center. When the first host application is the locked screen, the card view identifier corresponding to the first host application is 3, and the taxi provider corresponding to the service of the ride-hailing application may obtain, according to the card view identifier 3, the card view of the ride-hailing application card corresponding to the locked screen. When the first host application is the off screen, the card view identifier corresponding to the first host application is 4, and the taxi provider corresponding to the service of the ride-hailing application may obtain, according to the card view identifier 4, the card view of the ride-hailing application card corresponding to the off screen. When the first host application is the leftmost screen, the card view identifier corresponding to the first host application is 5, and the taxi provider corresponding to the service of the ride-hailing application may obtain, according to the card view identifier 5, the card view of the ride-hailing application card corresponding to the leftmost screen. When the first host application is the banner notification, the card view identifier corresponding to the first host application is 6, and the taxi provider corresponding to the service of the ride-hailing application may obtain, according to the card view identifier 6, the card view of the ride-hailing application card corresponding to the banner notification.

It should be noted that, the card kit corresponding to the ride-hailing application may send the hostinfo of the host application corresponding to each of the host applications that register the service change of the ride-hailing application to the taxi provider corresponding to the service of the ride-hailing application. Therefore, the card kit corresponding to the ride-hailing application may determine, according to the hostinfo corresponding to each of the host applications that register the service change of the ride-hailing application, the view id corresponding to each host application, and obtain, according to the view id corresponding to each host application, the card view corresponding to each host application.

For different host applications, content that needs to be displayed on an interface corresponding to the host application is different. Therefore, for the same service of the ride-hailing application, when different host applications display ride-hailing application cards, card views of the ride-hailing application cards displayed in the different host applications are different.

For example, that the card views of the ride-hailing application cards displayed in the different host applications are different may mean that card content of the card views of the ride-hailing application cards displayed in the different host applications is different.

For example, an example in which the host application of the electronic device may include the desktop, the notification center, the locked screen, the off screen, the leftmost screen, and the banner notification is used. For the same service (for example, the driver receives the order) of the ride-hailing application, as shown in FIG. 15A, the desktop 110 of the electronic device may display the ride-hailing application card 111. The ride-hailing application card 111 may include an icon 112 of the ride-hailing application, text 113 of "license plate number XXX and arriving in two minutes", text 114 of "Mr Zhang and white", and a call control 115.

As shown in FIG. 15B, the notification center 120 of the electronic device may display a ride-hailing application card 121. The ride-hailing application card 121 may include an icon 122 of the ride-hailing application, text 123 of "license plate number XXX and arriving in two minutes", and text 124 of "Mr Zhang and white". Compared with the ride-hailing application card 111 shown in FIG. 15A, the ride-hailing application card 121 may further include a progress bar 125.

As shown in FIG. 15C, the locked screen interface 130 of the electronic device may display a ride-hailing application card 131. The ride-hailing application card 131 may include an icon 132 of the ride-hailing application, text 133 of "license plate number XXX and arriving in two minutes", and text 134 of "Mr Zhang and white". Compared with the ride-hailing application card 111 shown in FIG. 15A, the ride-hailing application card 131 may further include a progress bar 135.

As shown in FIG. 15D, the locked screen interface 140 of the electronic device may display a ride-hailing application card 141. Compared with the ride-hailing application card 111 shown in FIG. 15A, the ride-hailing application card 141 is a card capsule. The ride-hailing application card 141 (namely, the card capsule) may include related information (such as an icon 142 of the ride-hailing application and text 143 of "license plate number XXX") of some ride-hailing orders.

It should be noted that, the progress bar may be a segmentation progress bar.

For example, that the card views of the ride-hailing application cards displayed in the different host applications are different may mean that card sizes of the card views of the ride-hailing application cards displayed in the different host applications are different.

For example, an example in which the host application of the electronic device may include the desktop, the notification center, the locked screen, the off screen, the leftmost screen, and the banner notification is still used. For the same service (for example, the driver receives the order) of the ride-hailing application, as shown in FIG. 15A, the desktop 110 of the electronic device may display the ride-hailing application card 111. A display height of the ride-hailing application card 111 is h1, and a display width of the ride-hailing application card 111 is d1.

As shown in FIG. 15B, the notification center 120 of the electronic device may display a ride-hailing application card 121. A display height of the ride-hailing application card 121 is h2, and a display width of the ride-hailing application card 121 is d2. The display height h2 of the ride-hailing application card 121 is less than the display height h1 of the ride-hailing application card 111.

As shown in FIG. 15C, the locked screen interface 130 of the electronic device may display a ride-hailing application card 131. A display height of the ride-hailing application card 131 is h3, and a display width of the ride-hailing application card 131 is d3. The display height h3 of the ride-hailing application card 131 is less than the display height h2 of the ride-hailing application card 121.

As shown in FIG. 15D, the off screen interface 140 of the electronic device may display a ride-hailing application card 141. A display height of the ride-hailing application card 141 is h4, and a display width of the ride-hailing application card 141 is d4. The display height h4 of the ride-hailing application card 141 is less than the display height h2 of the ride-hailing application card 111, and the display width d4 of the ride-hailing application card 141 is less than the display width d1 of the ride-hailing application card 111.

In other words, for the same service (for example, the driver receives the order) of the ride-hailing application, ride-hailing application cards displayed on the desktop, the notification center, the locked screen interface, and the off screen interface of the electronic device are different. That is, card views (namely, views) of the ride-hailing application cards displayed in the different host applications are different. That is, card view identifiers of the card views of the ride-hailing application cards corresponding to the different host applications are different.

In the embodiments of this application, before obtaining, according to the card view identifier corresponding to the first host application, the card view of the ride-hailing application card corresponding to the first host application, the taxi provider corresponding to the service of the ride-hailing application may generate, according to the card size information and the ride-hailing service data that correspond to the first host application, the card view of the ride-hailing application card corresponding to the first host application.

S1623: The taxi provider corresponding to the service of the ride-hailing application sends the card view of the ride-hailing application card corresponding to the first host application to the card kit corresponding to the ride-hailing application.

It should be noted that, the taxi provider corresponding to the service of the ride-hailing application may determine, according to the hostinfo corresponding to each of the host applications that register the service change of the ride-hailing application, a view id corresponding to each host application, and obtain, according to the view id corresponding to each host application, the card view corresponding to each host application. Therefore, the taxi provider corresponding to the service of the ride-hailing application may send, to the card kit corresponding to the ride-hailing application, the card view corresponding to each of the host applications that register the service change of the ride-hailing application.

S1624: The card kit corresponding to the ride-hailing application adds the card view of the ride-hailing application card corresponding to the first host application to the embedded window layer.

After the card kit corresponding to the ride-hailing application receives the card view of the ride-hailing application card corresponding to the first host application, the card kit corresponding to the ride-hailing application may add the card view of the ride-hailing application card corresponding to the first host application to the embedded window (namely, SurfaceControlViewHost or ViewHost) layer. That is, the card kit corresponding to the ride-hailing application generates, according to the card view of the ride-hailing application card corresponding to the first host application, the embedded window layer corresponding to the ride-hailing application card.

In some examples, the embedded window layer may be the created embedded window layer that is obtained in S1609 and that corresponds to the ride-hailing application card. That is, the card kit corresponding to the ride-hailing application may add the card view of the ride-hailing application card corresponding to the first host application to the embedded window layer, and the card kit corresponding to the ride-hailing application may update the card view in the created embedded window layer corresponding to the ride-hailing application card to the card view of the ride-hailing application card corresponding to the first host application.

In some examples, the embedded window layer may be the place-holding embedded window layer created by the card kit corresponding to the ride-hailing application in S1612. That is, the card kit corresponding to the ride-hailing application may add the card view of the ride-hailing application card corresponding to the first host application to the embedded window layer, and the card kit corresponding to the ride-hailing application may add the card view of the ride-hailing application card corresponding to the first host application to the place-holding embedded window layer.

It should be noted that, the taxi provider corresponding to the service of the ride-hailing application may send, to the card kit corresponding to the ride-hailing application, the card view corresponding to each of the host applications that register the service change of the ride-hailing application. Therefore, the card kit corresponding to the ride-hailing application may add the card view of the ride-hailing application card corresponding to each host application to the embedded window layer. That is, the card kit corresponding to the ride-hailing application may generate, according to the card view of the ride-hailing application card corresponding to each host application, the embedded window layer corresponding to the ride-hailing application card corresponding to each host application.

S1625: The card kit corresponding to the ride-hailing application calls back an onSurfaceViewRendered function.

The card kit corresponding to the ride-hailing application monitors whether rendering of the embedded window layer corresponding to the ride-hailing application card is completed. That is, the card kit corresponding to the ride-hailing application monitors whether the card view in the place-holding embedded window layer is updated to the card view of the ride-hailing application card corresponding to the first host application. After the card kit corresponding to the ride-hailing application monitors that rendering of the embedded window layer corresponding to the ride-hailing application card is completed, the card kit corresponding to the ride-hailing application may call back the onSurfaceViewRendered function, to notify the card management service that rendering of the embedded window layer corresponding to the ride-hailing application card is completed.

S1626: The card management service calls back the onSurfaceViewRendered function.

The card management service of the electronic device calls back the onSurfaceViewRendered function, to notify the host AAR corresponding to the first host application that rendering of the embedded window layer corresponding to the ride-hailing application card is completed.

S1627: The host AAR corresponding to the first host application calls back the onSurfaceViewRendered function.

The host AAR corresponding to the first host application calls back the onSurfaceViewRendered function, to notify the first host application that rendering of the embedded window layer corresponding to the ride-hailing application card is completed.

S1628: The first host application updates the place-holding view added to the place-holding embedded window layer to the card view of the ride-hailing application card corresponding to the first host application.

After the host AAR corresponding to the first host application calls back the onSurfaceViewRendered function, the first host application updates the place-holding view added to the place-holding embedded window layer to the card view of the ride-hailing application card corresponding to the first host application. That is, the first host application removes a placeholder corresponding to the place-holding view in the embedded window layer mounted (or referred to as embedded) in the host layer corresponding to the first host application, and adds the card view of the ride-hailing application card corresponding to the first host application to the embedded window layer mounted in the host layer corresponding to the first host application. That is, the first host application updates the place-holding view that is mounted to the embedded window layer of the host layer corresponding to the first host application to the card view of the ride-hailing application card corresponding to the first host application.

It should be noted that, the card kit corresponding to the ride-hailing application generates, according to the card view of the ride-hailing application card corresponding to each host application, the embedded window layer corresponding to the ride-hailing application card corresponding to each host application. Therefore, each host application may update the place-holding view that is mounted to the embedded window layer of the host layer corresponding to the host application to the card view of the ride-hailing application card corresponding to the host application. A specific implementation process in which each host application may update the place-holding view that is mounted to the embedded window layer of the host layer corresponding to the host application to the card view of the ride-hailing application card corresponding to the host application may be described by using S1628 (namely, a specific implementation process in which the first host application updates the place-holding view added to the place-holding embedded window layer to the card view of the ride-hailing application card corresponding to the first host application) as an example.

S1629: The first host application receives a switching operation entered by a user.

The switching operation may be used to open the first host application of the electronic device. For example, if the first host application is the desktop, the switching operation may be a swiping-up operation of the user on the bottom of a display screen of the electronic device. For another example, if the first host application is the notification center, the switching operation may be a swiping-down operation of the user on a top status bar of a display screen. For another example, if the first host application is the locked screen, the switching operation may be a tapping operation of the user on a display screen of the electronic device when the electronic device is in a screen locking state.

S1630: The first host application displays, in response to the switching operation, an interface corresponding to the first host application, where the interface corresponding to the first host application includes the ride-hailing application card corresponding to the first host application.

The first host application includes the ride-hailing application card corresponding to the first host application in the card view mounted to the embedded window layer of the host layer corresponding to the first host application. Therefore, in response to the switching operation, the first host application displays the interface corresponding to the first host application, and displays the card view of the ride-hailing application card corresponding to the first host application on the interface corresponding to the first host application. That is, the interface corresponding to the first host application includes the ride-hailing application card corresponding to the first host application.

For example, an example in which the first host application is the desktop is used. In response to the switching operation, the ride-hailing application card 111 may be displayed on the top of the desktop 110 of the electronic device. The ride-hailing application card 111 may be used to serve as a prompt that the driver has received the order. With reference to FIG. 15A, the ride-hailing application card 111 may include an icon 112 of the ride-hailing application, text 113 of "license plate number XXX and arriving in two minutes", and text 114 of "Mr Zhang and white". The ride-hailing application card 111 may further include a call control 115, and the call control 115 may be configured to contact an order receiving driver. A display height of the ride-hailing application card 111 is h1, and a display width of the ride-hailing application card 111 is d1.

For another example, an example in which the first host application is the notification center is used. When the electronic device receives a screen locking operation (for example, pressing a screen locking key) of the user, as shown in FIG. 15D, the electronic device displays an off screen interface 140, and displays a ride-hailing application card 141 on the off screen interface 140. The ride-hailing application card 141 is a card capsule. After the electronic device receives a touch operation (for example, a swiping operation) of the user on the ride-hailing application card 141 (namely, the card capsule), the electronic device opens the ride-hailing application. In addition, the display height h4 of the ride-hailing application card 141 is less than the display height h1 of the ride-hailing application card 111, and the display width d3 of the ride-hailing application card 141 is less than the display width d1 of the ride-hailing application card 111.

It should be noted that, after the electronic device is powered on, the host application (the desktop, the leftmost screen, the notification center, the banner notification, the off screen, the locked screen, and the like) registers a service change of the ride-hailing application. Therefore, when the service change of the ride-hailing application occurs, the electronic device may generate a card view of a ride-hailing application card corresponding to each of all host applications that register the service change of the ride-hailing application, and when a host application runs in the foreground of the electronic device, the electronic device may display the card view of the ride-hailing application card corresponding to the host application, that is, display the ride-hailing application card corresponding to the host application. The foregoing example is described by using the first host application (for example, the desktop) as an example. In other words, each of all the host applications that register the service change of the ride-hailing application may perform S1604 to S1628.

In the solutions of this application, when the electronic device displays the notification information of the application in the form of the card, the application running in the electronic device may create a card view, generate, according to the card view, an embedded window layer corresponding to the card, and send the embedded window layer corresponding to the card to the host application of the electronic device, so that the host application of the electronic device displays the embedded window layer corresponding to the card. In other words, when the host application of the electronic device displays the notification information of the application in the form of the card, the host application of the electronic device displays the embedded window layer mounted by the host application rather than directly displays the card view. Therefore, the application of the electronic device may create, as required, a card view including the custom card element, and generate, according to the card view, an embedded window layer including the custom card element, so that when the host application of the electronic device displays the notification information of the application, the host application of the electronic device may display card views including different custom card elements, to more effectively and intuitively display the notification information of the application to the user.

In addition, when the electronic device displays the card corresponding to the application, the card corresponding to the application is displayed based on the embedded window layer, so that a cross-process data transmission speed can be improved, and the card corresponding to the application can be refreshed in real time, to ensure timeliness of the notification information of the application, and achieve better user experience.

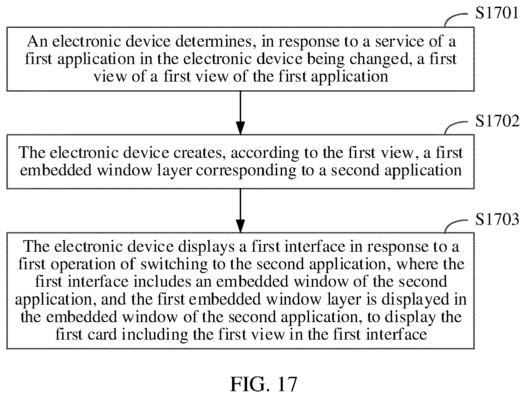

For ease of understanding, with reference to FIG. 17, a card display method provided in the embodiments of this application is described below. As shown in FIG. 17, the card display method may include S1701 to S1703.

S1701: An electronic device determines, in response to a service of a first application in the electronic device being changed, a first view of a first card of the first application.

In the embodiments of this application, the electronic device may include a plurality of applications, such as the first application. In some examples, the first application may be a travel application (such as a ride-hailing application or a map application), a delivery application (such as a takeaway application or an express application), or the like. A specific type of the first application is not limited in the embodiments of this application. For example, the first application may be the application providing the card that is shown in FIG. 6.

The electronic device may further include a second application. The second application may be an application that registers the service change of the first application included in the electronic device. In other words, when the service of the first application changes, the second application may display the first card of the first application. In some examples, the second application may be a desktop, a notification center, a locked screen, an off screen, a leftmost screen, or a banner notification. For example, the second application may be the host application in S601 to S609. For example, the second application may also be the first host application in S1604 to S1608, or S1616 to S1618, or S1621 to S1630.

The first card may be a card corresponding to the first application, that is, the first card may be used to represent the service change of the first application. For example, an example in which the first application is the ride-hailing application is used. The first card may be the ride-hailing application card in S606 to S609 or S1623 and S1624.

In the embodiments of this application, when the first cards are displayed in different applications (such as the desktop, the notification center, the locked screen, the off screen, the leftmost screen, or the banner notification) of the electronic device, the card views of the first cards may be adjusted according to display content of the application of the electronic device. In other words, for the same service of the first application, card views of the first cards displayed on the different applications of the electronic device may be different. Based on this, in response to the service change of the first application in the electronic device, the electronic device may determine a plurality of card views of the first card of the first application, where the plurality of card views respectively correspond to different applications (such as the desktop, the notification center, the locked screen, the off screen, the leftmost screen, or the banner notification) included in the electronic device.

The first view may be the card view of the first card that can be displayed in the second application. The first view may be the card view in S604 to S607, or S1622 and S1623.

In some examples, the first view may include a custom card element. The custom card element may be a progress bar or a segmentation progress bar.

For example, the first view includes the progress bar, and the progress bar may be used to indicate a progress status of the service of the first application. The progress bar may include a first icon, a second icon, and a third icon, where the first icon may be used to indicate an execution starting point of the service of the first application, and the second icon may be used to indicate an execution end point of the service of the first application; and the third icon is used to indicate that the progress status of the service of the first application changes, and when the progress status of the service of the first application changes, a location of the third icon between the first icon and the second icon correspondingly changes. In this way, when the electronic device displays the first card including the first view on the first interface, the progress status of the service of the first application may be more intuitively displayed through the progress bar in the first view, and user experience is better.

For example, an example in which the first application is the ride-hailing application is used. The first icon may be used to indicate a starting point (namely, a location at which an order receiving vehicle is located when a driver receives an order). That is, the first icon may be used to indicate an execution starting point of a ride-hailing order. The second icon may be used to represent a destination of the ride-hailing order. That is, the second icon may be used to indicate an execution end point of the ride-hailing order. Specifically, the progress bar may be the progress bar 21 shown in FIG. 7. The first icon may be the first identifier 01 shown in FIG. 7. The second icon may be the second identifier 02 shown in FIG. 7. The third icon may be the vehicle identifier 04 shown in FIG. 7.

For example, a service stage of the first application includes a first service stage and a second service stage. The first view includes a segmentation progress bar, where the segmentation progress bar is used to indicate progress statuses of the service of the first application at different service stages.

The segmentation progress bar may include a fourth icon, a fifth icon, and a sixth icon and a seventh icon that are located between the fourth icon and the fifth icon. The fourth icon may be used to indicate an execution starting point of the first service stage of the first application. The fifth icon may be used to indicate an execution end point of the second service stage of the first application. The sixth icon is used to indicate an execution end point of the first service stage of the first application and an execution starting point of the second service stage of the first application.

The seventh icon may be used to indicate that a service progress of the second application changes, and when the service progress of the second application changes at the first service stage, a location of the seventh icon that is between the fourth icon and the sixth icon correspondingly changes; or when the service progress of the second application changes at the second service stage, a location of the seventh icon that is between the sixth icon and the fifth icon correspondingly changes.

In this way, when the electronic device displays the first card including the first view on the first interface, the current service stage of the service of the first application and a progress status corresponding to the service stage may be more intuitively displayed through the segmentation progress bar in the first view, so that user experience is better.

For example, an example in which the first application is the ride-hailing application is used. The fourth icon may be used to indicate a starting point (namely, a location at which an order receiving vehicle is located when a driver receives an order). That is, the fourth icon may be used to indicate an execution starting point of a ride-hailing order. The fifth icon may be used to represent a destination of the ride-hailing order. That is, the fifth icon may be used to indicate an execution end point of the ride-hailing order. The sixth icon may be used to indicate an origin of a user placing the order. The sixth icon is located between the fourth icon and the fifth icon. The sixth icon may divide a connecting line between the fourth icon and the fifth icon into two segments. That is, the sixth icon may divide a processing process of the ride-hailing order into two stages, namely, a first service stage and a second service stage. When the seventh icon is located between the fourth icon and the sixth icon, it indicates that the order receiving vehicle is driving from the starting point to the origin of the user. When the seventh icon is located between the sixth icon and the fifth icon, it indicates that the order receiving vehicle has picked up the user, and the order receiving vehicle is driving from the origin of the user to the destination.

Specifically, the segmentation progress bar may be the segmentation progress bar 51 shown in FIG. 10. The fourth icon may be the first identifier 01 shown in FIG. 10. The fifth icon may be the second identifier 02 shown in FIG. 10. The sixth icon may be the third identifier 03 shown in FIG. 10. The seventh icon may be the vehicle identifier 04 shown in FIG. 10.

In some examples, that the electronic device determines the first view of the first card of the first application may include: determining, by the electronic device, the first view of the first card of the first application according to card size information corresponding to the second application and service data of the first application.

In some examples, that the electronic device determines the first view of the first card of the first application may include: obtaining, by the electronic device, identification information of the second application; determining, by the electronic device, identification information of the first view according to the identification information of the second application; and determining, by the electronic device, the first view according to the identification information of the first view.

For example, the identification information of the second application may be a host identifier (namely, a host id) of the host application in S 1622. The identification information of the first view may be the card view identifier (namely, a view id) in S606 or S1622.

In this example, the electronic device may pre-create a card view of the first card corresponding to each application. In this way, when the electronic device determines the first view, the electronic device may determine the identification information of the first view according to the identification information of the second application, and determine the first view according to the identification information of the first view, so that the card view can be quickly obtained, thereby improving processing efficiency of the electronic device.

Specifically, for a specific implementation in which the electronic device determines the first view of the first card of the first application, refer to S606 or the specific implementation in S1622. Details are not described again in the embodiments of this application.

In some embodiments, to prevent the electronic device from displaying a card of another application other than the first application in a process in which the electronic device determines the card view of the first card of the first application, before the electronic device determines the card view of the first card of the first application, the electronic device may create a place-holding embedded window layer corresponding to a place-holding view, and mount the place-holding embedded window layer to an embedded window of the second application for place-holding.

In some examples, before determining, by the electronic device, a first view of a first card of the first application, the card display method may further include: generating, by the electronic device, a place-holding view according to card size information of the second application; creating, by the electronic device according to the place-holding view, a place-holding embedded window layer corresponding to the place-holding view; and mounting, by the electronic device, the place-holding embedded window layer to the embedded window of the second application.

The card size information of the second application may be size information of a card view of a card that is allowed to be displayed on the second application. For example, the card size information of the second application may include a display height and a display width.

For example, the place-holding view may be a DynamicCardHostView object that can be reused.

Specifically, for a specific implementation in which the electronic device generates the place-holding view according to the card size information of the second application, refer to the specific implementation in S1616 in the foregoing example. Details are not described again in the embodiments of this application.

In some examples, the creating, by the electronic device according to the place-holding view, a place-holding embedded window layer corresponding to the place-holding view may include: when the electronic device stores a third embedded window layer, obtaining status information of the third embedded window layer; and updating the card view of the second card in the third embedded window layer to the place-holding view when the status information indicates that the third embedded window layer is valid, to obtain the place-holding embedded window layer.

The third embedded window layer is an embedded window layer created according to the card view of the second card of the first application. A progress status of the service of the first application indicated by the second card and a progress status of the service of the first application indicated by the first card are different. For example, an example in which the first application is the ride-hailing application is still used. The third embedded window layer may be the created embedded window layer corresponding to the ride-hailing application card in S1609 to S1611.

The status information of the third embedded window layer may be used to indicate whether the third embedded window layer is valid. That is, the status information of the third embedded window layer may be used to indicate whether a data package corresponding to the third embedded window layer is valid. For example, when the status information of the third embedded window layer is a first value (for example, 1), the data package corresponding to the third embedded window layer is valid, that is, the third embedded window layer is valid. When the status information of the third embedded window layer is a second value (for example, 0), the data package corresponding to the third embedded window layer is invalid, that is, the third embedded window layer is invalid.

Specifically, in the foregoing example, when the electronic device stores the third embedded window layer, the status information of the third embedded window layer is obtained; and for a specific implementation of updating, when the status information indicates that the third embedded window layer is valid, the card view of the second card in the third embedded window layer to the place-holding view, to obtain the place-holding embedded window layer, refer to the specific implementation in S1609 to S1611. Details are not described again in the embodiments of this application.

In some examples, the creating, by the electronic device according to the place-holding view, a place-holding embedded window layer corresponding to the place-holding view may include: when the third embedded window layer is not stored in the electronic device or the status information of the third embedded window layer indicates that the third embedded window layer is invalid, creating, by the electronic device, the place-holding embedded window layer according to the place-holding view.

Specifically, for a specific implementation in which the electronic device creates the place-holding embedded window layer according to the place-holding view, refer to the specific implementation in S 1612 to S 1615. Details are not described again in the embodiments of this application.

S1702: The electronic device creates, according to the first view, a first embedded window layer corresponding to the second application.

After the electronic device determines the first view of the first card of the first application, the electronic device may create, according to the first view, the first embedded window layer corresponding to the second application. The electronic device may embed the first embedded window layer in an embedded window of the second application (namely, a host layer of the second application). In this way, when displaying a first interface corresponding to the second application, the electronic device may display the embedded window of the second application, and may further display the first embedded window layer embedded into the embedded window of the second application. That is, the first card including the first view is displayed in the first interface.

The first embedded window layer may be a layer that can be embedded into the embedded window of the second application. For example, the first embedded window layer may be the embedded window layer in S607 or S1624.

In some examples, that the electronic device creates, according to the first view, the first embedded window layer corresponding to the second application may include: updating the place-holding view in the place-holding embedded window layer to the first view, to obtain the first embedded window layer corresponding to the second application. In this way, processing efficiency of the electronic device can be improved without recreating the first embedded window layer.

Specifically, for a specific implementation in which the electronic device creates, according to the first view, the first embedded window layer corresponding to the second application, refer to S607 or the specific implementation in S1624. Details are not described again in the embodiments of this application.

S1703: The electronic device displays the first interface in response to a first operation of switching to the second application, where the first interface includes the embedded window of the second application, and the first embedded window layer is displayed in the embedded window of the second application, to display the first card including the first view in the first interface.

The first operation may be an operation used to open the second application of the electronic device. For example, if the second application is a desktop, the first operation may be a swiping-up operation of a user on the bottom of a display screen of the electronic device. For another example, if the second application is a notification center, the first operation may be a swiping-down operation of a user on a top status bar of a display screen. For another example, if the second application is a locked screen, the first operation may be a tapping operation of a user on a display screen of the electronic device when the electronic device is in a screen locking state. For example, the first operation may be the switching operation in S1629. The first interface may be a display interface corresponding to the second application.

After the electronic device creates, according to the first view, the first embedded window layer corresponding to the second application, the electronic device may embed the first embedded window layer into the embedded window of the second application. Then, when the electronic device receives the first operation of switching to the second application, in response to the first operation, the electronic device may display the first interface corresponding to the second application. The first interface may include the embedded window of the second application. In this way, when displaying the first interface corresponding to the second application, the electronic device may display the first card including the first view in the first interface.

Specifically, for a specific implementation in which the electronic device displays the first interface in response to the first operation of switching to the second application in the foregoing example, refer to the specific implementation in S 1630. Details are not described again in the embodiments of this application.

In some examples, the card display method may further include: determining, by the electronic device in response to the service of the first application in the electronic device being changed, a second view of the first card of the first application, where the second view is different from the first view; and creating, by the electronic device according to the second view, a second embedded window layer corresponding to a third application.

In this embodiment of this application, the electronic device may further include the third application. The third application may also be an application that registers the service change of the first application included in the electronic device. In other words, when the service of the first application changes, the third application may also display the first card of the first application. In some examples, the third application may be a desktop, a notification center, a locked screen, an off screen, a leftmost screen, or a banner notification. For example, the second application may be the host application in S601 to S609. For example, the second application may also be the first host application in S1604 to S1608, or S1616 to S1618, or S1621 to S1630.

It should be noted that, the third application may be different from the second application. For example, the second application is a desktop, and the third application is a notification center. For example, the second application is a desktop, and the third application is a locked screen. For example, the second application is a locked screen, and the third application is an off screen. For example, the second application is a desktop, and the third application is an off screen.

The second view may be the card view of the first card that can be displayed in the third application. The second view may be the card view in S604 to S607 or S1622 and S1623.

In some examples, that the electronic device determines the second view of the first card of the first application may include: determining, by the electronic device, the second view of the first card of the first application according to card size information corresponding to the third application and service data of the first application.

In some examples, that the electronic device determines the second view of the first card of the first application may include: obtaining, by the electronic device, identification information of a third application; determining, by the electronic device, identification information of the second view according to the identification information of the third application; and determining, by the electronic device, the second view according to the identification information of the second view.

For example, the identification information of the third application may be a host identifier (namely, a host id) of the host application in S 1622. The identification information of the second view may be the card view identifier (namely, a view id) in S606 or S1622.

Specifically, for a specific implementation in which the electronic device determines the second view of the first card of the first application, refer to S606 or the specific implementation in S1622. Details are not described again in the embodiments of this application.

For example, the second embedded window layer may be a layer that can be embedded into an embedded window of the third application. For example, the second embedded window layer may be the embedded window layer in S607 or S1624.

In some examples, that the electronic device creates, according to the second view, the second embedded window layer corresponding to the third application may include: updating the place-holding view in the place-holding embedded window layer to the second view, to obtain the second embedded window layer corresponding to the third application.

Specifically, for a specific implementation in which the electronic device creates, according to the second view, the second embedded window layer corresponding to the third application, refer to S607 or the specific implementation in S 1624. Details are not described again in the embodiments of this application.

After the electronic device creates, according to the second view, the second embedded window layer corresponding to the third application, the electronic device may embed the second embedded window layer into an embedded window of the third application (namely, a host layer of the third application). In this way, when displaying a second interface corresponding to the third application, the electronic device may display the embedded window of the third application, and may further display the second embedded window layer embedded into the embedded window of the third application. That is, the first card including the second view is displayed in the second interface.

In some examples, the second view is different from the first view, which may be that display content corresponding to the second view is different from display content corresponding to the first view.

In some examples, the second view is different from the first view, which may be that a display size corresponding to the second view is different from a display size corresponding to the first view. The display size may include a display height and a display width.

For example, the second application is the desktop, the third application is the notification center, and the display height corresponding to the second view is less than the display height corresponding to the first view. In this way, when an application running in the foreground of the electronic device is switched from the desktop to the notification center, the first card including the second view may be displayed in the notification center, and the display height corresponding to the second view is less than the display height corresponding to the first view. In this way, a space occupied by the first card can be reduced, so that the notification center of the electronic device can display more notification information cards. A user can view all the notification information cards without a viewing operation, so that man-machine interaction efficiency can be improved.

For example, the second application is the desktop, the third application is the locked screen, the display width corresponding to the second view is less than the display width corresponding to the first view, and the display height corresponding to the second view is less than the display height corresponding to the first view. In this way, when an application running in the foreground of the electronic device is switched from the desktop to the locked screen, the first card including the second view may be displayed in the notification center, the display width corresponding to the second view is less than the display width corresponding to the first view, and the display height corresponding to the second view is less than the display height corresponding to the first view. In this way, a space occupied by the first card can be reduced, so that the locked screen of the electronic device can display more notification information cards. A user can view all the notification information cards without a viewing operation, so that man-machine interaction efficiency can be improved.

For example, the second application is the locked screen, the third application is the off screen, the display width corresponding to the second view is less than the display width corresponding to the first view, and the display height corresponding to the second view is less than the display height corresponding to the first view. In this example, because a display space of the off screen interface of the electronic device is limited, when an application running in the foreground of the electronic device is switched from the locked screen to the off screen, the first card including the second view may be displayed on the off screen interface, the display width corresponding to the second view is less than the display width corresponding to the first view, and the display height corresponding to the second view is less than the display height corresponding to the first view. In this way, the display size of the first card may be reduced, to maximally reduce the space occupied by the first card, and avoid a case in which a card corresponding to the second application cannot be fully displayed. In addition, because the off screen interface of the electronic device is in an always-on state, the first card having a relatively small size is displayed on the off screen interface, which can reduce power consumption of the electronic device.

It should be noted that, the display size corresponding to the first view may be the card size information of the second application. The display size corresponding to the second view may be the card size information of the third application.

In some examples, the second view is different from the first view, which may be that the display content corresponding to the second view is different from the display content corresponding to the first view, and the display size corresponding to the second view is different from the display size corresponding to the first view.

In this example, when the service of the first application changes, the electronic device may generate, for the characteristics of the different applications, the card views corresponding to the applications, where display content and/or display sizes of the card views corresponding to the different applications are different. In this way, the electronic device may generate, for the characteristics of the different applications, first cards matching the applications, so that when the electronic device is switched to any application, an interface corresponding to the application may be displayed, and the first card including a card view corresponding to the application is displayed on the interface corresponding to the application. In this way, it can be ensured that first cards displayed in the different applications of the electronic device all have a good display effect.

In some examples, after the displaying, by the electronic device, a first interface in response to a first operation of switching to the second application, the card display method may further include: displaying, by the electronic device, a second interface in response to a second operation of switching to the third application, where the second interface includes an embedded window of the third application, and the second embedded window layer is displayed in the embedded window of the third application, to display the first card including the second view in the second interface.

The second operation may be an operation used to open the third application of the electronic device. For example, if the third application is a desktop, the second operation may be a swiping-up operation of a user on the bottom of a display screen of the electronic device. For another example, if the third application is a notification center, the second operation may be a swiping-down operation of a user on a top status bar of a display screen. For another example, if the third application is a locked screen, the second operation may be a tapping operation of a user on a display screen of the electronic device when the electronic device is in a screen locking state. For example, the second operation may be the switching operation in S1629. The second interface may be a display interface corresponding to the third application.

After the electronic device displays the first interface, when the electronic device receives the second operation of switching to the third application, in response to the second operation, the electronic device may display the second interface corresponding to the third application. The second interface may include the embedded window of the third application. In this way, when the electronic device is switched from displaying the first interface corresponding to the second application to the second interface corresponding to the third application, the electronic device may display the first card including the second view in the second interface.

Specifically, for a specific implementation in which the electronic device displays the second interface in response to the second operation of switching to the third application in the foregoing example, refer to the specific implementation in S 1630. Details are not described again in the embodiments of this application.

In this example, when the service of the first application in the electronic device is changed, in response to the service of the first application being changed, the electronic device may determine the second view of the first card of the first application, and create, according to the second view, the second embedded window layer corresponding to the third application. In this way, the electronic device may embed the second embedded window layer into the embedded window of the third application. In other words, when the service of the first application changes, the electronic device may determine, for characteristics of different applications, card views that can be displayed in the applications. Further, when the electronic device receives the second operation of switching to the third application, in response to the second operation, a display interface of the electronic device may be switched from the first interface corresponding to the second application to the second interface corresponding to the third application. In addition, because the second interface, on which the electronic device displays the third application includes the embedded window of the third application. Therefore, when the display interface of the electronic device is switched from the first interface corresponding to the second application to the second interface corresponding to the third application, the first card in the display interface of the electronic device is switched from the first card including the first view to the first card including the second view. In other words, the electronic device may display, for the characteristics of the different applications, first cards matching the applications, thereby ensuring that the first cards displayed in the different applications of the electronic device all have a good display effect.

In the solutions of this application, when the service of the first application in the electronic device is changed, in response to the service of the first application being changed, the electronic device may determine the first view of the first card of the first application, and create, according to the first view, the first embedded window layer corresponding to the second application. In this way, the electronic device may embed the first embedded window layer into the embedded window of the second application. Then, after the electronic device receives the first operation of switching to the second application, in response to the first operation, the electronic device may display the first interface corresponding to the second application. Because the first interface of the second application that is displayed on the electronic device includes the embedded window of the second application, when displaying the first interface corresponding to the second application, the electronic device may display the first embedded window layer embedded into the embedded window of the second application, and may further display the first card including the first view in the first interface. In other words, when the second application of the electronic device displays the first card, the first card may be displayed in a manner of displaying the embedded window of the second application, and the first card is not directly displayed. In this way, the electronic device may determine the first view of the first card according to a service type of the first application, and further display the first card including the first view on the first interface, so that a service state of the first application can be more effectively and intuitively displayed, thereby achieving better user experience.

It should be understood that, division into units or modules (referred to as units below) in the apparatus is merely logical function division. During actual implementation, a part or all of the units or modules may be integrated into a physical entity or may be physically separated. In addition, all units in the apparatus may be implemented in a form of software invoking by a processing element; may also be implemented in the form of hardware; and alternatively, some units may be implemented in a form of invoking by software through a processing element, and some units may be implemented in a form of hardware.

For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. During implementation, steps in the foregoing methods or the foregoing units may be implemented by using a hardware integrated logic circuit in a processor element, or may be implemented in the form of software invoked by the processing element.

In one example, the units in the apparatus may be configured as one or more integrated circuits configured to implement the foregoing method, for example, one or more ASICs, one or more DSPs, one or more FPGAs, or a combination of at least two integrated circuit forms thereof.

For another example, when a unit in the apparatus can be implemented in a form of a processing element scheduling a program, the processing element may be a general-purpose processor, for example, a CPU or another processor that can invoke a program. For another example, these units may be integrated together and implemented in a form of a system on a chip SoC.

In an implementation, the units of the apparatus for implementing the corresponding steps in the method may be implemented in a form of a processing element scheduling a program. For example, the apparatus may include a processing element and a storage element, where the processing element invokes a program stored in the storage element, to perform the method described in the foregoing method embodiments. The storage element may be a storage element on a same chip as the processing element, namely, an on-chip storage element.

In another implementation, the program used to perform the foregoing methods may be in a storage element on a different chip from the processing element, namely, an off-chip storage element. In this case, the processing element invokes or loads the program from the off-chip storage element to the on-chip storage element, to invoke and perform the method in the foregoing method embodiment.

For example, an embodiment of this application may further provide an apparatus. For example, the electronic device may include a processor and a memory configured to store instructions executable by the processor. The processor is configured to enable, when executing the instructions, the electronic device to implement the card display method as described in the foregoing embodiments. The memory may be located inside or outside the electronic device. In addition, there may be one or more processors.

In still another implementation, the units of the apparatus for implementing the steps in the method may be configured as one or more processing elements. The processing elements may be disposed on the foregoing electronic device, and the processing elements may be integrated circuits, for example, one or more ASICs, one or more DSPs, one or more FPGAs, or a combination of the integrated circuits. These integrated circuits may be integrated together to form a chip.

For example, an embodiment of this application further provides a chip. The chip is applicable to the foregoing electronic device. The chip includes one or more interface circuits and one or more processors. The interface circuit and the processor are connected to each other through a line. The processor receives and executes computer instructions from a memory of the electronic device through the interface circuit, to implement the method in the foregoing method embodiments.

An embodiment of this application further provides a computer program product, including computer instructions run on the foregoing electronic device.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented as required, that is, an inner structure of an apparatus is divided into different functional modules to implement all or some of the functions described above.

In the several embodiments provided in this application, it should be understood that, the disclosed apparatus and method may be implemented in other manners. For example, the described apparatus embodiment is merely an example. For example, the module or unit division is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electric, mechanical, or other forms.

The units described as separate components may or may not be physically separate, and components displayed as units may be one or more physical units, may be located in one place, or may be distributed on different places. Some or all of the units may be selected according to actual requirements to achieve the objectives of the solutions in the embodiments.

In addition, functional units in the embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially or the part contributing to the related art or a part or all of the technical solutions may be implemented in a form of a software product, for example: a program. The software product is stored in a program product such as a computer-readable storage medium and includes several instructions for instructing a device (which may be a single-chip microcomputer, a chip, or the like) or a processor (processor) to perform a part or all of the steps of the methods described in embodiments of this application. The storage medium includes various media that may store processing code, such as a USB flash drive, a removable hard disk, a ROM, a RAM, a magnetic disk, and an optical disc.

For example, an embodiment of this application may further provide a computer-readable storage medium, storing computer program instructions thereon. When the computer program instructions are executed by an electronic device, the electronic device is enabled to implement the card display method in the foregoing method embodiments.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A card display method, applied to an electronic device, wherein the method comprises:
determining, by the electronic device in response to a service of a first application in the electronic device being changed, a first view of a first card of the first application;
creating, by the electronic device according to the first view, a first embedded window layer corresponding to a second application; and
displaying, by the electronic device, a first interface in response to a first operation of switching to the second application, wherein the first interface comprises an embedded window of the second application, and the first embedded window layer is displayed in the embedded window of the second application, to display the first card comprising the first view in the first interface.

2. The method according to claim 1, wherein the method further comprises:
determining, by the electronic device in response to the service of the first application in the electronic device being changed, a second view of the first card of the first application, wherein the second view is different from the first view; and
creating, by the electronic device according to the second view, a second embedded window layer corresponding to a third application; and
after the displaying, by the electronic device, a first interface in response to a first operation of switching to the second application, the method further comprises:
displaying a second interface in response to a second operation of switching to the third application, wherein the second interface comprises an embedded window of the third application, and the second embedded window layer is displayed in the embedded window of the third application, to display the first card comprising the second view in the second interface.

3. The method according to claim 1, wherein the first view comprises a progress bar, and the progress bar is used to indicate a progress status of the service of the first application;
the progress bar comprises a first icon, a second icon, and a third icon, wherein the first icon is used to indicate an execution starting point of the service of the first application, and the second icon is used to indicate an execution end point of the service of the first application; and
the third icon is used to indicate that the progress status of the service of the first application changes, and when the progress status of the service of the first application changes, a location of the third icon between the first icon and the second icon correspondingly changes.

4. The method according to claim 1, wherein a service stage of the first application comprises a first service stage and a second service stage; the first view comprises a segmentation progress bar, wherein the segmentation progress bar is used to indicate progress statuses of the service of the first application at different service stages; and
the segmentation progress bar comprises a fourth icon, a fifth icon, and a sixth icon and a seventh icon that are located between the fourth icon and the fifth icon, wherein the fourth icon is used to indicate an execution starting point of the first service stage of the first application; the fifth icon is used to indicate an execution end point of the second service stage of the first application; the sixth icon is used to indicate an execution end point of the first service stage of the first application and an execution starting point of the second service stage of the first application;
the seventh icon is used to indicate that a service progress of the second application changes, and when the service progress of the second application changes at the first service stage, a location of the seventh icon that is between the fourth icon and the sixth icon correspondingly changes; or when the service progress of the second application changes at the second service stage, a location of the seventh icon that is between the sixth icon and the fifth icon correspondingly changes.

5. The method according to claim 1, wherein the determining, by the electronic device, a first view of a first card of the first application comprises:
obtaining, by the electronic device, identification information of the second application;
determining, by the electronic device, identification information of the first view according to the identification information of the second application; and
determining, by the electronic device, the first view according to the identification information of the first view.

6. The method according to claim 1, wherein before the determining, by the electronic device, a first view of a first card of the first application, the method further comprises:
generating, by the electronic device, a place-holding view according to card size information of the second application;
creating, by the electronic device according to the place-holding view, a place-holding embedded window layer corresponding to the place-holding view; and
mounting, by the electronic device, the place-holding embedded window layer to the embedded window of the second application.

7. The method according to claim 6, wherein the creating, by the electronic device according to the place-holding view, a place-holding embedded window layer corresponding to the place-holding view comprises:
when a third embedded window layer is stored in the electronic device, obtaining status information of the third embedded window layer, wherein the third embedded window layer is an embedded window layer created according to a card view of a second card of the first application, and a progress status of the service of the first application that is indicated by the second card is different from a progress status of the service of the first application that is indicated by the first card; and
updating the card view of the second card in the third embedded window layer to the place-holding view when the status information indicates that the third embedded window layer is valid, to obtain the place-holding embedded window layer.

8. The method according to claim 6, wherein the creating, by the electronic device according to the first view, a first embedded window layer corresponding to a second application comprises:
updating the place-holding view in the place-holding embedded window layer to the first view, to obtain the first embedded window layer corresponding to the second application.

9. The method according to claim 2, wherein display content corresponding to the second view is different from display content corresponding to the first view, and/or a display size corresponding to the second view is different from a display size corresponding to the first view.

10. The method according to claim 2, wherein the second application is a desktop, a notification center, a locked screen, an off screen, a leftmost screen, or a banner notification; and
the third application is the desktop, the notification center, the locked screen, the off screen, the leftmost screen, or the banner notification.

11. The method according to claim 10, wherein a display size corresponding to the second view is different from a display size corresponding to the first view, and the display size comprises a display height and a display width, wherein
the second application is the desktop, the third application is the notification center, and the display height corresponding to the second view is less than the display height corresponding to the first view.

12. The method according to claim 10, wherein a display size corresponding to the second view is different from a display size corresponding to the first view, and the display size comprises a display height and a display width, wherein
the second application is the desktop, the third application is the locked screen, the display width corresponding to the second view is less than the display width corresponding to the first view, and the display height corresponding to the second view is less than the display height corresponding to the first view.

13. The method according to claim 10, wherein a display size corresponding to the second view is different from a display size corresponding to the first view, and the display size comprises a display height and a display width, wherein
the second application is the locked screen, the third application is the off screen, the display width corresponding to the second view is less than the display width corresponding to the first view, and the display height corresponding to the second view is less than the display height corresponding to the first view.

14. An electronic device, wherein the electronic device comprises a processor and a memory configured to store instructions executable by the processor, wherein when the processor is configured to execute the instructions, the electronic device is enabled to implement the method according to any one of claims 1 to 13.

15. A computer-readable storage medium, storing computer program instructions, wherein
when the computer program instructions are executed by an electronic device, the electronic device is enabled to implement the method according to any one of claims 1 to 13.
